(19) Europäisches Patentamt
European Patent Office
Office européen des brevets

(11) Veröffentlichungsnummer: **0 241 419 B1**

(12) **EUROPÄISCHE PATENTSCHRIFT**

(45) Veröffentlichungstag der Patentschrift: **19.05.93**

(51) Int. Cl.$^5$: **C09B 69/00**, C09B 33/02, C09B 3/18, C09B 25/00, C09B 29/20

(21) Anmeldenummer: **87810191.4**

(22) Anmeldetag: **31.03.87**

# (54) Piperidylgruppen enthaltende Pigmente.

(30) Priorität: **10.04.86 DE 3612148**
**30.05.86 DE 3618216**
**10.09.86 DE 3630717**
**20.09.86 DE 3632039**
**13.11.86 DE 3638763**

(43) Veröffentlichungstag der Anmeldung:
**14.10.87 Patentblatt 87/42**

(45) Bekanntmachung des Hinweises auf die Patenterteilung:
**19.05.93 Patentblatt 93/20**

(84) Benannte Vertragsstaaten:
**AT BE CH DE ES FR GB IT LI NL SE**

(56) Entgegenhaltungen:
**GB-A- 1 120 287**

**CHEMICAL ABSTRACTS, Band 101, Nr. 24, Dezember 1984, Seite 69, Zusammenfassung nr. 212676d, Columbus, Ohio, US: & JP-A-59 147 054 (SUMITOMO CHEMICAL CO. LTD) 23-08-1984**

(73) Patentinhaber: **SANDOZ AG**
**Lichtstrasse 35**
**CH-4002 Basel(CH)**
(84) Benannte Vertragsstaaten:
**BE CH ES FR GB IT LI NL SE**

(73) Patentinhaber: **SANDOZ-PATENT-GMBH**
**Humboldtstrasse 3**
**W-7850 Lörrach(DE)**
(84) Benannte Vertragsstaaten:
**DE**

(73) Patentinhaber: **SANDOZ-ERFINDUNGEN Verwaltungsgesellschaft m.b.H.**
**Brunner Strasse 59**
**A-1235 Wien(AT)**
(84) Benannte Vertragsstaaten:
**AT**

(72) Erfinder: **Bitterli, Peter**
**Bodmenstrasse 6**
**CH-4153 Reinach(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

**D.R. WARING et al. The Chemistry and Application of Dyer, Plenum Press, New York, London, pages 326–330**

**Kirk–Othmer Encyclopedia of Chemical Technology Vol. 15, 2nd Ed. pages 555–562**

Erfinder: **Geisel, Manfred**
**Leuselhardtweg 30**
**W–7850 Lörrach(DE)**
Erfinder: **Goldmann, Jürgen**
**Grosse Allee 88**
**CH–4142 Münchenstein(CH)**
Erfinder: **Kaul, Bansi Lal**
**Bruckackerstrasse 48**
**CH–4105 Biel–Benken(CH)**

## Beschreibung

Es wurde gefunden, dass man mit Pigmenten, die im Molekül eine oder mehrere 2,2,6,6 – Tetraalkylpiperidylgruppen enthalten, nicht nur Kunststoff – und Lack – Ausfärbungen höchster Qualität erhält, sondern auch die Kunststoffe und Lacke gegen die zerstörende Wirkung von Licht, insbesondere UV – Strahlung, und atmosphärische Einflüsse schützen kann.

Unter Pigmenten sind hier solche feste, organische Verbindungen zu verstehen, die praktisch in allen Lösungsmitteln unlöslich sind (mit Ausnahme höchstens konzentrierter, starker Mineralsäuren, insbesondere Schwefelsäure) und auch in dem Medium oder Substrat, in dem sie verteilt sind, physikalisch und chemisch unverändert, unangegriffen verbleiben.

Während bei wasserlöslichen (Textil – )Farbstoffen und bei Dispersionsfarbstoffen die Einführung von 2,2,6,6 – Tetraalkylpiperidylgruppen praktisch keine Vorteile bringt, ist die Verbesserung von Pigmenten durch die Einführung von 2,2,6,6 – Tetraalkylpiperidingruppen frappant.

Die neuen Pigmente entsprechen im allgemeinen der Formel I oder II

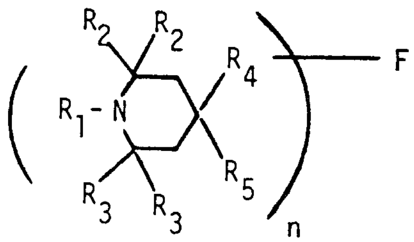 (I), 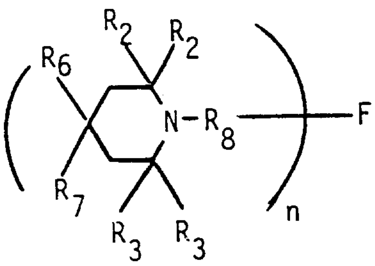 (II),

| | |
|---|---|
| worin $R_1$ | Wasserstoff, $C_{1-8}$ – Alkyl, $C_{3-10}$ – Alkenyl, Phenyl, Phenyl – $C_{1-4}$ – alkyl oder Acyl, |
| die beiden $R_2$ und die beiden $R_3$ | unabhängig voneinander $C_{1-5}$ – Alkyl oder die beiden $R_2$ und/oder die beiden $R_3$ zusammen eine Gruppe der Formel $-(CH_2)_5-$, |
| $R_4$ | die direkte Bindung oder ein Brückenglied, das gegebenenfalls zusammen mit $R_5$ einen iso – oder heterocyclischen Ring bildet, |
| $R_5$ | Wasserstoff, $C_{1-2}$ – Alkyl oder zusammen mit $R_4$ die zur Bildung eines iso – oder heterocyclischen Ringsystems nötigen Atomgruppen, |
| $R_6$ | Wasserstoff oder gegebenenfalls weiter substituiertes Hydroxy oder Amino oder mit $R_7$ ein iso – oder heterocyclisches Ringsystem, |
| $R_7$ | Wasserstoff, $C_{1-2}$ – Alkyl oder zusammen mit $R_6$ die zur Bildung eines iso – oder heterocyclischen Ringsystems nötigen Atomgruppen, |
| $R_8$ | die direkte Bindung oder ein Brückenglied, |
| F | den Rest eines Pigmentfarbstoffs und |
| n | 1, 2, 3 oder 4 bedeuten. |

Unter Brückengliedern $R_8$ sind vor allem mit dem Piperidyl – Stickstoffatom Amidbindungen formende Gruppen, z.B. solche der Formel $-CO-$, $-CH_2-CO-$, $-O-CH_2-CO-$ oder $-SO_2-$ zu verstehen.

In den Formeln I und II bedeutet F vorzugsweise den Rest eines Mono – oder Disazofarbstoffs, wobei der Piperidylrest, bzw. die Piperidylreste als Substituenten an die Diazo – und/oder an die Kupplungskomponenten gebunden sein können.

Beispiele solcher Pigmente sind durch die folgenden Formeln charakterisiert:

Mono – oder Disazopigmente

$B-D_1-N=N-K'_1$ (a), $D'_1-N=N-K_1-B$ (b), $B-D_1-N=N-K_2-N=N-D_1-B$ (c), $B-K_1-N=N-D_2-N=N-K_1-B$ (d),

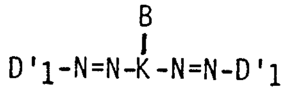 (e),

worin B eine Gruppe der Formel III a oder III b

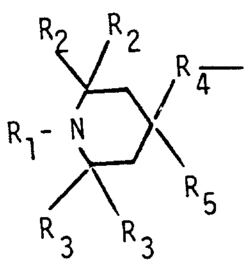 (III a), 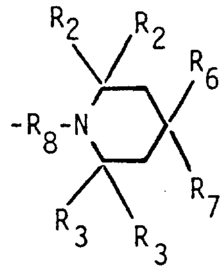 (III b),

- $D_1$ den zweiwertigen Rest einer bei Pigmentfarbstoffen üblichen Diazokomponente (von einem Monoamin abgeleitet),
- $D'_1$ den Rest einer bei Pigmentfarbstoffen üblichen Diazokomponente,
- $D_2$ den zweiwertigen Rest einer bei Pigmentfarbstoffen üblichen Disazokomponente (von einem Diamin abgeleitet),
- K den dreiwertigen Rest einer von wasserlöslich machenden Gruppen freien, zweimal kuppelbaren Kupplungskomponente,
- $K_1$ den zweiwertigen Rest einer bei Pigmentfarbstoffen üblichen (einmal kuppelbaren) Kupplungskomponente
- $K'_1$ den Rest einer bei Pigmentfarbstoffen üblichen Kupplungskomponente und
- $K_2$ den Rest einer bei Pigmentfarbstoffen üblichen, zweimal kuppelnden Verbindung bedeuten.

$D_1$ ist zum Beispiel ein bis zu zwei Substituenten aus der Reihe Chlor, Brom, $C_{1-2}$-Alkyl, $C_{1-2}$Alkoxy, Carboxy oder $C_{1-4}$-Alkoxycarbonyl tragender 1,3- oder 1,4-Phenylenrest oder ein 1,4-1,5- oder 1,8-Anthrachinonylenrest, der bis zu zwei Substituenten aus der Gruppe Chlor, Brom, Hydroxy, $C_{1-3}$-Alkoxy oder Acylamino tragen kann;

$D'_1$ ist zum Beispiel ein gegebenenfalls bis zu drei Substituenten tragender Phenylrest, wobei die Substituenten aus der Gruppe (bis zu zwei) Chlor, Brom, $C_{1-2}$-Alkoxy, $C_{1-4}$-Alkoxycarbonyl und (maximal ein) Acylamino sind;

$D_2$ ist zum Beispiel ein bis zu vier Substituenten aus der Gruppe Chlor, Brom, $C_{1-2}$-Alkyl und $C_{1-2}$-Alkoxy tragender 4,4'-Diphenylenrest oder ein Rest der Formel

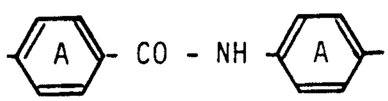 ;

$>$K-B ist zum Beispiel ein Rest der Formel

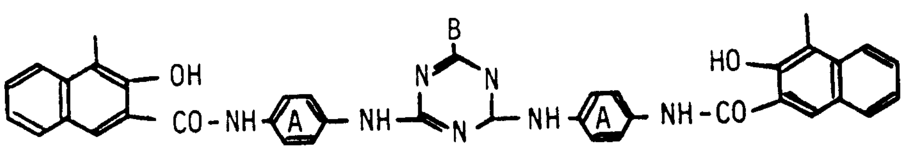 ;

$K_2$ ist zum Beispiel ein Rest der Formel

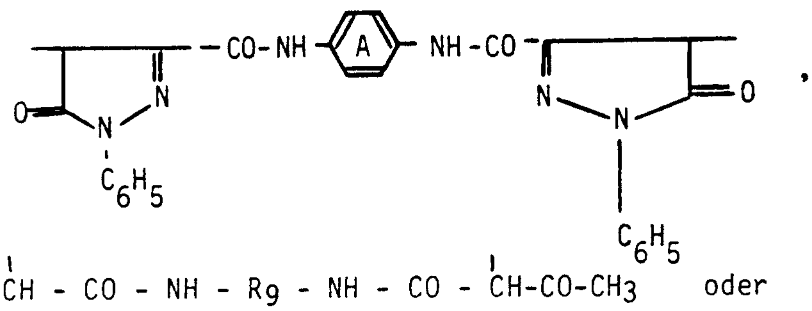

$H_3C-CO-CH-CO-NH-R_9-NH-CO-CH-CO-CH_3$ oder

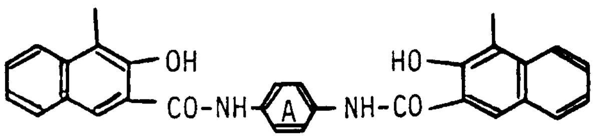

worin $R'_9$ gegebenenfalls bis zu zwei Substituenten aus der Gruppe Chlor, Brom, Methyl oder $C_{1-2}$-Alkoxy tragendes 1,4-Phenylen oder 4,4'-Diphenylen, 1,4- oder 1,5-Naphthylen oder eine Gruppe der Formel

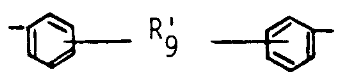

und $R_9'$ eine Gruppe der Formel $-CH_2-$, $-NH-CO-$, $-NH-CO-NH-$, $-NH-CO-CO-NH-$ oder

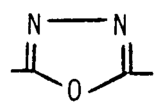

bedeuten, die Gruppe $K_1-B$ ist zum Beispiel ein Rest der Formel

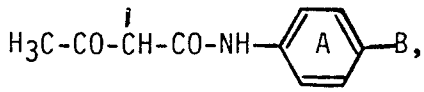

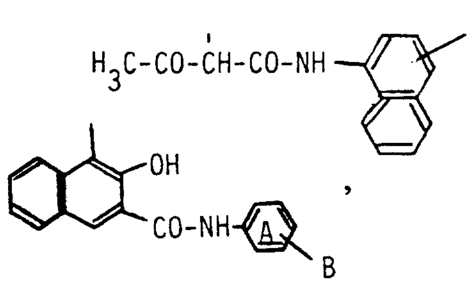

,

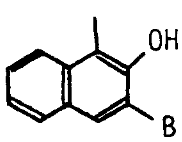

,

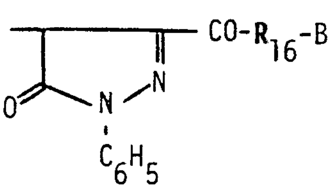

oder

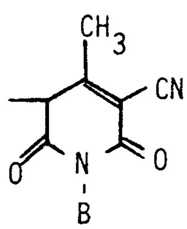

.

Gruppen $K'_1$ entsprechen z.B. der Formel

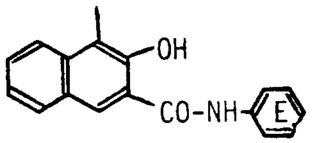 , 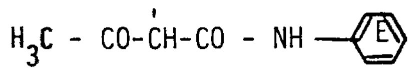

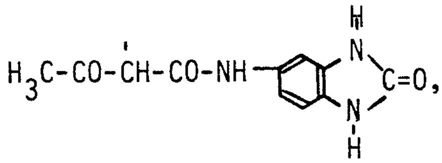 , 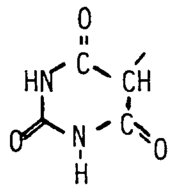 , 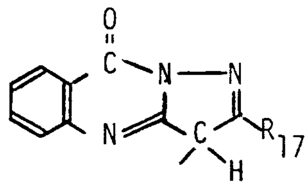 ,

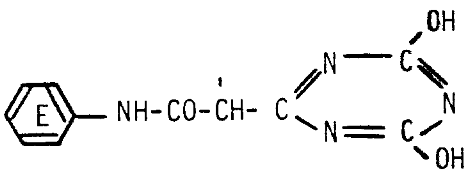 oder 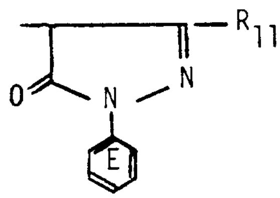 ,

worin $R_{11}$ Methyl oder eine gegebenenfalls mit einem $C_{1-4}$-Alkohol veresterte Carbonsäuregruppe,

$R_{16}$ eine Sauerstoff- oder -NH-Brücke und

$R_{17}$ Hydroxyl, Methyl oder Phenyl bedeuten, die mit A bezeichneten Kerne gegebenenfalls bis zu zwei Substituenten und die mit E bezeichneten Kerne gegebenenfalls bis zu drei Substituenten aus der Gruppe Chlor, Brom, $C_{1-2}$-Alkyl und $C_{1-2}$-Alkoxy tragen können.

Vorzugsweise bedeuten in den Gruppen der Formeln I, II, III a und III b

$R_1$ Wasserstoff oder Acyl, wobei unter Acyl insbesondere Formyl, $C_{1-4}$-Alkyl-carbonyl oder eine Gruppe der Formel $-CO-CO-O-C_{1-4}$-Alkyl zu verstehen ist,

alle $R_2$ und $R_3$ Methyl,

$R_4$ die direkte Bindung oder eine Gruppe der Formel $-NH-CO-$, $-NH-SO_2-$, $-NH-CO-O-$, $-NHCO-CH_2-O-$, $-NH-CO-CO-$, $-NH-CO-CO-NH-$, $-NH-CO-CO-O-$, $-O-CO-$, $-O-SO_2-$, $-O-CO-CO-$, $-O-CO-CO-O-$, $-O-CO-NH-$ oder $-O-CO-CO-NH-$, vorzugsweise $-NH-CO-$ oder $-NH-CO-CH_2-O-$, oder zusammen mit $R_5$ und dem an sie gebundenen Kohlenstoffatom eine Gruppe der Formel f oder g

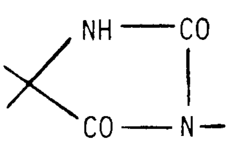 (f) 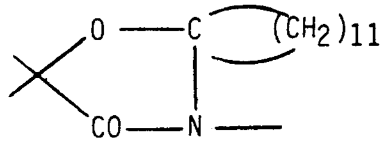 (g),

$R_5$ Wasserstoff oder zusammen mit R4 und dem an sie gebundenen Kohlenstoffatom eine Gruppe der Formel f oder g, vorzugsweise ein Wasserstoffatom,

$R_6$ eine Amino-, Mono- oder Di-$C_{1-4}$-alkylaminogruppe, eine $C_{1-2}$-Alkylcarbonylamino- oder Benzoylaminogruppe, vorzugsweise eine Amino- oder Benzoylaminogruppe oder zusammen mit $R_7$ und dem an sie gebundenen Kohlenstoffatom eine Gruppe der Formel h oder i

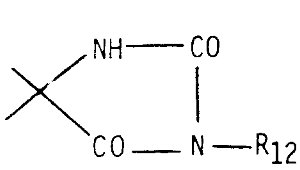 (h) 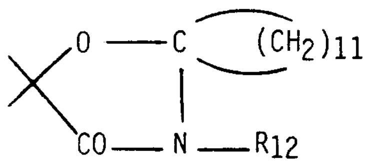 (i)

und $R_7$ Wasserstoff oder zusammen mit $R_6$ und dem an sie gebundenen Kohlenstoffatom eine Gruppe der Formeln h oder i, vorzugsweise Wasserstoff,

$R_{12}$ Wasserstoff, $C_{1-4}$-Alkyl oder $C_{1-4}$-Alkoxy-carbonyl-$C_{1-3}$-alkyl.

Weitere erfindungsgemässe (keine Azogruppen enthaltenden) Pigmente entsprechen z.B. den Formeln IV bis X

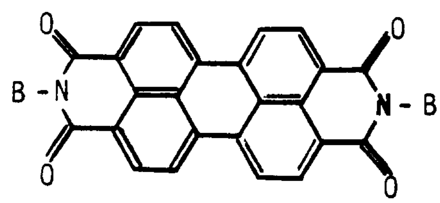 (IV),

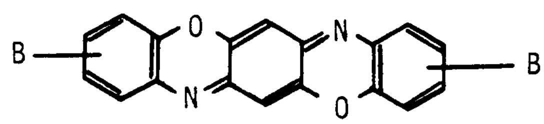 (V),

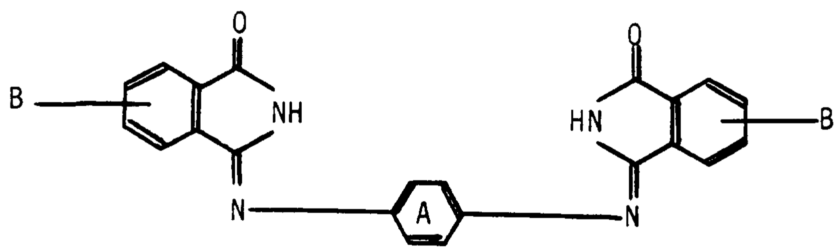 (VI),

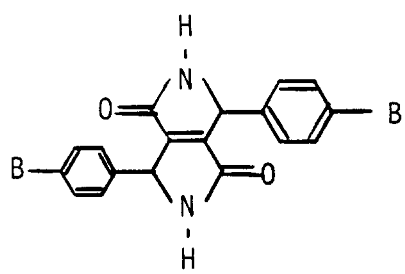 (VII),

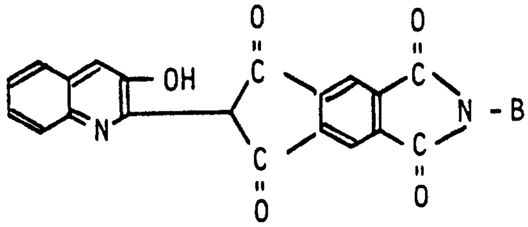

(VIII),

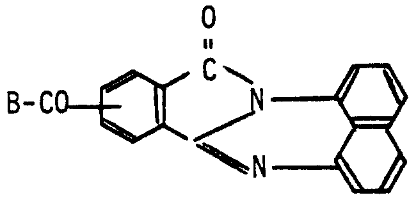

(IX) oder

$Cu\ PC\ (-B)_p$ (X),

worin B eine Gruppe der Formel III a oder III b (oben),
CuPC ein gegebenenfalls halogenierter Kupfer–Phthalocyaninrest
und p eine Zahl von 1 bis 4 bedeuten und der Ring A bis zu zwei Substituenten (wie oben angegeben) tragen kann.

Die Herstellung der Piperidylgruppen (der Formel III a und/oder III b) enthaltenden Pigmente erfolgt auf eine dem Fachmann geläufige Weise, meist durch Amidbildung (Bildung einer Amid–Brücke), Esterbildung oder durch Bildung eines Imins, Ketons oder Aethers. Dabei wird z.B. bei Azopigmenten die Vereinigung der Gruppe der Formel III a und/oder III b mit der Diazo– oder Kupplungskomponente vorzugsweise vor dem Diazotieren und Kuppein vorgenommen.

Geeignete Amine für Diazokomponenten, die eine Gruppe der Formel B (= Formel III a oder III b) enthalten, entsprechen z.B. den Formeln p und r

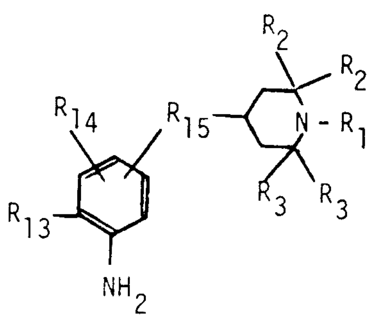

(p)

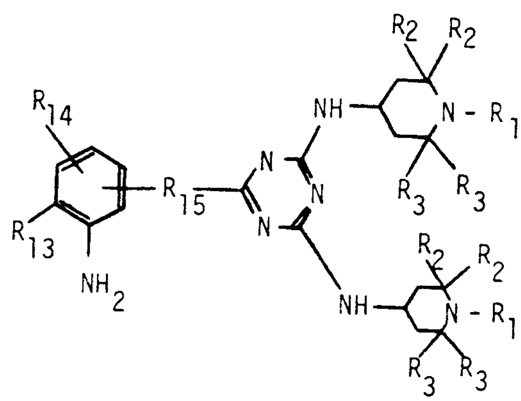

(r),

worin $R_1$, $R_2$ und $R_3$ die obengenannten Bedeutungen besitzen,
$R_{13}$ Wasserstoff, Chlor, Brom, Methyl, $C_{1-2}$–Alkoxy oder $C_{1-3}$–Alkoxycarbonyl,
$R_{14}$ Wasserstoff, Chlor, Brom oder Methyl, vorzugsweise Wasserstoff oder Chlor und
$R_{15}$ eine Gruppe der Formel –CO–NH–, CO–O– oder –$SO_2$–NH– (die Aminogruppe, bzw. das Sauerstoffatom an den Piperidylrest gebunden)
bedeuten.

Diese Verbindungen p und r können auch z.B. mit 2–Hydroxynaphthalin–3–carbonsäure(–chlorid) oder mit Diketen zu Kupplungskomponenten des Typus

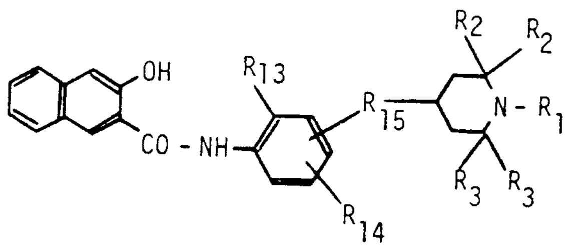 bzw.

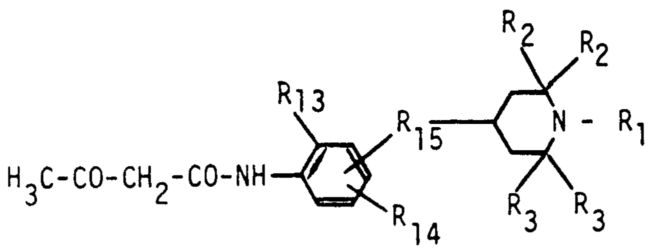

umgesetzt werden.

Ein sehr interessantes, für die Herstellung von Disazofarbstoffen brauchbares Diamin entspricht der Formel

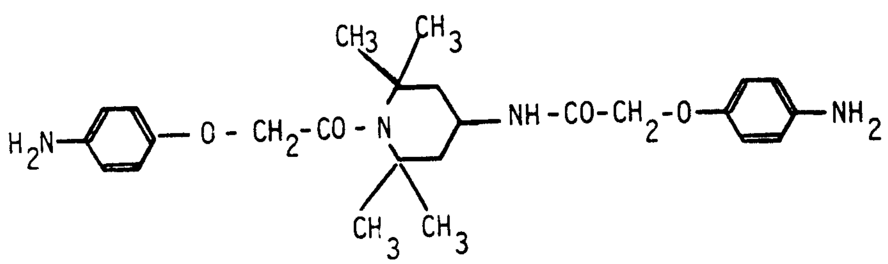 ,

es wird hergestellt durch Umsetzen von 2,2,6,6-Tetramethyl-4-amino-piperidin mit Chloressigsäurechlorid, das Umsetzungsprodukt wird mit para-Nitrophenol kondensiert und schliesslich (z.B. mit $Fe/C_2H_5OH$) zum Diamin reduziert.

Wenn auch aus preislichen Gründen Verbindungen (der Formeln I und II) in denen $R_1$ Wasserstoff ist, vielfach bevorzugt sind, zeigen die Verbindungen, in denen $R_1$ gegebenenfalls substituiertes Alkyl oder Acyl ist, oft bessere Stabilisator-Wirkung. Solche Verbindungen erhält man zum Beispiel aus 2,2,6,6-Tetramethyl-4-(3'-nitro-4'-chlorbenzoylamino)-piperidin, das mit KNCO/HCl umgesetzt, die 1-Carbonamid-Verbindung, mit Acetylchlorid die 1-Acetyl-Verbindung, mit Chlorameisensäure-methylester diel-Methoxy-carbonyl-Verbindung, mit Oxalsäuredichlorid die Struktur der Formel

>N - CO - CO -N<

und durch Umsetzung mit $ClCH_2CH_2OH$ 1-$\beta$-Hydroxyäthyl-2,2,6,6-tetramethyl-4-(3'-nitro-4'-chlorbenzoylamino))-piperidin. Nach Reduktion der 3'-Nitrogruppe erhält man leicht das entsprechende, diazotierbare Amin, dieses kann aber auch (wie schon oben beschrieben z.B. mit 2-Hydroxynaphthalin-3-carbonsäure oder mit Diketen) zu Kupplungskomponenten umgesetzt werden.

Bevorzugte neue Pigmente entsprechen den Formeln XII und XIII

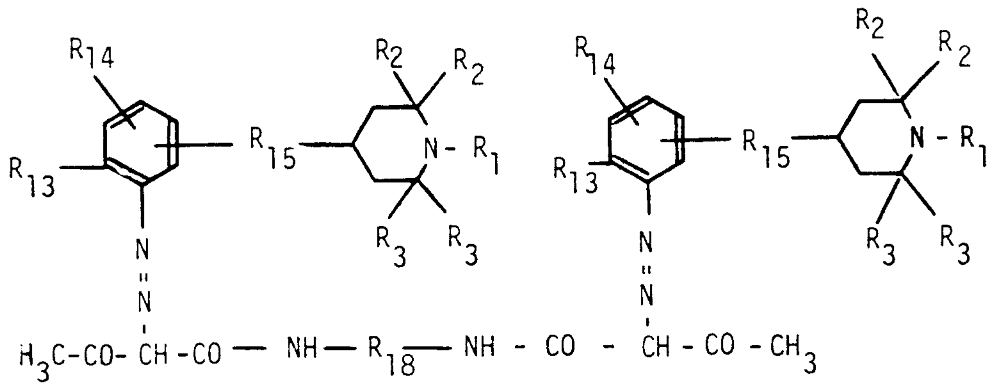

(XII),

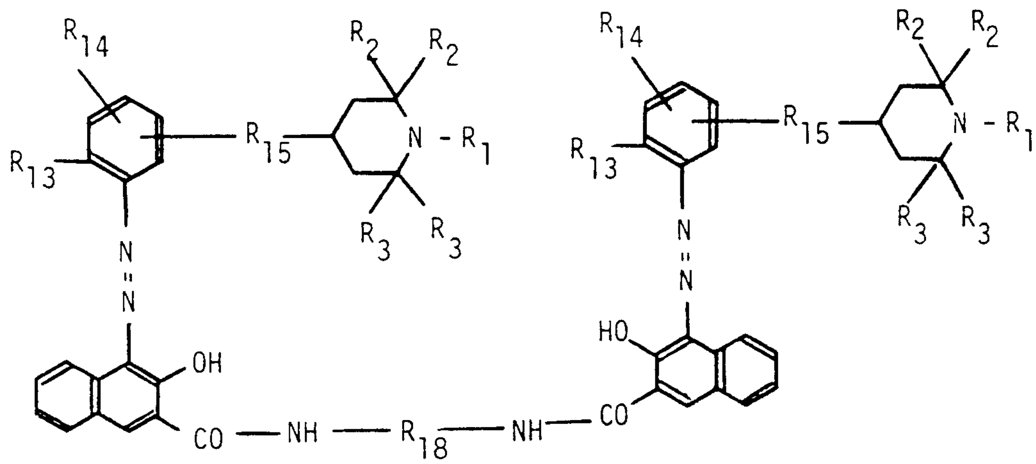

(XIII),

worin (in beiden Formeln)

| | |
|---|---|
| alle $R_1$ | Wasserstoff oder Acyl, |
| alle $R_2$ und alle $R_3$ | unabhängig voneinander $C_{1-5}$ – Alkyl oder paarweise die $R_2$ und $R_3$ zusammen eine Gruppe der Formel $-(CH_2)_5-$, |
| alle $R_{13}$ | unabhängig vonenander Wasserstoff, Chlor, Brom, Methyl, $C_{1-2}$ – Alkoxy oder $C_{1-4}$ – Alkoxycarbonyl, |
| alle $R_{14}$ | unabhängig voneinander Wasserstoff, Chlor, Brom oder Methyl, |
| $R_{15}$ | eine Gruppe der Formel $-CO-NH-$, $-CO-O-$ oder $-SO_2-NH-$ (die Aminogruppe, bzw. das Sauerstoffatom an den Piperidylrest gebunden) |
| und $R_{18}$ | ein benzolisches, naphthalinisches oder heterocyclisch – aromatisches Brückenglied bedeuten. |

Vorzugsweise bedeuten in den Formeln XII und XIII (jeweils unabhängig von den übrigen Substituenten)

| | |
|---|---|
| alle $R_1$ | Wasserstoff, |
| alle $R_2$ und $R_3$ | Methyl, |
| alle $R_{13}$ | Chlor, Methyl, Methoxy oder $C_{1-2}$ – Alkoxycarbonyl, |
| alle $R_{14}$ | Wasserstoff, Chlor oder $C_{1-2}$ – Alkoxycarbonyl, insbesondere Wasserstoff, |
| alle $R_{15}$ | eine Gruppe der Formel $-CO-NH-$ oder $-SO_2-NH-$, insbesondere $-CO-NH-$ und |
| $R_{18}$ | gegebenenfalls bis zu zwei Substituenten aus der Gruppe Chlor, Brom, Methyl oder Methoxy tragendes 1,4 – Phenylen oder 4,4' – Diphenylen, oder unsubstituiertes 1,4 – oder 1,5 – Naphthylen. |

Die Pigmente der Formeln XII und XIII können 1. durch Kuppeln zweier Mol eines diazotierten Amins oder eines Gemisches solcher Amine, der Formel p'

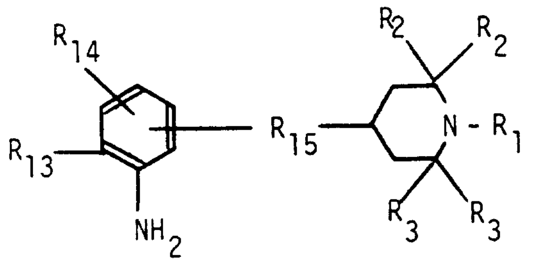 (p)

mit einem Mol einer Verbindung der Formel XIV

$$H_3C-CO-CH_2-CO-NH-R_{18}-NH-CO-CH_2-CO-CH_3 \quad (XIV)$$

bzw. (für Pigmente der Formel XIII) mit einem Mol einer Verbindung der Formel XV

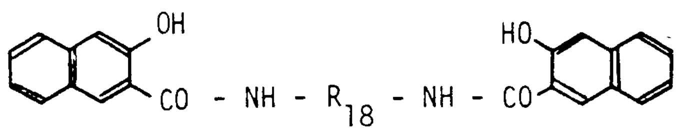 (XV),

oder 2. durch Kondensation eines Mol einer Disazodicarbon- oder Disazodisulfonsäureverbindung der Formel XVI oder XVII

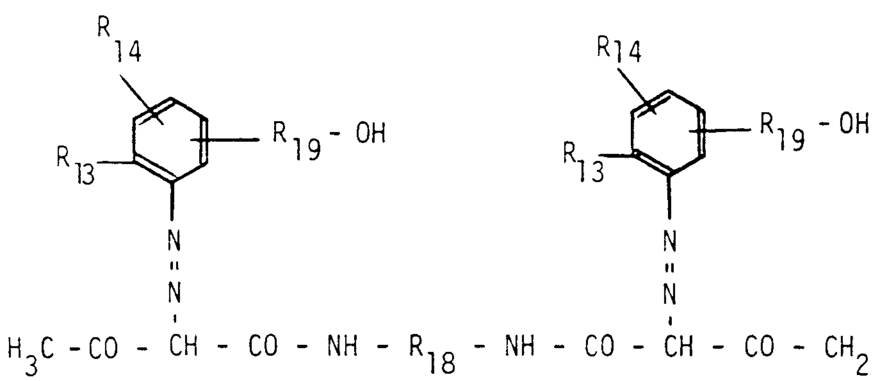 (XVI),

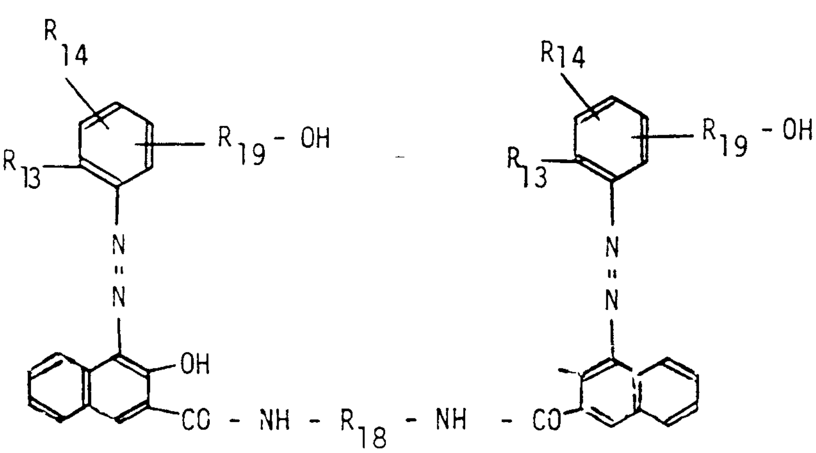 (XVII),

worin in beiden Formeln $R_{19}$ eine Carbonyl– oder Sulfonylgruppe bedeutet, bzw. eines funktionellen Säurederivats, vorzugsweise dem Säurechlorid dieser Verbindungen, mit 2 Mol einer 4–Amino– oder 4–Hydroxypiperidinverbindung der Formel III'a

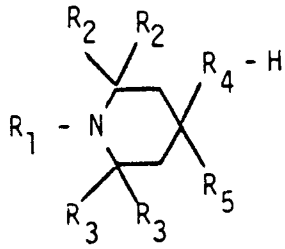

(III'a),

worin $R_4$ eine –NH– oder –O–Brücke und

$R_5$ Wasserstoff bedeuten,

hergestellt werden.

Die Verbindungen der Formel XIII erhält man auch durch Kondensation zweier Mol einer Azocarbonsäureverbindung der Formel XVIII

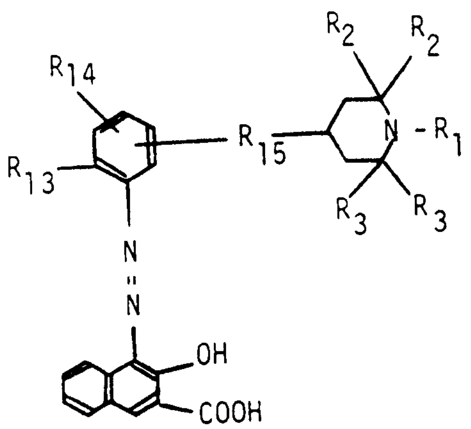

(XVIII)

oder eines funktionellen Säurederivats, vorzugsweise dem Säurechlorid dieser Verbindung, mit einem Mol eines Diamins der Formel XIX

$H_2N - R_{18} - NH_2$ (XIX).

Diazotieren und Kuppeln finden anlog zu den bekannten, ähnlichen Synthesen statt. Die Kondensationsreaktionen finden vorzugsweise in einem inerten Lösungsmittel, z.B. einem, Alkylbenzol (Toluol, Xylol etc.) einem Halogenbenzol (vorzugsweise ortho–Dichlorbenzol) oder einem anderen höhersiedenden Kohlenwasserstoff, bei Temperaturen zwischen 80 °C und 150 °C statt.

Die Verbindungen der Formeln XIV, XV, XVI, XVII, XIX und III'a sind bekannt, die Verbindungen p' und XVIII lassen sich analog zu bekannten Methoden (Kondensation) aus bekannten Zwischenprodukten leicht herstellen (siehe auch Beispiel 1).

Weitere bevorzugte neue Pigmente entsprechen der Formel XX

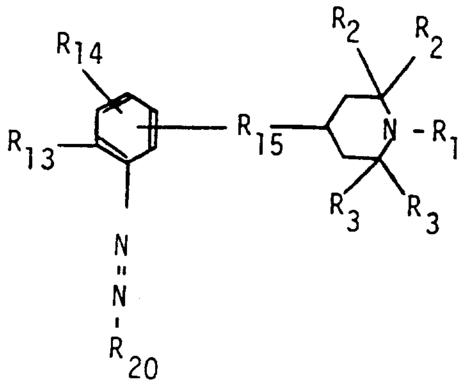

(XX),

worin $R_1$, $R_2$, $R_3$, $R_{13}$, $R_{14}$ und $R_{15}$ die oben angegebenen Bedeutungen besitzen und

$R_{20}$ eine Gruppe der Formel

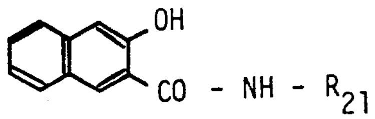

,

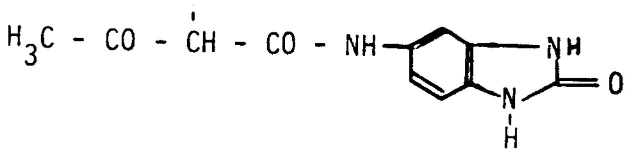

oder

oder 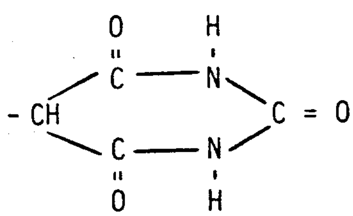

,

und $R_{21}$ Benzimidazolonyl-5 oder gegebenenfalls bis zu drei Substituenten aus der Gruppe Chlor, Brom, Methyl, Methoxy oder Aethoxy oder eine Benzoylaminogruppe tragendes Phenyl bedeuten.

Die Herstellung dieser Verbindungen erfolgt (in Analogie zu den oben beschriebenen Methoden) entweder durch Kuppeln eines Mol eines diazotierten Amins der Formel p mit einem Mol einer Verbindung der Formel XXI

$R_{20}$ - H (XXI)

oder durch Kondensation eines Mol einer Monoazocarbon- oder -sulfonsäure (beziehungsweise eines funktionellen Derivats einer solchen Säure, vorzugsweise des Säurechlorids) der Formel XXII

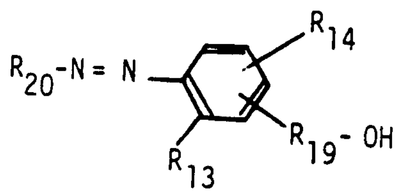

(XXII)

mit einem Mol einer Verbindung der Formel III'a (oben).

Weitere bevorzugte Pigmente entsprechen der Formel XXIII

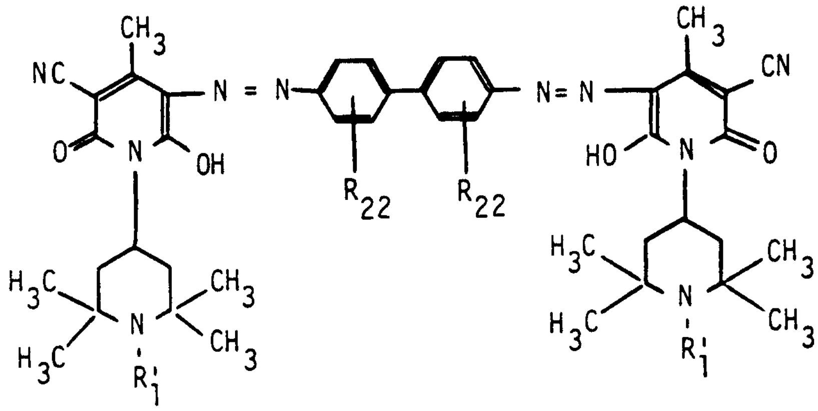

(XXIII),

worin die beiden $R_1$' Wasserstoff oder $C_{1-2}$ – Alkylcarbonyl, insbesondere Wasserstoff und

die beiden $R_{22}$ Chlor, Brom, Methyl, Methoxy oder Aethoxy, insbesondere Chlor bedeuten.

Die Herstellung der Verbindungen der Formel XXIII erfolgt durch Kuppeln eines Mol eines tetrazotierten Diamins der Formel XXIV

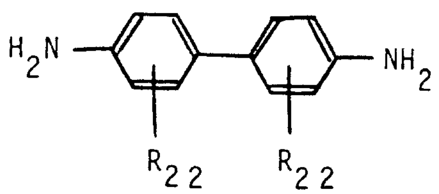

(XXIV)

mit zwei Mol einer Verbindung der Formel XXV

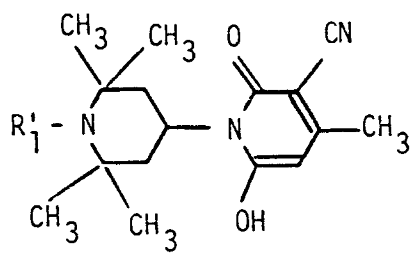

(XXV),

was in Analogie zu bekannten, ähnlichen Verfahren erfolgt.

Die Verbindung der Formel XXV kann auf eine dem Fachmann geläufige Weise leicht hergestellt werden, z.B. durch Kondensation von 2,2,6,6 – Tetramethyl – 4 – aminopiperidin mit Cyanessigsäuremethy – lester und Acetessigsäureäthylester und gegebenenfalls anschliessende Acylierung (gemäss der Bedeutung von $R'_1$) oder Acetoacetylierung von 2,2,6,6 – Tetramethyl – 4 – aminopiperidin mit Diketen und Cyclisierung zum Pyridon mit Cyanessigsäuremethylester.

Weitere wertvolle Pigmente entsprechen der Formel IV,

worin B jeweils eine Gruppe der Formel

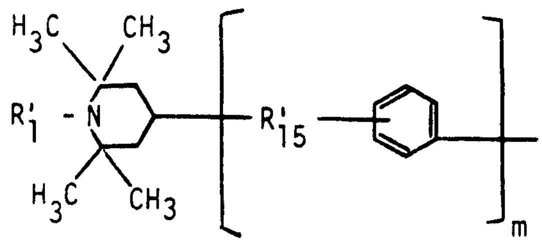

(XXVI), ,

R'1 Wasserstoff, Acetyl oder Propionyl,

R'15 eine Gruppe der Formel –NH–, –NH–CO– oder –NH–$SO_2$– (die Aminogruppe an den Piperidylrest gebunden)

und m 0 oder 1 bedeuten.

Die Herstellung dieser Verbindungen erfolgt durch Kondensation eines Mol 3,4,9,10-Perylentetracarbonsäure, oder eines funktionellen Derivats dieser Verbindung, vorzugsweise dem Dianhydrid, mit 2 Mol einer Verbindung der Formel XXVII

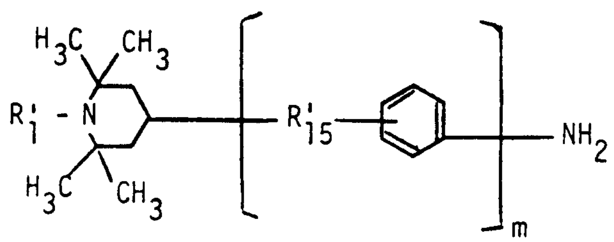

(XXVII)

Diese Kondensation wird in Analogie zu den bekannten Herstellungsmethoden von Perylentetracarbonsäurediimiden durchgeführt (siehe auch Beispiel 4).

Auch die Herstellung der Verbindungen der Formel XXVII erfolgt auf eine dem Fachmann geläufige Weise.

Weitere interessante Pigmente entsprechen der Formel XXVIII

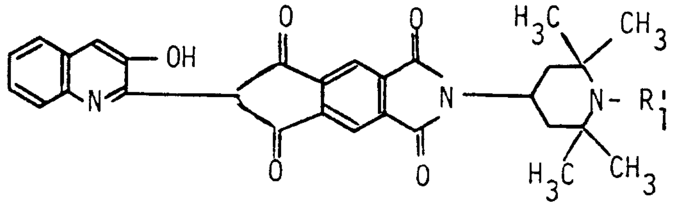

(XXVIII),

worin R'1 Wasserstoff, Acetyl oder Propionyl, vorzugsweise Wasserstoff ist.

Die Herstellung dieser Verbindung erfolgt durch Kondensation eines Mol einer Verbindung der Formel XXIX

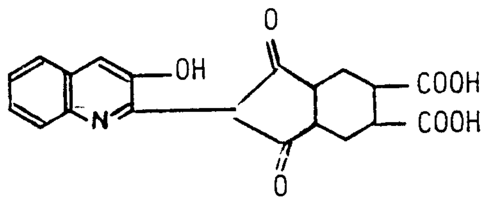

(XXIX)

oder eines funktionellen Säurederivats, vorzugsweise des Anhydrids dieser Dicarbonsäure, mit einem Mol einer Verbindung der Formel XXX

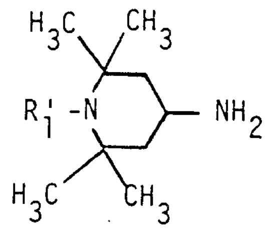

(XXX)
.

Die Chinophthalonverbindung der Formel XXIX und die Verbindungen der Formel XXX sind bekannt, die Kondensationsreaktion erfolgt analog zu bekannten Methoden zur Herstellung ähnlicher Imide (siehe auch Beispiel 5).

Ein weiteres interessantes Pigment entspricht der Formel XXXI

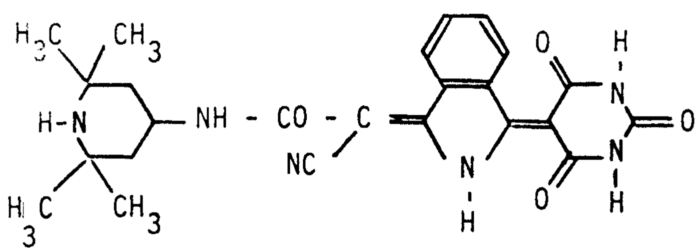

(XXXI),

es wird hergestellt durch Kondensation eines Mol Phthalimid mit 1 Mol 2,2,6,6 – Tetramethyl – 4 – cyanacetylaminopiperidin und 1 Mol Barbitursäure. Die Bedingungen dieser Reaktion sind im Beispiel 3 beschrieben.

Die Anwendung der neuen Pigmente erfolgt auf übliche Weise. Die Lichtechtheit der so gefärbten Kunststoffe ist ausgezeichnet. Speziell ist die Reissfestigkeit von Polypropylenfasern, die mit den erfindungsgemässen Pigmenten gefärbt wurden, nach der Belichtung besser als bei einer Färbung mit herkömmlichen Pigmenten.

Oft erhält man bessere applikatorische Eigenschaften der Pigmente, wenn man nach der Herstellung der Pigmente den trockenen oder feuchten Filterkuchen in einer sodaalkalischen, wässrigen Lösung bei 100 ° C rührt, danach das Pigment abfiltriert, neutral wäscht und trocknet.

Von Vorteil kann es auch sein, die Pigmente vor ihrer Applikation in einem hochsiedenden Lösungsmittel (in dem die Pigmente selbst nicht gelöst werden) zur Reinigung auszukochen. Als bevorzugtes Lösungsmittel für diesen Zweck kann z.B. Dimethylformamid verwendet werden.

In der JP – A – 59147054 sind Dispersionsfarbstoffe, die im Molekül eine 2,2,6,6 – Tetraalkylpiperidylgruppe enthalten, beschrieben. Gemäss den Angaben in diesem Dokument werden mit diesen Dispersionsfarbstoffen aus wässrigem Milieu, in dem sie fein verteilt sind, oder aus einer Lösung in einem organischen Lösungsmittel, hydrophobe Fasern aus synthetischen oder halbsynthetischen Materialien bei Temperaturen über 105 ° C gefärbt.

Die anmeldungsgemässen Verbindungen sind in Wasser und anderen üblichen Lösungsmitteln unlösliche Pigmente, die wie andere Pigmente appliziert werden und in den mit ihnen gefärbten Kunststoffen und Lacken nicht nur selbst höchsten Echtheits-Anforderungen entsprechen, sondern auch diese Kunststoffe gegen die zerstörende Wirkung von Licht und anderen atmosphärischen Einflüssen schützen.

In den folgenden Beispielen bedeuten die Teile Gewichtsteile und die Prozente Gewichtsprozente. Die Temperaturen sind in Celsiusgraden angegeben. Unter Volumenteilen ist das Volumen gleicher Gewichtsteile Wasser zu verstehen.

BEISPIEL 1

61,9 Teile 3-Amino-4-chlor-benzoesäure-2',2',6',6'-tetramethyl-piperidinylamid werden 1 Stunde in 100 Teilen Wasser und 105 Teilen Eisessig bei Raumtemperatur gerührt, mit 75 Teilen konz. Salzsäure versetzt, eine weitere Stunde gerührt, dann durch Anlegen eines Eiswasserbades und Einstreuen von 100 Teilen Eis auf 0 bis 5° gekühlt, im Verlaufe von 15 bis 20 Minuten unter Rühren mit 51 Volumenteilen 4-N-wässriger Natriumnitritlösung versetzt und 1 Stunde unter Kühlung auf Temperaturen unter 5° weiter gerührt. Die erhaltene Diazoniumchloridlösung wird schliesslich klarfiltriert.

25,6 Teile Barbitursäure werden in 100 Teilen Wasser und 20 Volumenteilen 30-prozentiger Natriumhydroxidlösung gelöst, durch langsames Einbringen in eine Mischung von 100 Teilen Wasser und 21 Teilen Eisessig wieder ausgefällt, die Suspension auf 0 bis 5° gekühlt und im Verlaufe von ca. 25 Minuten unter Rühren mit der ebenfalls gekühlten Diazoniumsalzlösung versetzt. Die entstandene gelbe Suspension wird 3 Stunden unter weiterer Kühlung, 1 Stunde bei Raumtemperatur und 1 Stunde bei 80 bis 85° gerührt, filtriert, der Niederschlag mit Wasser salz- und säurefrei gewaschen, bei 80° getrocknet und gemahlen. Man erhält so das Pigment der Formel

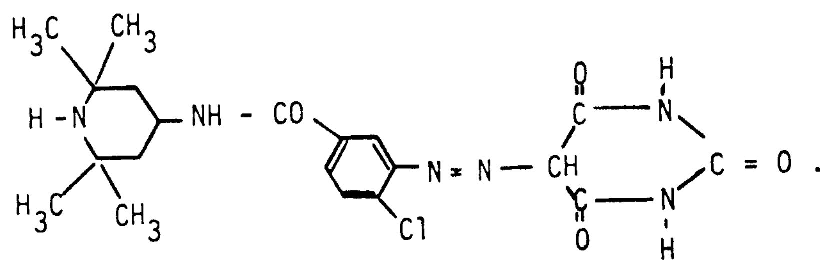

das Polypropylen in gelben Tönen mit sehr guten Echtheiten färbt, wobei der gefärbte Kunststoff auch zu Fasern mit sehr guter Reissfestigkeit verarbeitet werden kann.

BEISPIEL 2

25,3 Teile 4,4'-Diamino-3,3'-dichlor-1,1'-diphenyl werden 1 Stunde bei Raumtemperatur in 60 Teilen Wasser und 60 Teilen konzentrierter Salzsäure gerührt, dann durch Anlegen eines Eisbades und Einstreuen von 100 Teilen Eis auf 0 bis +5° gekühlt, im Verlaufe von 15 bis 20 Minuten unter Rühren mit 51 Volumenteilen 4-normaler, wässriger Natriumnitritlösung versetzt und 1 Stunde bei 0 bis +5° weitergerührt. Die erhaltene Diazolösung wird schliesslich klarfiltriert.

57,8 Teile 1-(2',2',6',6'-Tetramethylpiperidinyl)-2-hydroxy-4-methyl-5-cyanopyridon(6) werden in 200 Volumenteilen Wasser und 25 Volumenteilen 30-prozentiger wässriger Natriumhydroxidlösung gelöst und durch langsames Einbringen in eine Mischung aus 100 Teilen Eis, 100 Volumenteilen Wasser und 25 Volumenteilen Eisessig wieder ausgefällt. Die Suspension wird bei 0 bis +5° unter Rühren im Verlaufe von 20 bis 30 Minuten mit der oben beschriebenen Diazolösung versetzt. Die entstandene rote Suspension des Pigmentes nachstehender Formel

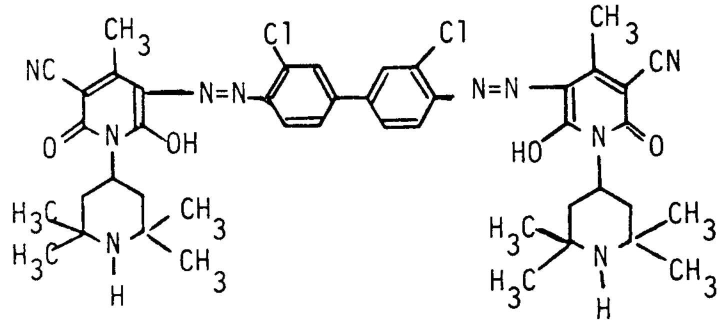

wird noch 3 Stunden bei 0 bis +5° und 1 Stunde bei 80 bis 85° gerührt, filtriert, der Niederschlag mit Wasser salz- und säurefrei gewaschen und bei 80° im Vakuum getrocknet. Man erhält 83,6 Teile des Pigmentes obiger Formel, das Polypropylen in roten Tönen mit sehr guten Echtheiten färbt, wobei der gefärbte Kunststoff auch zu Fasern mit sehr guter Reissfestigkeit verarbeitet werden kann.

BEISPIEL 3

Man löst 1,2 Teile Natrium-Metall in 80 Teilen Methanol. Zu der auf 20° gekühlten Lösung werden 12,8 Teile Phthalodinitril gegeben. Die Suspension wird 1 1/2 Stunden bei 20-25° gerührt. Dann fügt man 23,5 Teile 4-Cyanacetylamino-2,2,6,6-tetramethylpiperidin zu und lässt 16 Stunden bei Raumtemperatur rühren. Nach Zugabe von 3 Teilen konz. Essigsäure filtriert man die ausgeschiedene goldgelbe Zwischenverbindung ab, wäscht sie mit Methanol und Wasser und trocknet sie im Vakuum bei 60°.
17,5 Teile, dieser Zwischenverbindung werden in 100 Teilen Dimethylformamid aufgerührt und mit 6,4 Teilen Barbitursäure versetzt. Schon bei Raumtemperatur bildet sich rasch ein gelber Farbstoff. Nach 16-stündigem Rühren bei 20-25° erwärmt man noch für eine Stunde auf 80° und versetzt mit 3 Teilen konz. Essigsäure. Das entstandene Pigment der Formel

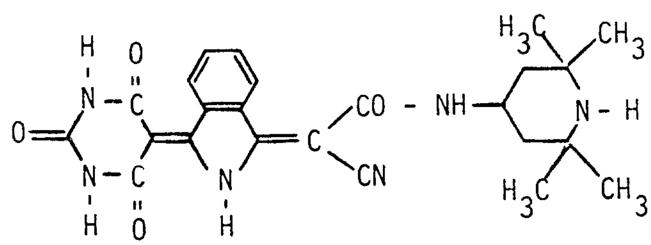

wird bei 20° abfiltriert, mit Dimethylformamid und kaltem Wasser gewaschen und getrocknet.
Nach entsprechender Mahlung des Pigments gibt dieses in Kunststoffen und Lacken sehr schöne gelbe Färbungen mit ausgezeichneten Echtheiten. Das als Ausgangsmaterial dienende 4-Cyanoacetylamino-2,2,6,6-tetramethylpiperidin erhält man durch Umsetzung von 4-Amino-2,2,6,6-tetramethylpiperidin mit Cyanessigsäureäthylester ohne Lösungsmittel bei 90° in schönen farblosen Kristallen vom Smp. 150-152°.

BEISPIEL 4

4,8 Teile Zinkacetatdihydrat, 6,5 Teile Perylen-3,4,9,10-tetracarbonsäure-dianhydrid und 14,3 Teile 3-Aminobenzolsulfonsäure-2',2',6',6'-tetramethylpiperidinylamidwerden in 120 Teilen Chinolin unter einem schwachen Stickstoffatom auf 220° erhitzt und 5 Stunden bei dieser Temperatur belassen. Nach dieser Zeit enthält eine Probe, gekocht in verdünnter Sodalösung, keine freie Perylentetracarbonsäure mehr. Nach Abkühlung auf 100° wird abfiltriert, der Rückstand mit Chinolin, Methanol und Wasser gewaschen. Der feuchte Presskuchen wird in 100 Teilen 2 %iger wässriger Sodalösung auf 95° erhitzt, filtriert, neutral gewaschen, getrocknet und gemahlen. Man erhält 9 Teile eines bordeauxfarbenen Pigments der Formel IV, worin B jeweils eine Gruppe der Formel

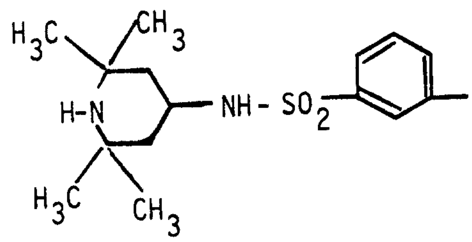

ist,
mit ausgezeichneten Eigenschaften in Kunststoffen.

3 – Aminobenzolsulfonsäure – 2',2',6',6', – tetramethylpiperidinylamid wird hergestellt durch Sulfochlorierung und Amidierung von Nitrobenzol und anschliessende Sulfid – Reduktion. Man erhält ein weisses Pulver vom Smp. 244 – 245°.

BEISPIEL 5

65,4 Teile Pyromellitsäuredianhydrid und 61 Teile 3 – Hydroxy – 2 – methyl – chinolin – 4 – carbonsäure werden in 1000 Teilen Nitrobenzol im Verlaufe 1 Stunde unten Abdestillieren des Reaktionswassers auf 205° (Rückfluss) erhitzt und 3 1/2 Stunden bei dieser Temperatur belassen. Dann wird auf 10° abgekühlt, nach 1 Stunde Rühren bei dieser Temperatur filtriert, mit Toluol und Aethanol gewaschen und getrocknet. Man erhält 93 Teile dunkelbraunes Chinophthalon – Zwischenprodukt.

90 Teile des Chinophthalon – Zwischenprodukts werden mit 900 Teilen 1 – Methyl – 2 – pyrrolidon 1 Stunde homogen gerührt, bevor bei ca. 25° 42 Teile 4 – Amino – 2,2,6,6 – tetramethylpiperidin zugegeben werden. Die Temperatur steigt dabei auf ca. 35° an. Nach Abklingen der Exothermie wird im Verlauf von 1 Stunde auf 120° geheizt und 2 Stunden bei dieser Temperatur belassen. Dann wird unter Abdestillieren des Reaktionswassers 15 Stunden auf Rückfluss gehalten, auf Raumtemperatur abgekühlt, filtriert, mit wenig 1 – Methyl – 2 – pyrrolidon und Alkohol gewaschen, und getrocknet. Man erhält 81 Teile eines bronzefarbenen, kristallinen Produkts der Formel XXVIII, worin $R'_1$ Wasserstoff ist.

Das durch Aceton – Salzmahlung konfektionierte Pigment färbt Polypropylen in braunen Tönen mit sehr guten Echtheiten.

BEISPIEL 6

61,9 Teile 3 – Amino – 4 – chlor – benzoesäure – 2',2',6',6' – tetramethyl – piperidinylamid werden 1 Stunde in 100 Teilen Wasser und 105 Teilen Eisessig bei Raumtemperatur gerührt, mit 75 Teilen konz. Salzsäure versetzt, eine weitere Stunde gerührt, dann durch Anlegen eines Eiswasserbades und Einstreuen von 100 Teilen Eis auf 0 bis 5° gekühlt, im Verlaufe von 15 bis 20 Minuten unter Rühren mit 51 Volumenteilen 4 – N – wässriger Natriumnitritlösung versetzt und 1 Stunde unter Kühlung auf Temperaturen unter 5° weiter gerührt. Die erhaltene Diazoniumchloridlösung wird schliesslich klarfiltriert.

29,0 Teile 1,4 – Bis – acetoacetylamino – 2 – methylbenzol werden in 100 Teilen Wasser und 20 Volumenteilen 30 – prozentiger Natriumhydroxidlösung gelöst, durch langsames Einbringen in eine Mischung von 100 Teilen Wasser und 21 Teilen Eisessig wieder ausgefällt, die Suspension auf 0 bis 5° gekühlt und im Verlaufe von ca. 25 Minuten unter Rühren mit der ebenfalls gekühlten Diazoniumsalzlösung versetzt. Die entstandene gelbe Suspension wird 3 Stunden unter weiterer Kühlung, 1 Stunde bei Raumtemperatur und 1 Stunde bei 80 bis 85° gerührt, filtriert, der Niederschlag mit Wasser salz – und säurefrei gewaschen, bei 80° getrocknet und gemahlen. Man erhält so das Pigment der Formel XII, worin $R_1$ = Wasserstoff, alle $R_2$ und $R_3$ Methyl, $R_{13}$ = Chlor, $R_{14}$ = H, $R_{15}$ = – NHCO – und $R_{18}$ = 2 – Methyl – 1,4 – Phenylen bedeuten, das Polypropylen in gelben Tönen mit sehr guten Echtheiten färbt, wobei der gefärbte Kunststoff auch zu Fasern mit sehr guter Reissfestigkeit verarbeitet werden kann.

BEISPIEL 7

33,45 Teile des Kupplungsproduktes aus 2 Mol diazotierter 3 – Amino – 4 – chlor – benzoesäure und 1 Mol 1,4 – Bis – acetoacetylamino – 2,5 – dimethyl – benzol werden in 300 Volumenteilen ortho – Dichlorbenzol und 1 Volumenteil Dimethylformamid verrührt, auf 100° erhitzt, mit 10 Volumenteilen Thionylchlorid sehr langsam versetzt und 2 Stunden bei ca. 100° gerührt, wobei sich die Suspension verdickt. Der Ueber –

schuss an Thionylchlorid wird, zusammen mit etwa 20 Volumenteilen ortho-Dichlorbenzol bei 70 bis 80° unter Vakuum (20-30 mm Hg) abdestilliert. Zur verbleibenden Mischung fügt man eine Lösung von 15,5 Teilen 4-Amino-2,2,6,6-tetramethylpiperidin in 80 Vol.Teilen ortho-Dichlorbenzol, rührt 2 Stunden bei 120° und weitere 2 Stunden bei 150°, kühlt auf 80 bis 100°, filtriert die rotstichig-gelbe Pigmentsuspension, wäscht mit ebenso heissem ortho-Dichlorbenzol bis das Filtrat farblos ist, verdrängt (nach Abkühlen) das ortho-Dichlorbenzol mit Methanol, wäscht dieses mit Wasser aus und trocknet das Pigment.
Die in diesen Beispielen und den Beispielen der Tabelle 1 angewandten Amide des 4-Amino-2,2,6,6-tetramethylpiperidins werden wie folgt hergestellt:

4-(4'-Chlor-3'-aminobenzoyl)-amino-2,2,6,6-tetramethylpiperidin

Eine Lösung von 55,2 Teilen 3-Nitro-4-chlorbenzoylchlorid in 200 Volumenteilen Toluol werden bei Raumtempetatur zu einem gut gerührten Gemisch von 100 Volumenteilen Toluol, 41 Teilen 2,2,6,6-Tetramethyl-4-aminopiperidin, 1 Teil Tetrabutylammoniumbromid und 120 Volumenteilen 30 %iger Natriumhyroxidlösung getropft.

Man rührt das Gemisch über Nacht und filtriert den ausgefallenen Niederschlag ab. Nach Waschen mit Toluol und n-Hexan wird das Nutschgut auf dem Filter trockengesaugt und zur Entfernung von anorganischen Salzen in 1000 Volumenteilen Wasser aufgerührt. Nach erneuter Filtration und Trocknen erhält man 74 Teile 4(4'-Chlor-3'-nitrobenzoyl)amino-2,2,6,6-tetramethylpiperidin vom Smp. 166-168°.

Zur Ueberführung in das Amin werden 68 Teile dieser Nitroverbindung allmählich in ein siedendes Gemisch von 600 Volumenteilen Aethanol 94%, 80 Teilen Eisenpulver und 16 Teilen 30 %iger Salzsäure eingetragen. Nach mehrstündigem Sieden ist die Reduktion beendet. Nach Zusatz von 14 Teilen Natriumcarbonat wird die Lösung nochmals vom ausgeschiedenen Eisenoxid abfiltriert. Aus dem Filtrat gewinnt man durch Eindampfen im Vakuum das 4-(3'-Amino-4'-chlorbenzol)-amino-2,2,6,6-tetramethylpiperidin.

4-(3'-Amino-4'-chlorbenzoyl)amino-2,2,6,6-tetramethyl-1-acetylpiperidin

68 Teile 4-(3'-Nitro-4'-chlorbenzoyl)-amino-2,2,6,6-tetramethylpiperidin werden in 250 Teilen Essigsäureanhydrid eingetragen. Nach Zusatz von 21 Teilen Triäthylamin wird die Suspension zuerst 16 Stunden bei Raumtemperatur, dann 3 Stunden bei 100-110° gerührt. Zur vollständigen Ausfällung des Acetylderivats wird der Ansatz auf 1500 Volumenteile kaltes Wasser ausgetragen und solange bei Raumtempertur gerührt, bis alles überschüssiges Essigsäureanhydrid verseift ist. Der Niederschlag wird abgesaugt, mit Wasser neutral gewaschen und getrocknet. Man erhält 72 Teile 4-(3'-Nitro-4'-chlorbenzoyl)-amino-1-acetyl-2,2,6,6-tetramethylpiperidin vom Smp. 198-200°.

Die Reduktion mit Eisen im wässrigen Alkohol erfolgt genau gleich wie bei der unacetylierten Verbindung beschrieben. Man erhält das 4-(3'-Amino-4'-chlorbenzoyl)-amino-1-acetyl-2,2,6,6-tetramethylpiperidin vom Smp. 233-234° in sehr guter Ausbeute.

## BEISPIEL 8

76,0 Teile 4-Amino-2,5-dichlorbenzolsulfonsäure-2',2',6',6'-tetramethyl-piperidinylamid werden 1 Stunde in 100 Teilen Wasser und 105 Teilen Eisessig bei Raumtemperatur gerührt, mit 75 Teilen konz. Salzsäure versetzt, eine weitere Stunde gerührt, dann durch Anlegen eines Eiswasserbades und Einstreuen von 100 Teilen Eis auf 0 bis 5° gekühlt, im Verlaufe von 15 bis 20 Minuten unter Rühren mit 51 Volumenteilen 4-N-wässriger Natriumnitritlösung versetzt und 1 Stunde unter Kühlung auf Temperaturen unter 5° weitergerührt. Die erhaltene Diazoniumchloridlösung wird schliesslich klarfiltriert.

29,0 Teile 1,4-Bis-acetoacetylamino-2-methylbenzol werden in 100 Teilen Wasser und 20 Volumenteilen 30-prozentiger Natriumhydroxidlösung gelöst, durch langsames Einbringen in eine Mischung von 100 Teilen Wasser und 21 Teilen Eisessig wieder ausgefällt, die Suspension auf 0 bis 5° gekühlt und im Verlaufe von ca. 25 Minuten unter Rühren mit der ebenfalls gekühlten Diazoniumsalzlösung versetzt. Die entstandene gelbe Suspension wird 3 Stunden unter weiterer Kühlung, 1 Stunde bei Raumtemperatur und 1 Stunde bei 80 bis 85° gerührt, filtriert, der Niederschlag mit Wasser salz- und säurefrei gewaschen, bei 80° getrocknet und gemahlen. Man erhält so das Pigment der Formel XII, worin $R_{13}$ und $R_{14}$ Chlor, $R_{15}$ = $-SO_2NH-$, $R_{18}$ = Methyl-1,4-phenylen, $R_1$ = H und alle $R_2$ und $R_3$ Methyl sind, das Polypropylen in gelben Tönen mit sehr guten Echtheiten färbt, wobei der gefärbte Kunststoff auch zu Fasern mit sehr guter Reissfestigkeit verarbeitet werden kann.

BEISPIEL 9

38,0 Teile 4−Amino−2,5−dichlor−benzolsulfonsäure−2',2',6',6'−tetramethyl−piperidinylamid werden 1 Stunde in 50 Teilen Wasser und 50 Teilen Eisessig bei Raumtemperatur gerührt, mit 30 Teilen konz. Salzsäure versetzt, eine weitere Stunde gerührt, dann durch Anlegen eines Eiswasserbades und Einstreuen von 50 Teilen Eis auf 0 bis 5° gekühlt, im Verlaufe von 15 bis 20 Minuten unter Rühren mit 26 Volumenteilen 4−N−wässriger Natriumnitritlösung versetzt und 1 Stunde unter Kühlung auf Temperaturen unter 5° weitergerührt. Die erhaltene Diazoniumchloridlösung wird schliesslich klarfiltriert.

18,8 Teile 2−Hydroxy−3−naphthalincarbonsäure werden in 10 Teilen Wasser von 50° und 15 Volumenteilen 30−prozentiger Natriumhydroxidlösung gelöst, durch langsames Einbringen in eine Mischung von 100 Teilen Wasser und 15 Teilen Eisessig wieder ausgefällt, die Suspension auf 0 bis 5° gekühlt und im Verlaufe von ca. 25 Minuten unter Rühren mit der ebenfalls gekühlten Diazoniumsalzlösung versetzt. Die entstandene rote Suspension wird 3 Stunden unter weiterer Kühlung, 1 Stunde bei Raumtemperatur und 1 Stunde bei 80 bis 85° gerührt, filtriert, der Niederschlag mit Wasser salz− und säurefrei gewaschen und bei 80° getrocknet. Man erhält so die Azocarbonsäure der Formel XVIII, worin $R_1$ = H, alle $R_2$ und $R_3$ Methyl, $R_{13}$ und $R_{14}$ (in 5−Stellung zur Azobrücke) Chlor und $R_{15}$ $-SO_2-NH-$ bedeuten.

57,9 Teile der Azocarbonsäure vorstehender Formel werden mit 300 Volumenteilen 1,2−Dichlorbenzol angerührt. Zwecks Entwässerung destilliert man bei 70−80° unter Vakuum ca. 30 Volumenteile 1,2− Dichlorbenzol/Wasser ab. Sodann kühlt man auf 60°, setzt 1 Volumenteil Dimethylformamid und 10,2 Volumenteile Thionylchlorid zu und rührt 3 Stunden bei 100 bis 110°, wobei unter Entweichen von $SO_2$ und HCl die Azocarbonsäure in das entsprechende Säurechlorid übergeht. Anschließend wird das überschüssige Thionylchlorid bei 70−80° unter Vakuum, zusammen mit 30 Volumenteilen 1,2−Dichlobenzol, abdestilliert.

Zur Säurechloridsuspension setzt man jetzt eine 100° heisse Lösung von 8,9 Teilen 1,4−Diamino− 2,5−dichlorbenzol, gelöst in 150 Volumenteilen 1,2−Dichlorbenzol zu. Die entstehende rote Pigmentsuspension wird während 2 Stunden bei 120° und 2 Stunden bei 150° gerührt, schliesslich bei 100° filtriert, mit 400 Volumenteilen 1,2−Dichlorbenzol von 100°, nach Abkühlung auf Raumtemperatur noch mit 500 Volumenteilen Methanol und 500 Volumenteilen Wasser gewaschen.

Dann wird der Filterkuchen getrocknet und gemahlen. Man erhält 59,8 Teile eines roten Pigments, das sich besonders gut zum Massefärben von Polypropylenspinnfasern eignet, da die Reissfestigkeit der damit gefärbten Fasern während der Belichtung geringere Einbussen erleidet,als wenn man diese mit anderen, handelsüblichen Rotpigmenten einfärbt.

BEISPIEL 10

31 Teile 3−Amino−4−chlor−benzoesäure−2',2,,6',6'−tetramethyl−piperidinylamid werden 1 Stunde in 50 Teilen Wasser und 50 Teilen Eisessig bei Raumtemperatur gerührt, mit 30 Teilen konz. Salzsäure versetzt, eine weitere Stunde gerührt, dann durch Anlegen eines Eiswasserbades und Einstreuen von 50 Teilen Eis auf 0 bis 5° gekühlt, im Verlaufe von 15 bis 20 Minuten unter Rühren mit 26 Volumenteile 4− N−wässriger Natriumnitritlösung versetzt und 1 Stunde unter Kühlung auf Temperaturen unter 5° weitergerührt. Die erhaltene Diazoniumchloridlösung wird schliesslich klarfiltriert.

18,8 Teile 2−Hydroxy−3−naphthalincarbonsäure werden in 100 Teilen Wasser von 50° und 15 Volumenteilen 30−prozentiger Natriumhydroxidlösung gelöst, durch langsames Einbringen in eine Mischung von 100 Teilen Wasser und 15 Teilen Eisessig wieder ausgefällt, die Suspension auf 0 bis 5° gekühlt und im Verlaufe von ca. 25 Minuten unter Rühren mit der ebenfalls gekühlten Diazoniumsalzlösung versetzt. Die entstandene rote Suspension wird 3 Stunden unter weiterer Kühlung, 1 Stunde bei Raumtemperatur und 1 Stunde bei 80 bis 85° gerührt, filtriert, der Niederschlag mit Wasser salz− und säurefrei gewaschen und bei 80° getrocknet. Man erhält so die Azocarbonsäure der Formel XVIII, worin $R_1$ = H, alle $R_2$ und $R_3$ Methyl, $R_{13}$ = Chlor, $R_{14}$ = H und $R_{15}$ = $-CO-NH-$ bedeuten.

53,4 Teile der Azocarbonsäure vorstehender Formel werden mit 300 Volumenteilen 1,2−Dichlorbenzol angerührt. Zwecks Entwässerung destilliert man bei 70 bis 80° unter Vakuum ca. 30 Volumenteile 1,2− Dichlorbenzol/Wasser ab. Sodann kühlt man auf 60°, setzt 1 Volumenteil Dimethylformamid und 10,2 Volumenteile Thionylchlorid zu und rührt 3 Stunden bei 100 bis 110°, wobei unter Entweichen von $SO_2$ und HCl die Azocarbonsäure in das entsprechende Säurechlorid übergeht. Anschließend wird das überschüssige Thionylchlorid bei 70−80° unter Vakuum, zusammen mit 30 Volumenteilen 1,2−Dichlorbenzol, abdestilliert.

Zur Säurechloridlösung setzt man jetzt eine 100° heisse Lösung von 8,9 Teilen 1,4−Diamino−2,5− dichlorbenzol, gelöst in 150 Volumenteilen 1,2−Dichlorbenzol zu. Die entstehende rote Pigmentsuspension

wird während 2 Stunden bei 120° und 2 Stunden bei 150° gerührt, schliesslich bei 100° filtriert, mit 400 Volumenteilen 1,2-Dichlorbenzol von 100°, nach Abkühlung auf Raumtemperatur noch mit 500 Volumenteilen Methanol und 500 Volumenteilen Wasser gewaschen. Dann wird der Filterkuchen getrocknet und gemahlen. Man erhält 56,7 Teile eines roten Pigmentes, das sich besonders gut zum Massefärben von Polypropylenspinnfasern eignet, da die Reissfestigkeit der damit gefärbten Fasern während der Belichtung geringere Einbussen erleidet als wenn man diese mit anderen, handelsüblichen Rotpigmenten einfärbt.

BEISPIEL 11

Das gemäss Beispiel 10 erhaltene Pigment kann man auch auf folgende Weise herstellen:

31 Teile 3-Amino-4-chlor-benzoesäure-2',2',6',6'-tetramethyl-piperidinylamid werden 1 Stunde in 50 Teilen Wasser und 50 Teilen Eisessig bei Raumtemperatur gerührt, mit 30 Teilen konz. Salzsäure versetzt, eine weitere Stunde gerührt, dann durch Anlegen eines Eiswasserbades und Einstreuen von 50 Teilen Eis auf 0 bis 5° gekühlt, im Verlaufe von 15 bis 20 Minuten unter Rühren mit 26 Volumenteilen 4-N-wässriger Natriumnitritlösung versetzt und 1 Stunde unter Kühlung auf Temperaturen unter 5° weitergerührt. Die erhaltene Diazoniumchloridlösung wird schliesslich klarfiltriert.

25,9 Teile 1,4-Bis-(2'-hydroxy-3'-naphthoylamino)-2,5-dichlorbenzol werden in 200 Teilen Wasser und 20 Volumenteilen 30-prozentiger Natriumhydroxidlösung bei 80° gelöst, durch langsames Einbringen in eine Mischung von 200 Teilen Wasser und 21 Teilen Eisessig wieder ausgefällt, die Suspension auf 0 bis 5° gekühlt und im Verlaufe von ca. 25 Minuten unter Rühren mit der ebenfalls gekühlten Diazoniumsalzlösung versetzt. Die entstandene rote Suspension wird 3 Stunden unter weiterer Kühlung, 1 Stunde bei Raumtemperatur und 1 Stunde bei 80 bis 85° gerührt, filtriert, der Niederschlag mit Wasser salz- und säurefrei gewaschen, bei 80° getrocknet und gemahlen. Man erhält so das rote Pigment der gleichen chemischen Konstitution wie in Beispiel 10, welches in diesem Falle zwecks Verbesserung seiner echtheits- und anwendungstechnischen Eigenschaften in einem organischen Lösungsmittel, z.B. Dimethylformamid oder 1,2-Dichlorbenzol, bei höherer Temperatur, z.B. 80° bis Siedetemperatur, nachbehandelt wird.

BEISPIEL 12

Eine dritte Herstellungsmöglichkeit für das gemäss Beispiel 10 und 11 hergestellte Pigment besteht darin, dass man 3-Amino-4-chlorbenzoesäure diazotiert und auf die hier oben angegebene Weise auf 1,4-Bis-(2'-hydroxy-3'-naphthoylamino)-2,5-dichlorbenzol kuppelt. Die entstehende Disazodicarbonsäure wird isoliert, getrocknet, in einem organischen Lösungsmittel (z.B. 1,2-Dichlorbenzol) bei 80-120° mit säurechloridbildenden Mitteln (z-B. Thionylchlorid) in das Dichlorid umgewandelt und dieses ohne Isolierung mit 4-Amino-2,2,6,6-tetramethylpiperdin bei Temperaturen zwischen 80 und 150° kondensiert. Das entstandene rote Pigment wird abfiltriert, mit heissem 1,2-Dichlorbenzol und nach Abkühlen mit Methanol gewaschen und getrocknet. Es besitzt die gleich guten echtheits- und anwendungstechnischen Eigenschaften wie die nach den beiden anderen Varianten hergestellten Pigmentmuster der gleichen chemischen Konstitution.

Die in der folgenden Tabelle 1 angegebenen Pigmente werden analog zu den Angaben des Beispiels 4 hergestellt, sie entsprechen der Formel IV.

Tabelle 1

| Bsp. No. | B | Nuance in Polypropylen |
|---|---|---|
| 13 | 2,2,6,6-Tetramethylpiperidyl-4 | rot |
| 14 | 4-[1'-Acetyl-2',2',6',6'-tetramethylpiperidyl-(4')-aminocarbonyl]-phenyl | do. |
| 15 | 4-[2',2',6',6'-Tetramethylpiperidyl-(4')-aminocarbony]-phenyl | rotbraun |
| 16 | 4-[1'-Acetyl-2',2',6',6'-tetramethylpiperidyl-(4')-amino]-phenyl | rotviolett |

Die in der folgenden Tabelle 2 angegebenen Pigmente werden in Analogie zu den Angaben im Beispiel 7 hergestellt, sie entsprechen der Formel XII, wobei alle $R_2$ und $R_3$ Methyl; in den Beispielen 17 bis 38 ist $R_{14}$ Wasserstoff; in den Beispielen 39 bis 48 ist $R_{14}$ Chlor, in para-Stellung zu $R_{13}$; in den Beispielen 17 bis 35 sind alle $R_{15}$' Aminocarbonyl, in den Beispielen 36 bis 48 Aminosulfonyl (Aminogruppe an den Piperidylrest gebunden) bedeuten.

Die Piperidylaminocarbonylgruppe ist in den Beispielen 17 bis 38 in para – Stellung, in den Beispielen 39 bis 48 in meta – Stellung zu $R_{13}$ gebunden.

T a b e l l e 2

| Bsp. No. | $R_1$ | $R_{13}$ | $R_{18}$ | Nuance d.Ausfärb. in Polypropylen |
|---|---|---|---|---|
| 17 | H | Cl | 1,4-Phenylen | gelb |
| 18 | H | Cl | 2-Chlor-1,4-phenylen | do. |
| 19 | H | Cl | 2,5-Dichlor-1,4-phenylen | do. |
| 20 | H | Cl | 2-Methoxy-1,4-phenylen | do. |
| 21 | H | Cl | 2,5-Dimethoxy-1,4-phenylen | rotstichig-gelb |
| 22 | H | Cl | 2-Chlor-5-methyl-1,4-phenylen | gelb |
| 23 | H | Cl | 3,3'-Dimethyl-4,4'-diphenylen | do. |
| 24 | H | $CH_3$ | 2,5-Dimethyl-1,4-phenylen | do. |
| 25 | H | $-OCH_3$ | do. | do. |
| 26 | H | $-COOCH_3$ | 1,4-Phenylen | do. |
| 27 | H | do. | 2,5-Dimethyl-1,4-phenylen | do. |
| 28 | H | do. | 2-Methyl-5-chlor-1,4-phenylen | do. |
| 29 | H | $-COOC_2H_5$ | 2,5-Dimethyl-1,4-phenylen | do. |
| 30 | $-COCH_3$ | Cl | 1,4-Phenylen | do. |
| 31 | do. | Cl | 2,5-Dimethyl-1,4-phenylen | do. |
| 32 | do. | Cl | 2-Chlor-5-methyl-1,4-phenylen | do. |
| 33 | do. | $-COOCH_3$ | 2,5-Dimethyl-1,4-phenylen | do. |
| 34 | do. | do. | 2-Chlor-5-methyl-1,4-phenylen | do. |
| 35 | do. | do. | 1,4-Phenylen | do. |
| 36 | H | Cl | do. | do. |
| 37 | H | Cl | 2,5-Dimethyl-1,4-phenylen | do. |
| 38 | H | Cl | 2-Chlor-5-methyl-1,4-phenylen | do. |
| 39 | H | Cl | do. | do. |
| 40 | H | Cl | 1,4-Phenylen | do. |
| 41 | H | Cl | 2-Chlor-1,4-phenylen | do. |
| 42 | H | Cl | 2,5-Dichlor-1,4-phenylen | do. |
| 43 | H | Cl | 2-Methoxy-1,4-phenylen | do. |
| 44 | H | Cl | 2,5-Dimethoxy-1,4-phenylen | rotstichig-gelb |
| 45 | H | Cl | 2,5-Dimethyl-1,4-phenylen | gelb |
| 46 | H | Cl | 3,3'-Dimethyl-4,4'-diphenylen | do. |
| 47 | H | Cl | 1,5-Naphthylen | do. |
| 48 | H | Cl | 1,4-Naphthylen | do. |

Die Pigmente der folgenden Tabelle 3 werden in Analogie Zu den Angaben im Beispiel 9 hergestellt.

Tabelle 3

| Bsp. No. | Diazo-komponente | Kupplungs-komponente | Kondensations-amine | Nuance |
|---|---|---|---|---|
| 49 | 3-Amino-4-chlor-benzol-sulfonsäure-2',2',6',-6'-tetramethylpiperidi-nyl-amid | 2-Hydroxy-3-naphthoe-säure | 1,4-Diamino-benzol | gelb-stichig-rot |
| 50 | do. | do. | 1,4-Diamino-2--chlorbenzol | rot |
| 51 | do. | do. | 1,4-Diamino-2--chlor-5-methyl-benzol | rot |
| 52 | do. | do. | 1,4-Diamino-2--methoxy-benzol | rot-braun |
| 53 | do. | do. | 3,3'-Dichlor--benzidin | rot |
| 54 | do. | do. | 1,4-Diamino-2,5--dichlorbenzol | rot |
| 55 | 4-Amino-2,5-dichlorbenzol--sulfonsäure-2',2',6',6'--tetramethylpiperidinylamid | do. | 1,4-Diamino-benzol | gelb-stichig-rot |
| 56 | do. | do. | 1,4-Diamino-2-chlorbenzol | blau-stichig-rot |
| 57 | do. | do. | 3,3'-Dichlor-benzidin | rot |
| 58 | do. | do. | 1,5-Diamino-naphthalin | braun |
| 59 | do. | do. | 1,4-Diamino-2-methyl-5-chlor-benzol | rot |
| 60 | 4-Amino-2,6-dichlorbenzol--sulfonsäure-2',2',6',6'--tetramethylpiperidinylamid | do. | 1,4-Diaminobenzol | do. |
| 61 | do. | do. | 1,4-Diamino-2,5-dichlorbenzol | do. |

| Bsp. No. | Diazo-komponente | Kupplungs-komponente | Kondensations-amine | Nuance |
|---|---|---|---|---|
| 62 | 4-Amino-2,6-dichlorbenzol-sulfonsäure-2',2',6',6'-tetramethyl-piperidinylamid | 2-Hydroxy-3-naphthoe-säure | 3,3'-Dichlor-benzidin | rot |
| | | | 1,5-Diamino-naphthalin | braun |
| 63 | do. | do. | | |
| 64 | 2-Amino-4,5-dichlorbenzol-sulfosäure-2',2',6',6'-tetramethylpiperidinylamid | do. | 1,4-Diamino-benzol | rot |
| 65 | do. | do. | 1,4-Diamino-2,5--dichlorbenzol | do. |
| 66 | do. | do. | 3,3'-Dichlor-benzidin | do. |
| 67 | do. | do. | 1,5-Diamino-naphthalin | braun |

Die Pigmente der folgenden Tabelle 4 werden in Analogie zu den Angaben im Beispiel 10, 11 oder 12 hergestellt.

Tabelle 4

| Bsp. No. | Diazo-komponente | Kupplungs-komponente | Kondensations-amine | Nuance |
|---|---|---|---|---|
| 68 | 3-Amino-4-chlor-benzoesäure-2',2',6',6'-tetra-methylpiperidinyl-amid | 2-Hydroxy-3-naphthoesäure | 1,4-Diamino-benzol | gelbst.-rot |
| 69 | do. | do. | 1,4-Diamino-2--chlorbenzol | rot |
| 70 | do. | do. | 1,4-Diamino-2--chlor-5-methyl-benzol | rot |
| 71 | do.- | do. | 1,4-Diamino-2--methoxy-benzol | rot-braun |
| 72 | do. | do. | 3,3'-Dichlor-benzidin | rot |
| 73 | 3-Amino-4-carbo-methoxy-benzoesäure-2',2',6',6'-tetramethylpiperidinylamid | do. | 1,4-Diaminobezol | gelbst. rot |
| 74 | do. | do. | 1,4-Diamino-2-chlorbenzol | blaust.-rot |
| 75 | do. | do. | 1,4-Diamino-2,5--dichlorbenzol | rot |
| 76 | do. | do. | 3,3'-Dichlor--benzidin | do. |
| 77 | do. | do. | 1,5-Diamino-naphthalin | braun |

Analog zum ersten Teil des Beispiels 10 werden die Monoazopigmente der folgenden Tabelle 5 hergestellt.

Tabelle 5

| Bsp. No. | Diazokomponente | Kupplungskomponente | Nuance in Polypropylen |
|---|---|---|---|
| 78 | 3-Amino-4-chlor-benzoesäure--2',2',6',6'-tetramethyl--piperidylamid | 2-Hydroxy-3-naphthoesäure--(4'-benzoylamino)-phenyl--amid | rot |
| 79 | do. | 5-(2'-Hydroxy-3'-naphthoyl-amino)-benzimidazolon | braun |
| 80 | do. | 5-Acetoacetylaminobenzimida-zolon | gelb |
| 81 | 3-Amino-4-methoxycarbonyl-benzoesäure-2',2',6',6'-tetra--methylpiperidylamid | 2-Hydroxy-3-naphthoesäure-(4'--benzoylamino)-phenylamid | rot |
| 82 | do. | 5-(2'-Hydroxy-3'-naphthoyl--amino)-benzimidazolon | braun |
| 83 | do. | 5-Acetoacetylamino-benzimi-dazolon | gelb |
| 84 | 4-Aminobenzoesäure-2',2',6',6'-tetramethylpiperidylamid | 2-Hydroxy-3-naphthoesäure--2'-methoxy-phenylamid | gelbst.-rot |
| 85 | do. | 2-Hydroxy-3-naphthoesäure-2'--äthoxyphenylamid | scharlach |
| 86 | do. | 2-Hydroxy-3-naphthoesäure--phenylamid | rot |

ANWENDUNGSBEISPIEL

990 Teile handelsübliches UV-stabilisiertes Polypropylen (Spinnfasertype) werden mit 10 Teilen des gemäss Beispiel 7 hergestellten Pigmentes nach der "Dry-Colouring"-Methode während 10 Minuten bei Raumtemperatur gemischt und anschliessend extrudiert. Aus diesem Compound werden Fasern mit einem Titer von 15 dtex gesponnen.

An diesen Fasern werden die Reissfestigkeiten nach Belichtungsintervallen von 200, 400, 600 und 800 Stunden im Vergleich zur Nullprobe (nicht belichtete, gefärbte Faser) gemessen. Die 400 Stunden belichteten Fasern weisen gegenüber den unbelichteten Fasern noch eine Reissfestigkeit von 57 % auf.

Zum Vergleich wurde dasselbe Polypropylen mit dem Pigment gemäss Beispiel 2 der DE-AS 11 50 165 (unter denselben Bedingungen) gefärbt und zu Fasern versponnen, die 400 Stunden belichteten Fasern dieser Art weisen gegenüber der Nullprobe nur mehr eine Reissfestigkeit von 20 % auf.

## Patentansprüche

**Patentansprüche für folgende Vertragsstaaten : BE, CH, LI, DE, FR, GB, IT, NL, SE**

1. Pigmentfarbstoffe, die im Molekül eine oder mehrere 2,2,6,6 – Tetraalkylpiperidylgruppen enthalten.

2. Die Pigmentfarbstoffe gemäss Anspruch 1, der Formel I

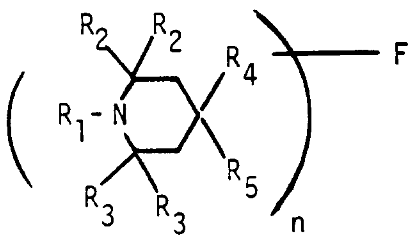

(I),

| | |
|---|---|
| worin $R_1$ | Wasserstoff, $C_{1-8}$ – Alkyl, $C_{3-10}$ – Alkenyl, Phenyl, Phenyl – $C_{1-4}$ – alkyl oder Acyl, |
| die beiden $R_2$ und die beiden $R_3$ | unabhängig voneinander $C_{1-5}$ – Alkyl oder die beiden $R_2$ und/oder die beiden $R_3$ zusammen eine Gruppe der Formel $-(CH_2)_5-$, |
| $R_4$ | die direkte Bindung oder ein Brückenglied, das gegebenenfalls zusammen mit $R_5$ einen iso – oder heterocyclischen Ring bildet, |
| $R_5$ | Wasserstoff, $C_{1-2}$ – Alkyl oder zusammen mit $R_4$ die zur Bildung eines iso – oder heterocyclischen Ringsystems nötigen Atomgruppen, |
| F | den Rest eines Pigmentfarbstoffs und |
| n | 1, 2, 3 oder 4 bedeuten. |

3. Die Pigmentfarbstoffe gemäss Anspruch 1, der Formel II

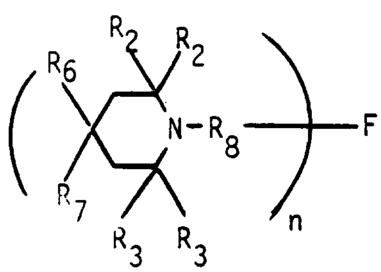

(II),

| | |
|---|---|
| worin die beiden $R_2$ und die beiden $R_3$ | unabhängig voneinander $C_{1-5}$ – Alkyl oder die beiden $R_2$ und/oder die beiden $R_3$ zusammen eine Gruppe der Formel $-(CH_2)-_5$, |
| $R_6$ | Wasserstoff oder gegebenenfalls weiter substituiertes Hydroxy oder Amino oder mit $R_7$ ein iso – oder hetero – cyclisches Ringsystem, |
| $R_7$ | Wasserstoff, $C_{1-2}$ – Alkyl oder zusammen mit $R_6$ die zur Bildung eines iso – oder heterocyclischen Ringsystems nötigen Atomgruppen, |
| $R_8$ | die direkte Bindung oder ein Brückenglied, |
| F | den Rest eines Pigmentfarbstoffs und |
| n | 1, 2 oder 3 bedeuten. |

4. Die Pigmentfarbstoffe gemäss Anspruch 2 oder 3, worin F der Rest eines Azo – oder Disazofarbstoffs ist.

**5.** Die Pigmentfarbstoffe gemäss einem der Ansprüche 1 bis 2, der Formel IV

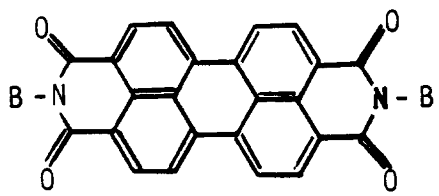

(IV),

worin B jeweils eine Gruppe der Formel XXVI

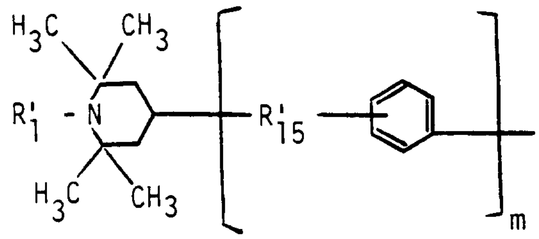

(XXVI),

| | |
|---|---|
| $R'_1$ | Wasserstoff, Acetyl oder Propionyl, |
| $R'_{15}$ | eine Gruppe der Formel $-NH-$, $-NH-CO-$ oder $-NH-SO_2-$ (die Aminogruppe an den Piperidylrest gebunden) |
| und m | 0 oder 1 bedeuten. |

**6.** Die Pigmentfarbstoffe gemäss einem der Ansprüche 1 bis 2, der Formel XXVIII

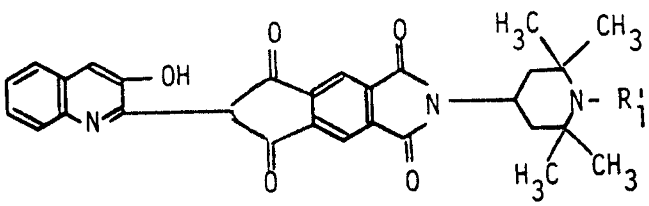

(XXVIII),

worin $R_1$ Wasserstoff, Acetyl oder Propionyl, vorzugsweise Wasserstoff ist.

7. Die Disazopigmente gemäss einem der Ansprüche 1 bis 2 der Formel XII oder XIII

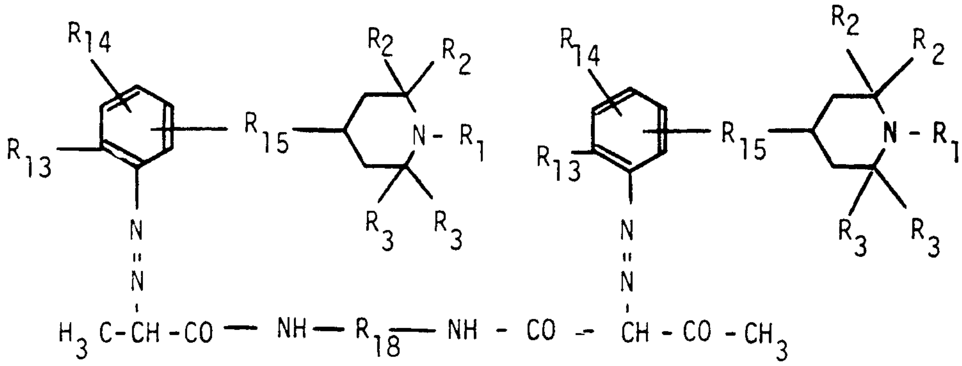

(XII),

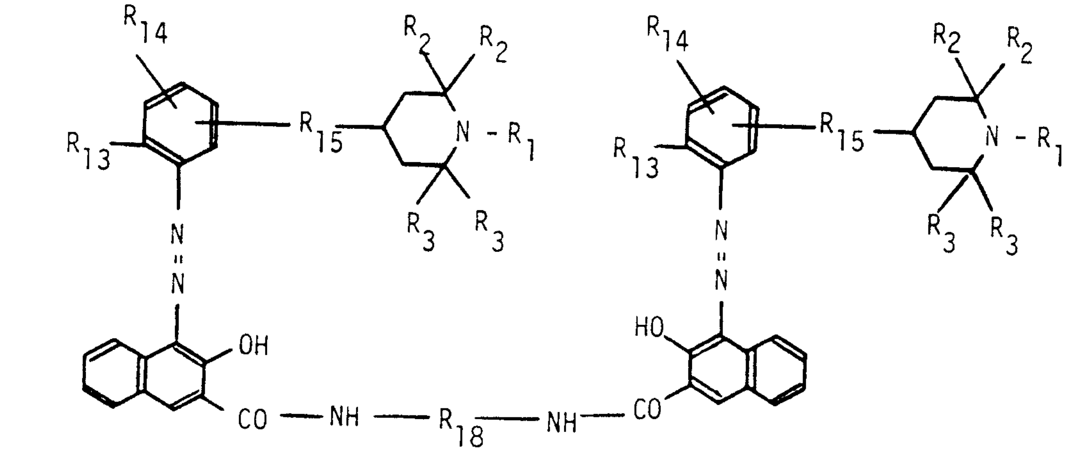

worin (in beiden Formeln)

| | |
|---|---|
| alle $R_1$ | Wasserstoff oder Acyl, |
| alle $R_2$ und alle $R_3$ | unabhängig voneinander $C_{1-5}$-Alkyl oder paarweise die $R_2$ und $R_3$ zusammen eine Gruppe der Formel $-(CH_2)_5-$, |
| alle $R_{13}$ | unabhängig voneinander Wasserstoff, Chlor, Brom, Methyl, $C_{1-2}$-Alkoxy oder $C_{1-4}$-Alkoxycarbonyl, |
| alle $R_{14}$ | unabhängig voneinander Wasserstoff, Chlor, Brom oder Methyl, |
| $R_{15}$ | eine Gruppe der Formel $-CO-NH-$, $-CO-O-$ oder $-SO_2-NH-$ (die Aminogruppe, bzw. das Sauerstoffatom an den Piperidylrest gebunden) |
| und $R_{18}$ | ein benzolisches, naphthalinisches oder heterocyclisch-aromatisches Brükkenglied bedeuten. |

8. Die Monoazopigmente gemäss einem der Ansprüche 1 bis 2, der Formel XX

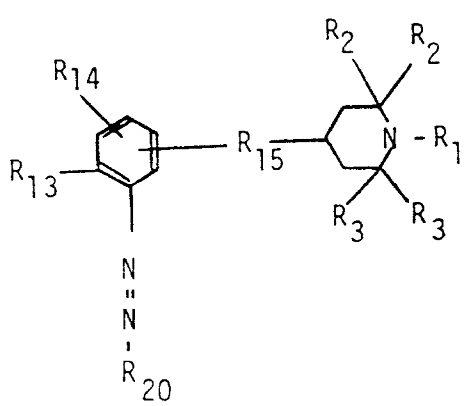

(XX),

worin $R_1$ Wasserstoff oder Acyl,

alle $R_2$ und alle $R_3$ unabhängig voneinander $C_{1-5}$ – Alkyl oder paarweise die $R_2$ und $R_3$ zusammen eine Gruppe der Formel $-(CH_2)_5-$,

alle $R_{13}$ unabhängig voneinander Wasserstoff, Chlor, Brom, Methyl, $C_{1-2}$ – Alkoxy oder $C_{1-4}$ – Alkoxycarbonyl

alle $R_{14}$ unabhängig voneinander Wasserstoff, Chlor, Brom oder Methyl,

$R_{15}$ eine Gruppe der Formel $-CO-NH-$, $-CO-O-$ oder $-SO_2-NH-$ (die Aminogruppe, bzw. das Sauerstoffatom an den Piperidylrest gebunden)

und $R_{20}$ eine Gruppe der Formel

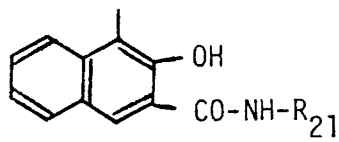
,

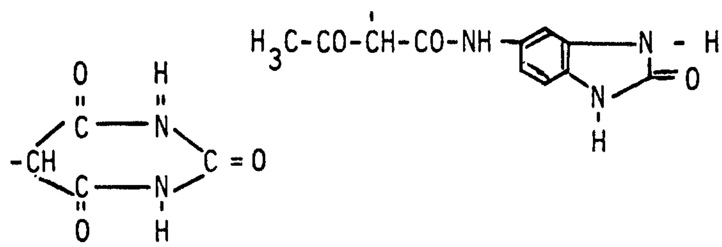

und $R_{21}$ Benzimidazolonyl – 5 oder gegebenenfalls bis zu drei Substituenten aus der Gruppe Chlor, Brom, Methyl, Methoxy oder Aethoxy oder eine Benzoylaminogruppe tragendes Phenyl bedeuten.

**9.** Die Disazopigmente der Formel XXIII

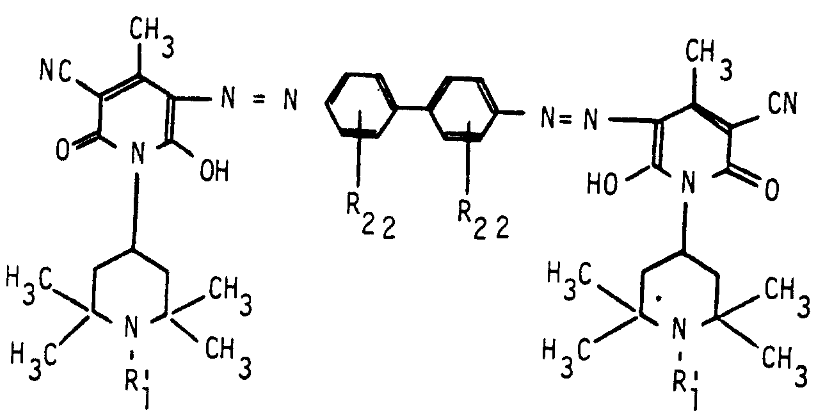
(XXIII),

worin die beiden $R'_1$ Wasserstoff oder $C_{1-2}$ – Alkylcarbonyl, insbesondere Wasserstoff und die beiden $R_{22}$ Chlor, Brom, Methyl, Methoxy oder Aethoxy, insbesondere Chlor bedeuten.

**10.** Die Verwendung der Pigmentfarbstoffe gemäss einem der vorhergehenden Ansprüche zum Färben von Kunststoffmassen und Lacken.

**11.** Die Verbindungen der Formel p

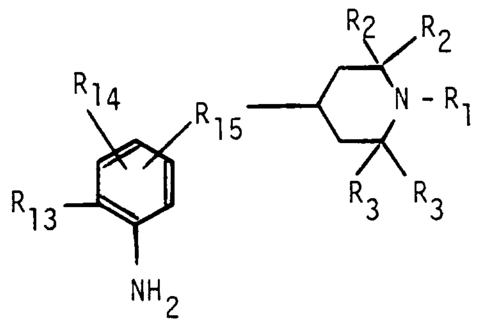

(p),

| | |
|---|---|
| worin $R_1$, | Wasserstoff, $C_{1-8}$-Alkyl, $C_{3-10}$-Alkenyl, Phenyl, Phenyl-$C_{1-4}$-alkyl oder Acyl, |
| die beiden $R_2$ und die beiden $R_3$ | unabhängig voneinander $C_{1-5}$-Alkyl oder die beiden $R_2$ und/oder die beiden $R_3$ zusammen eine Gruppe der Formel $-(CH_2)_5-$, |
| $R_{13}$ | Wasserstoff, Chlor, Brom, Methyl, $C_{1-2}$-Alkoxy oder $C_{1-4}$-Alkoxycarbonyl, |
| $R_{14}$ | Wasserstoff, Chlor, Brom oder Methyl, vorzugsweise Wasserstoff oder Chlor |
| und $R_{15}$ | eine Gruppe der Formel $-CO-NH-$, $-CO-O-$ oder $-SO_2-NH-$ (die Aminogruppe, bzw. das Sauerstoffatom an den Piperidylrest gebunden) |

bedeuten.

**12.** Verfahren zur Herstellung der Pigmentfarbstoffe der Formel IV

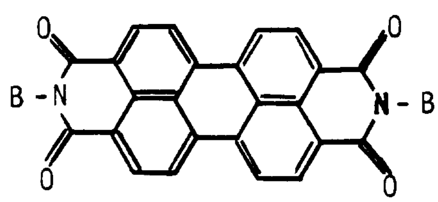

(IV),

worin B jeweils eine Gruppe der Formel XXVI

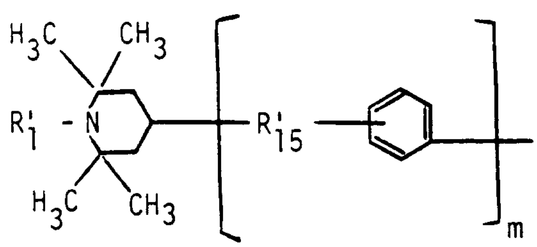

(XXVI),

| | |
|---|---|
| $R'_1$ | Wasserstoff, Acetyl oder Propionyl, |
| $R'_{15}$ | eine Gruppe der Formel $NH-$, $-NH-CO-$ oder $-NH-SO_2$ (die Aminogruppe an den Piperidylrest gebunden) |
| und m | 0 oder 1 bedeuten, dadurch gekennzeichnet, dass man 1 Mol 3,4,9,10-Perilentetracarbonsäure, oder eines ihrer funktionellen Säurederivate, mit 2 Mol einer Verbindung der Formel |

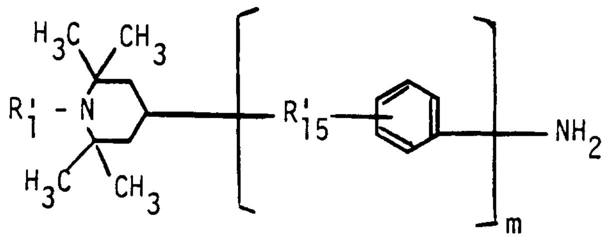

(XXVII)

kondensiert.

**13.** Verfahren zur Herstellung der Pigmentfarbstoffe der Formel XXVIII

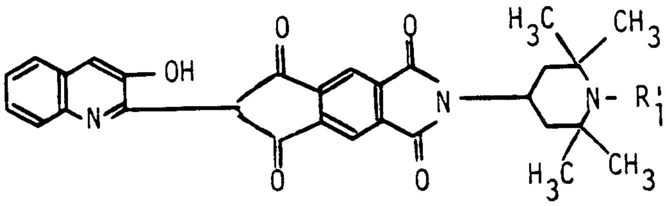

(XXVIII),

worin R'$_1$ Wasserstoff, Acetyl oder Propionyl bedeutet, dadurch gekennzeichnet, dass man ein Mol einer Verbindung der Formel XXIX

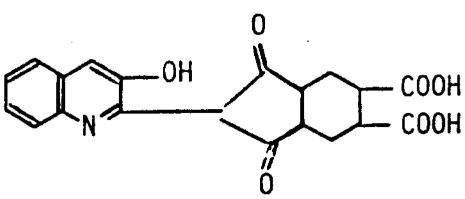

(XXIX),

oder eines ihrer funktionellen Säurederivate, vorzugsweise des Anhydrids dieser Dicarbonsäure, mit einem Mol einer Verbindung der Formel XXX

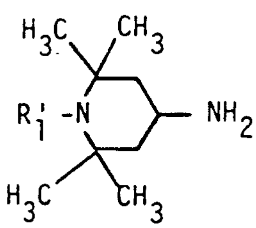

(XXX)

kondensiert.

**14.** Verfahren zur Herstellung der Disazopigmente der Formel XII

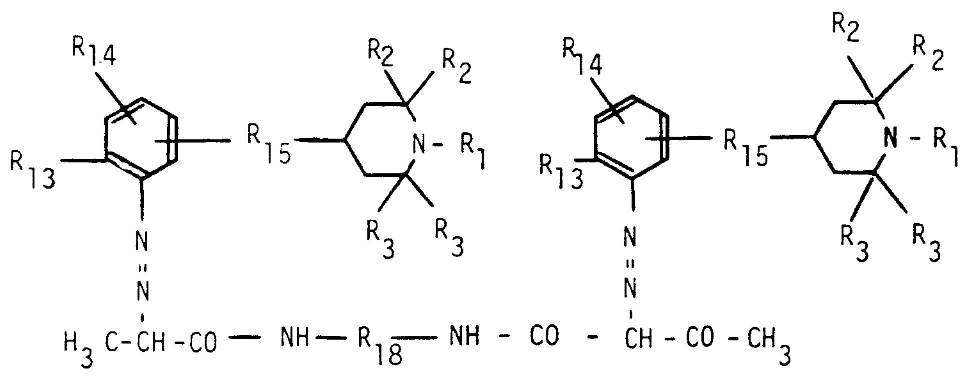

(XII),

| | |
|---|---|
| worin alle $R_1$ | Wasserstoff oder Acyl, |
| alle $R_2$ und alle $R_3$ | unabhängig voneinander $C_{1-5}$-Alkyl oder paarweise die $R_2$ und $R_3$ zusammen eine Gruppe der Formel $-(CH_2)_5-$, |
| alle $R_{13}$ | unabhängig voneinander Wasserstoff, Chlor, Brom, Methyl, $C_{1-2}$-Alkoxy oder $C_{1-4}$-Alkoxycarbonyl, |
| alle $R_{14}$ | unabhängig voneinander Wasserstoff, Chlor, Brom oder Methyl, |
| $R_{15}$ | eine Gruppe der Formel $-CO-NH-$, $-CO-O-$ oder $-SO_2-NH-$(die Aminogruppe, bzw. das Sauerstoffatom an den Piperidylrest gebunden) |
| und $R_{18}$ | ein benzolisches, naphthalinisches oder heterocyclischaromatisches Brükkenglied bedeuten, dadurch gekennzeichnet, dass man 2 Mol eines diazotierten Amins oder eines Gemisches solcher Amine, der Formel p |

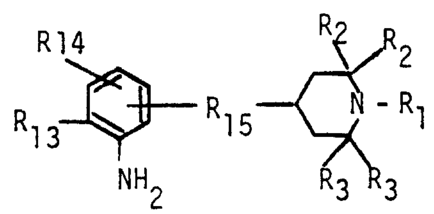

(p)

mit einem Mol einer Verbindung der Formel XIV

$H_3C-CO-CH_2-CO-NH-R_{18}-NH-CO-CH_2-CO-CH_3$ — (XIV)

kuppelt.

**15.** Verfahren zur Herstellung der Disazopigmente der Formel XII, gemäss Anspruch 14, dadurch gekennzeichnet, dass man ein Mol einer Disazodicarbon- oder Disazodisulfonsäureverbindung der Formel XVI

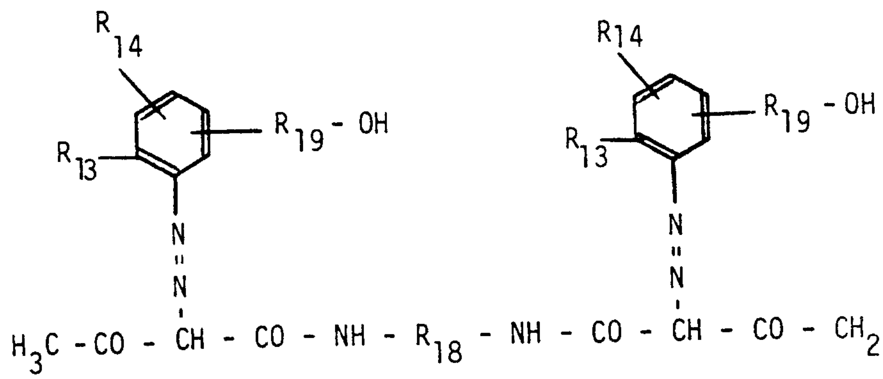

(XVI),

worin $R_{19}$ eine Carbonyl oder Sulfonylgruppe bedeutet, mit 2 Mol einer 4-Amino- oder 4-Hydroxyverbindung der Formel III'a

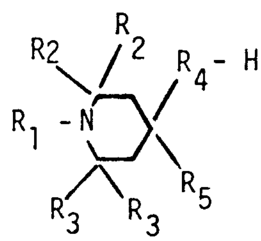

(III'a),

worin $R_4$ eine -NH- oder -O-Brücke und
$R_5$ Wasserstoff bedeuten, kondensiert.

**16.** Verfahren zur Herstellung der Disazopigmente der Formel XIII

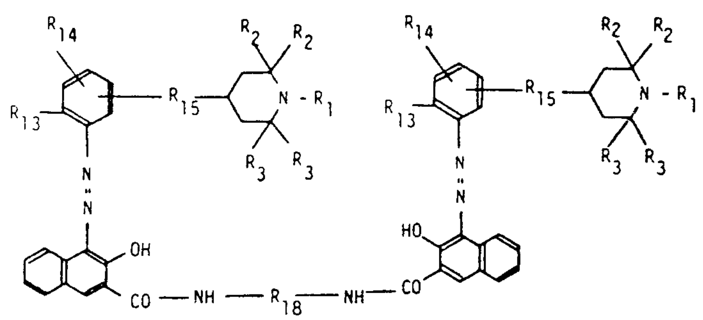

(XIII),

worin alle $R_1$ Wasserstoff oder Acyl,
alle $R_2$ und $R_3$ unabhängig voneinander $C_{1-5}$-Alkyl oder paarweise die $R_2$ und $R_3$ zusammen, eine Gruppe der Formel $-(CH_2)_5-$,
alle $R_{13}$ unabhängig voneinander Wasserstoff, Chlor, Brom, Methyl, $C_{1-2}$-Alkoxy oder $C_{1-4}$-Alkoxycarbonyl,
alle $R_{14}$ unabhängig voneinander Wasserstoff, Chlor, Brom oder Methyl,
$R_{15}$ eine Gruppe der Formel -CO-NH-, -CO-O- oder $-SO_2$-NH-(die Aminogruppe, bzw. das Sauerstoffatom an den Piperidylrest gebunden)
und $R_{18}$ ein benzolisches, naphthalinisches oder heterocyclisch aromatisches Brückenglied bedeuten,

dadurch gekennzeichnet, dass man 2 Mol eines diazotierten Amins der Formel p

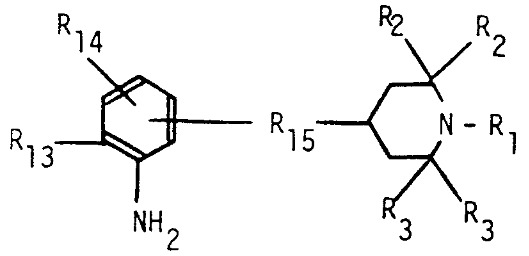

(p)

mit 1 Mol einer Verbindung der Formel XV

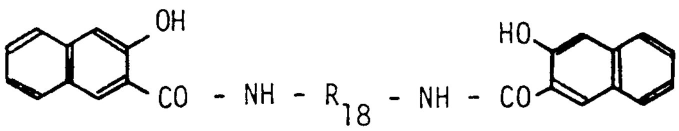

(XV)

kuppelt.

**17.** Verfahren zur Herstellung der Disazopigmente der Formel XIII, gemäss Anspruch 16, dadurch gekennzeichnet, dass man ein Mol einer Disazodicarbon- oder Disazodisulfonsäure der Formel XVII

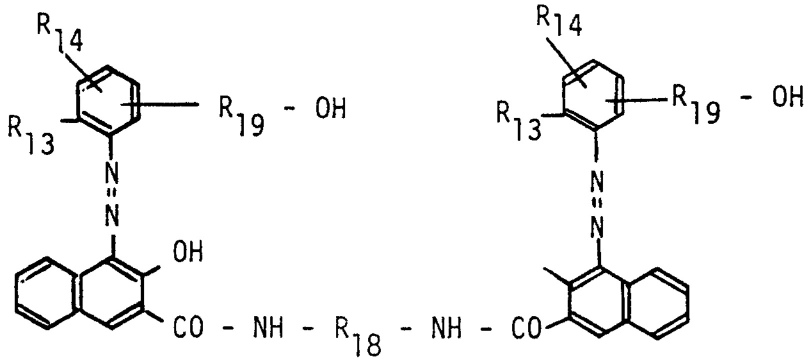

(XVII),

worin $R_{19}$ eine Carbonyl- oder Sulfonylgruppe bedeutet, mit 2 Mol einer 4-Amino- oder 4-Hydroxypiperidinverbindung der Formel III'a

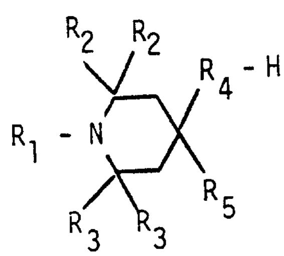

(III'a),

worin $R_4$ eine -NH- oder -O-Brücke
und $R_5$ Wasserstoff bedeuten,
kondensiert.

**18.** Verfahren zur Herstellung der Disazopigmente der Formel XIII, gemäss Anspruch 16, dadurch gekennzeichnet, dass man 2 Mol einer Azocarbonsäureverbindung der Formel XVIII

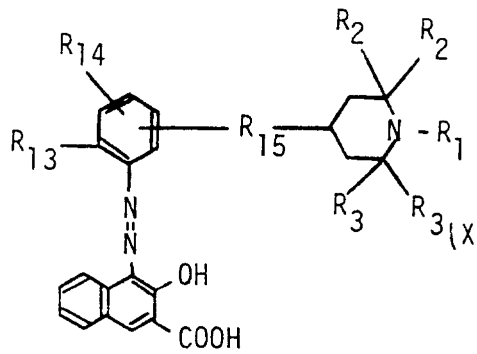

(XVIII)

oder eines funktionellen Säurederivats, vorzugsweise dem Säurechlorid dieser Verbindung, mit einem Mol eines Diamins der Formel XIX

$H_2N - R_{18} - NH_2$ (XIX)

kondensiert.

**19.** Verfahren zur Herstellung der Monoazopigmente der Formel XX

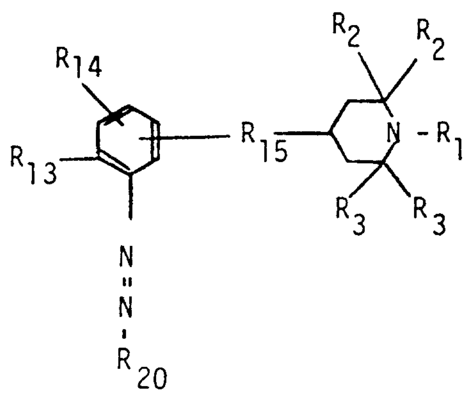

(XX),

| | |
|---|---|
| worin $R_1$ | Wasserstoff oder Acyl, |
| alle $R_2$ | und alle $R_3$ unabhängig voneinander $C_{1-5}$-Alkyl oder paarweise die $R_2$ und $R_3$ zusammen eine Gruppe der Formel $-(CH_2)_5-$, |
| alle $R_{13}$ | unabhängig voneinander Wasserstoff, Chlor, Brom, Methyl, $C_{1-2}$-Alkoxy oder $C_{1-4}$-Alkoxycarbonyl, |
| alle $R_{14}$ | unabhängig voneinander Wasserstoff, Chlor, Brom oder Methyl, |
| $R_{15}$ | eine Gruppe der Formel $-CO-NH-$, $-CO-O-$ oder $-SO_2-NH-$ (die Aminogruppe, bzw. das Sauerstoffatom, am den Piperidylrest gebunden |
| und $R_{20}$ | eine Gruppe der Formel |

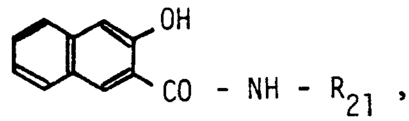

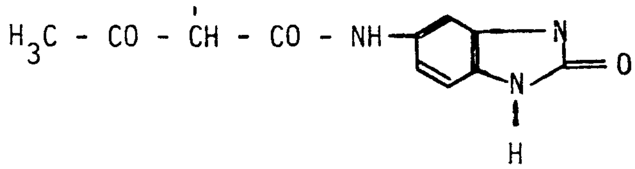

oder

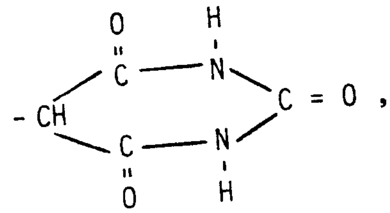

und $R_{21}$ Benzimidazolonyl-5 oder gegebenenfalls bis zu drei Substituenten aus der Gruppe Chlor, Brom, Methyl, Methoxy oder Aethoxy oder eine Benzoylaminogruppe tragendes Phenyl

bedeuten, dadurch gekennzeichnet, dass man ein Mol eines diazotierten Amins der Formel p

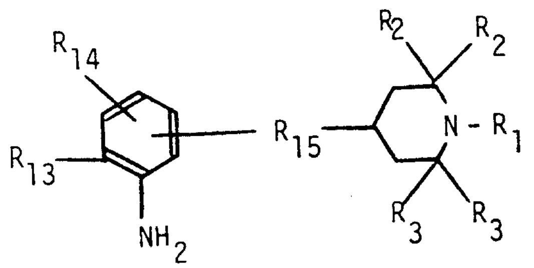 (p)

mit einem Mol einer Verbindung der Formel XXI

$R_{20} - H$ (XXI)

kuppelt.

**20.** Verfahren zur Herstellung der Monoazopigmente der Formel XX gemäss Anspruch 19, dadurch gekennzeichnet, dass man 1 Mol einer Verbindung der Formel III'a

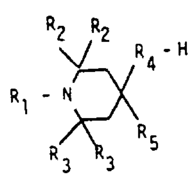 (III'a),

worin $R_4$ eine -NH- oder -O-Brücke und
$R_5$ Wasserstoff bedeuten,

mit 1 Mol einer Verbindung der Formel XXII

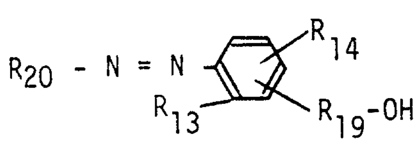 (XXII)

kondensiert.

**21.** Verfahren zur Herstellung der Disazopigmente der Formel XXIII

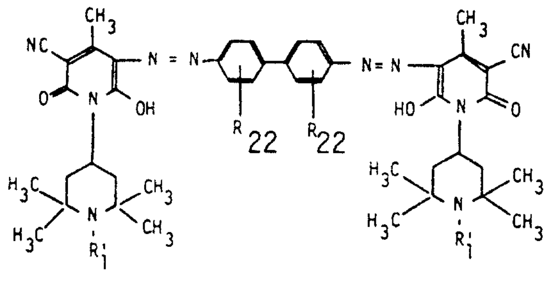

worin die beiden $R'_1$ Wasserstoff oder $C_{1-2}$ – Alkylcarbonyl, insbesondere Wasserstoff und die beiden $R_{22}$ Chlor, Brom, Methyl, Methoxy oder Aethoxy bedeuten, dadurch gekennzeichnet, dass man 1 Mol eines tetrazotierten Diamins der Formel XXIV

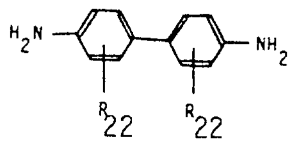

(XXIV)

mit zwei Mol einer Verbindung der Formel XXV

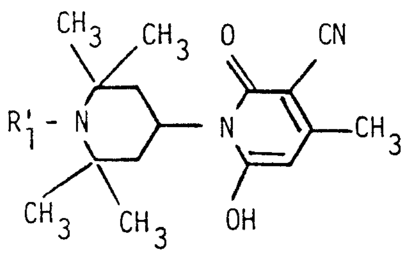

(XXV),

kuppelt.

**22.** Verfahren zum Färben von Kunststoffmassen und Lacken, dadurch gekennzeichnet, dass man einen oder mehrere Pigmentfarbstoffe verwendet, die im Molekül eine oder mehrere in 2 – und 6 – Stellung je zwei Substituenten tragende Piperidylgruppen enthalten.

**Patentansprüche für folgende Vertragsstaaten : AT, ES**

**1.** Verfahren zur Herstellung der Pigmentfarbstoffe der Formel IV

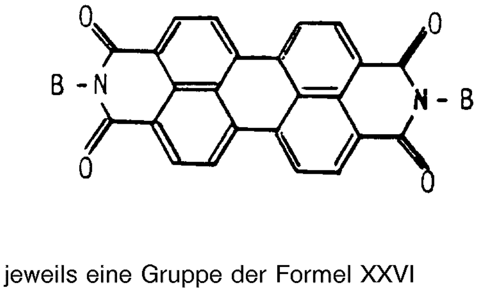

(IV),

worin B jeweils eine Gruppe der Formel XXVI

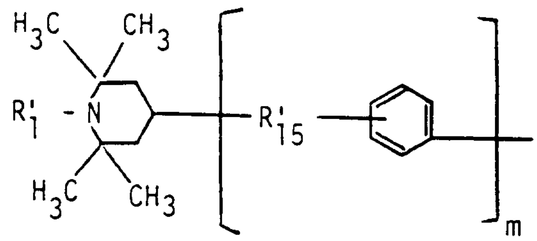

(XXVI),

R'₁ Wasserstoff, Acetyl oder Propionyl,

R'₁₅ eine Gruppe der Formel NH–, –NH–CO– oder –NH–SO₂ (die Aminogruppe an den Piperidylrest gebunden)

und m 0 oder 1 bedeuten, dadurch gekennzeichnet, dass man 1 Mol 3,4,9,10-Perilentetracarbonsäure, oder eines ihrer funktionellen Säurederivate, mit 2 Mol einer Verbindung der Formel

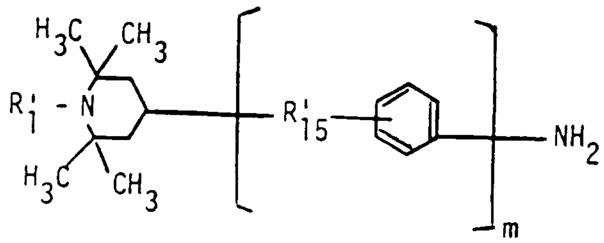

(XXVII)

kondensiert.

**2.** Verfahren zur Herstellung der Pigmentfarbstoffe der Formel XXVIII

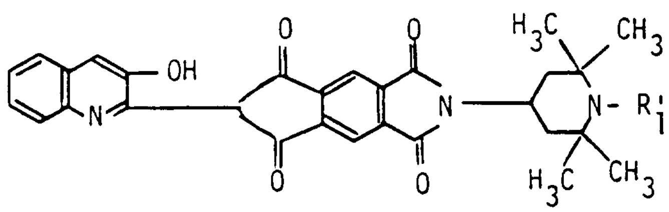

(XXVIII),

worin $R'_1$ Wasserstoff, Acetyl oder Propionyl bedeutet, dadurch gekennzeichnet, dass man ein Mol einer Verbindung der Formel XXIX

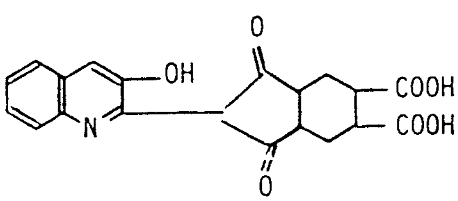

(XXIX),

oder eines ihrer funktionellen Säurederivate, vorzugsweise des Anhydrids dieser Dicarbonsäure, mit einem Mol einer Verbindung der Formel XXX

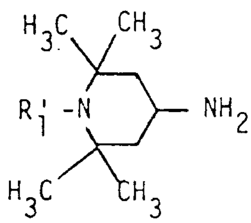

(XXX)

kondensiert.

3. Verfahren zur Herstellung der Disazopigmente der Formel XII

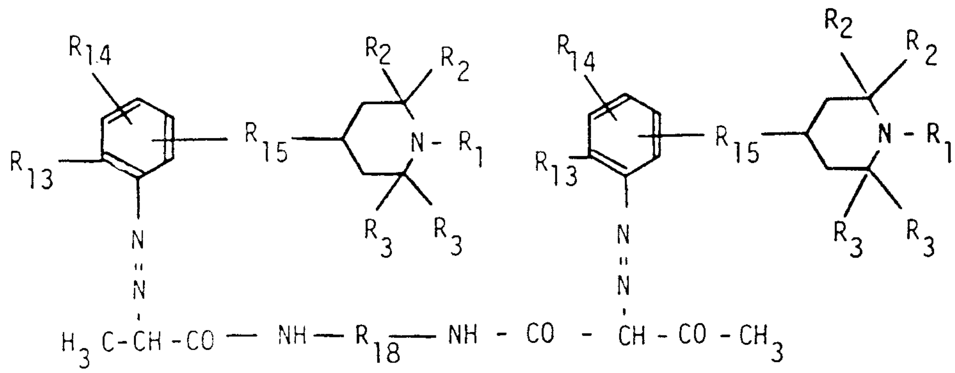

(XII),

| | |
|---|---|
| worin alle $R_1$ | Wasserstoff oder Acyl, |
| alle $R_2$ und alle $R_3$ | unabhängig voneinander $C_{1-5}$-Alkyl oder paarweise die $R_2$ und $R_3$ zusammen eine Gruppe der Formel $-(CH_2)_5-$, |
| alle $R_{13}$ | unabhängig voneinander Wasserstoff, Chlor, Brom, Methyl, $C_{1-2}$-Alkoxy oder $C_{1-4}$-Alkoxycarbonyl, |
| alle $R_{14}$ | unabhängig voneinander Wasserstoff, Chlor, Brom oder Methyl, |
| $R_{15}$ | eine Gruppe der Formel $-CO-NH-$, $-CO-O-$ oder $-SO_2-NH-$(die Aminogruppe, bzw. das Sauerstoffatom an den Piperidylrest gebunden) |
| und $R_{18}$ | ein benzolisches, naphthalinisches oder heterocyclischaromatisches Brükkenglied bedeuten, dadurch gekennzeichnet, dass man 2 Mol eines diazotierten Amins oder eines Gemisches solcher Amine, der Formel p |

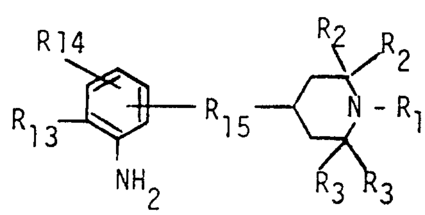

(p)

mit einem Mol einer Verbindung der Formel XIV

$H_3C-CO-CH_2-CO-NH-R_{18}-NH-CO-CH_2-CO-CH_3$ - (XIV)

kuppelt.

4. Verfahren zur Herstellung der Disazopigmente der Formel XII, gemäss Anspruch 3, dadurch gekennzeichnet, dass man ein Mol einer Disazodicarbon- oder Disazodisulfonsäureverbindung der Formel XVI

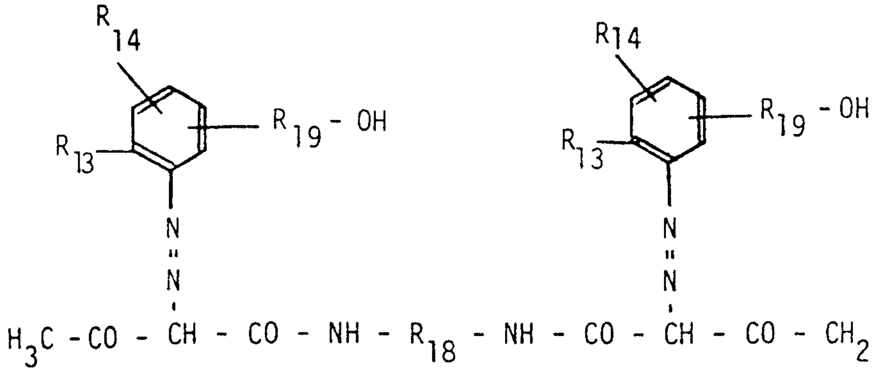

(XVI),

worin $R_{19}$ eine Carbonyl oder Sulfonylgruppe bedeutet, mit 2 Mol einer 4-Amino- oder 4-Hydroxyverbindung der Formel III'a

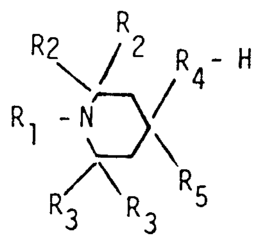

(III'a),

worin $R_4$ eine -NH- oder -O-Brücke und
$R_5$ Wasserstoff bedeuten, kondensiert.

**5.** Verfahren zur Herstellung der Disazopigmente der Formel XIII

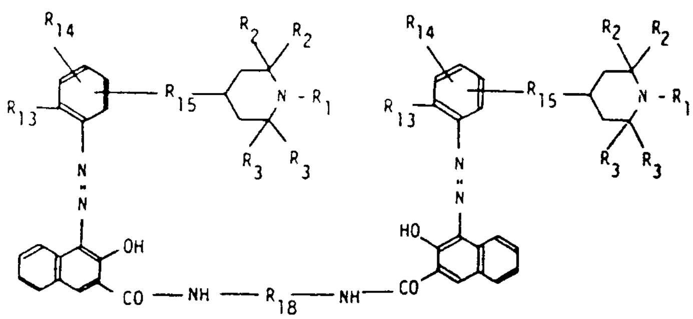

(XIII),

worin alle $R_1$ Wasserstoff oder Acyl,
alle $R_2$ und $R_3$ unabhängig voneinander $C_{1-5}$-Alkyl oder paarweise die $R_2$ und $R_3$ zusammen, eine Gruppe der Formel $-(CH_2)_5-$,
alle $R_{13}$ unabhängig voneinander Wasserstoff, Chlor, Brom, Methyl, $C_{1-2}$-Alkoxy oder $C_{1-4}$-Alkoxycarbonyl,
alle $R_{14}$ unabhängig voneinander Wasserstoff, Chlor, Brom oder Methyl,
$R_{15}$ eine Gruppe der Formel $-CO-NH-$, $-CO-O-$ oder $-SO_2-NH-$(die Aminogruppe, bzw. das Sauerstoffatom an den Piperidylrest gebunden)
und $R_{18}$ ein benzolisches, naphthalinisches oder heterocyclisch aromatisches Brückenglied bedeuten,

dadurch gekennzeichnet, dass man 2 Mol eines diazotierten Amins der Formel p

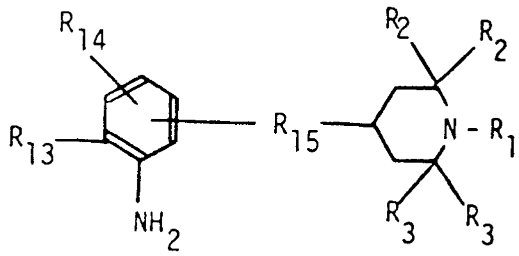

(p)

mit 1 Mol einer Verbindung der Formel XV

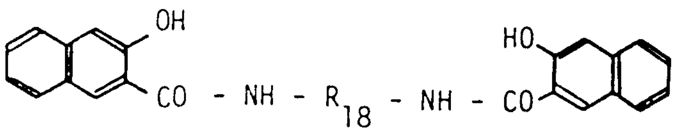

(XV)

kuppelt.

6. Verfahren zur Herstellung der Disazopigmente der Formel XIII, gemäss Anspruch 5, dadurch gekennzeichnet, dass man ein Mol einer Disazodicarbon- oder Disazodisulfonsäure der Formel XVII

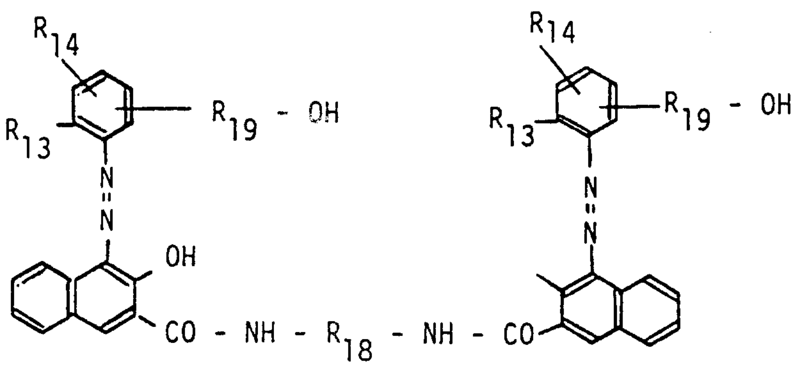

(XVII),

worin $R_{19}$ eine Carbonyl- oder Sulfonylgruppe bedeutet, mit 2 Mol einer 4-Amino- oder 4-Hydroxypiperidinverbindung der Formel III'a

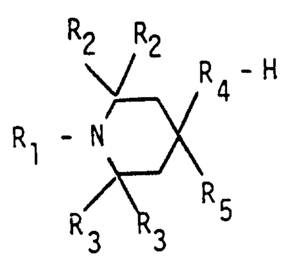

(III'a),

worin $R_4$ eine -NH- oder -O-Brücke
und $R_5$ Wasserstoff bedeuten,
kondensiert.

7. Verfahren zur Herstellung der Disazopigmente der Formel XIII, gemäss Anspruch 5, dadurch gekennzeichnet, dass man 2 Mol einer Azocarbonsäureverbindung der Formel XVIII

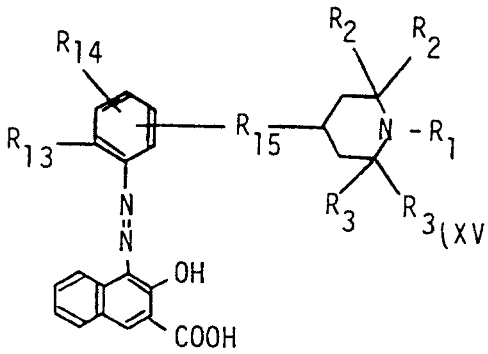

(XVIII)

oder eines funktionellen Säurederivats, vorzugsweise dem Säurechlorid dieser Verbindung, mit einem Mol eines Diamins der Formel XIX

$H_2N - R_{18} - NH_2$ (XIX)

kondensiert.

**8.** Verfahren zur Herstellung der Monoazopigmente der Formel XX

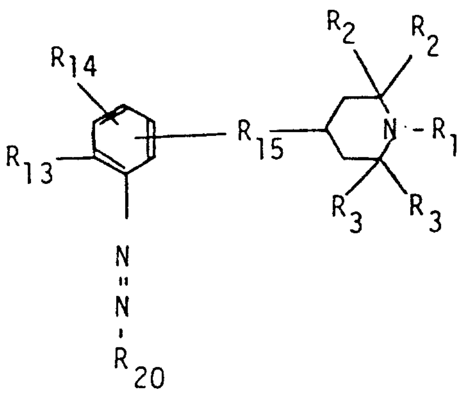

(XX),

| | |
|---|---|
| worin $R_1$ | Wasserstoff oder Acyl, |
| alle $R_2$ und alle $R_3$ | unabhängig voneinander $C_{1-5}$-Alkyl oder paarweise die $R_2$ und $R_3$ zusammen eine Gruppe der Formel $-(CH_2)_5-$, |
| alle $R_{13}$ | unabhängig voneinander Wasserstoff, Chlor, Brom, Methyl, $C_{1-2}$-Alkoxy oder $C_{1-4}$-Alkoxycarbonyl, |
| alle $R_{14}$ | unabhängig voneinander Wasserstoff, Chlor, Brom oder Methyl, |
| $R_{15}$ | eine Gruppe der Formel $-CO-NH-$, $-CO-O-$ oder $-SO_2-NH-$ (die Aminogruppe, bzw. das Sauerstoffatom, am den Piperidylrest gebunden |
| und $R_{20}$ | eine Gruppe der Formel |

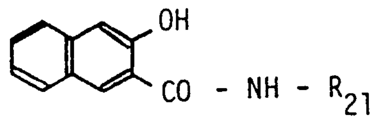,

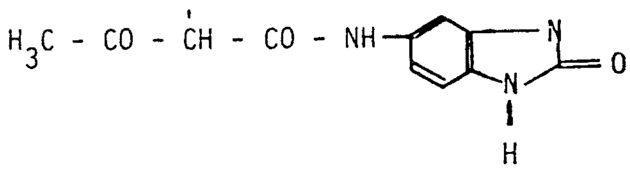

oder

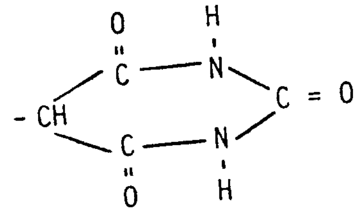,

und $R_{21}$ Benzimidazolonyl – 5 oder gegebenenfalls bis zu drei Substituenten aus der Gruppe Chlor, Brom, Methyl, Methoxy oder Aethoxy oder eine Benzoylaminogruppe tragendes Phenyl

bedeuten, dadurch gekennzeichnet, dass man ein Mol eines diazotierten Amins der Formel p

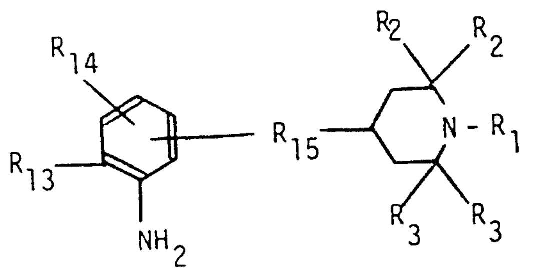 (p)

mit einem Mol einer Verbindung der Formel XXI

$R_{20}$ – H (XXI)

kuppelt.

**9.** Verfahren zur Herstellung der Monoazopigmente der Formel XX gemäss Anspruch 8, dadurch gekennzeichnet, dass man 1 Mol einer Verbindung der Formel III'a

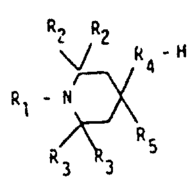 (III'a),

worin $R_4$ eine – NH – oder – O – Brücke und
$R_5$ Wasserstoff bedeuten,

mit 1 Mol einer Verbindung der Formel XXII

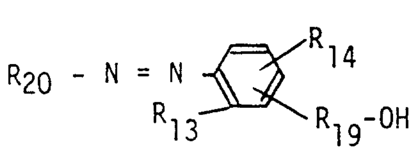 (XXII)

kondensiert.

**10.** Verfahren zur Herstellung der Disazopigmente der Formel XXIII

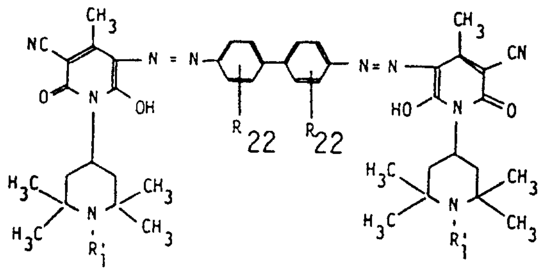

worin die beiden $R'_1$ Wasserstoff oder $C_{1-2}$-Alkylcarbonyl, insbesondere Wasserstoff und die beiden $R_{22}$ Chlor, Brom, Methyl, Methoxy oder Aethoxy bedeuten, dadurch gekennzeichnet, dass man 1 Mol eines tetrazotierten Diamins der Formel XXIV

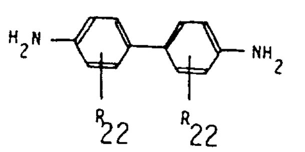

(XXIV)

mit zwei Mol einer Verbindung der Formel XXV

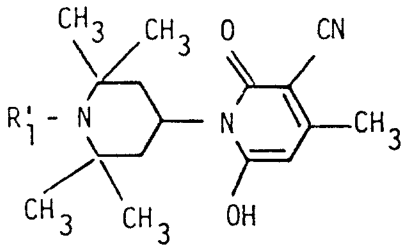

(XXV),

kuppelt.

**11.** Verfahren zum Färben von Kunststoffmassen und Lacken, dadurch gekennzeichnet, dass man einen oder mehrere Pigmentfarbstoffe verwendet, die im Molekül eine oder mehrere in 2- und 6-Stellung je zwei Substituenten tragende Piperidylgruppen enthalten.

**Claims**

**Claims for the following Contracting States : BE, CH, LI, DE, FR, GB, IT, NL, SE**

1. Pigment dyes, which contain per molecule one or several 2,2,6,6-tetraalkylpiperidylgroups.

2. The pigment dyes according to claim 1, of formula I

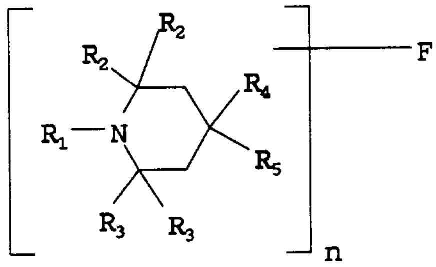

(I)

| | |
|---|---|
| wherein $R_1$ | is hydrogen, $C_{1-8}$-alkyl, $C_{3-10}$-alkenyl, phenyl, phenyl-$C_{1-4}$-alkyl or acyl, |
| the two $R_2$ and the two $R_3$, | independently of one another, are $C_{1-5}$-alkyl, or the two $R_2$ and/or the two $R_3$ together are a group of formula $-(CH_2)_5-$, |
| $R_4$ | is the direct bond or a bridging member, which optionally together with $R_5$ forms an iso- or heterocyclic ring, |
| $R_5$ | is hydrogen, $C_{1-2}$-alkyl or together with $R_4$ are the atoms necessary to form an iso- or heterocyclic ring system, |
| F | is the radical of a pigment dye, and |
| n | is 1, 2, 3 or 4. |

3. The pigment dyes according to claim 1, of formula II

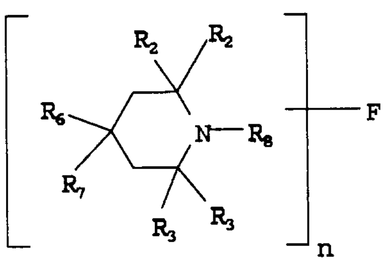

(II)

wherein

| | |
|---|---|
| the two $R_2$ and the two $R_3$, | independently of one another, are $C_{1-5}$-alkyl or the two $R_2$ and/or the two $R_3$ together are a group of formula $-(CH_2)_5-$, |
| $R_6$ | is hydrogen, or hydroxy or amino - both optionally further substituted, or with $R_7$ is an iso- or heterocyclic ring system, |
| $R_7$ | is hydrogen, $C_{1-2}$-alkyl, or together with $R_6$ is the atomic groups necessary to form an iso- or heterocyclic ring system, |
| $R_8$ | is the direct bond or a bridging member, |
| F | is the radical of a pigment dye, and |
| n | is 1, 2 or 3. |

4. The pigment dyes according to claim 2 or 3, wherein F is the radical of an azo or disazo dye.

**5.** The pigment dyes according to one of claims 1 to 2, of formula IV

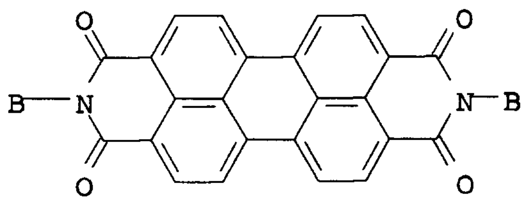

(IV)

wherein B is respectively a group of formula XXVI

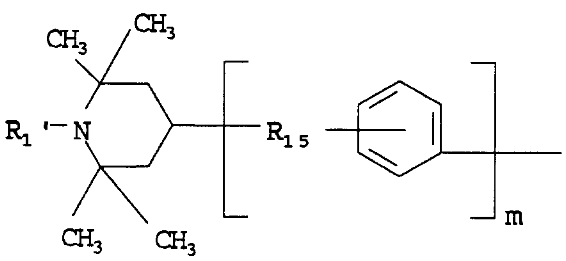

(XXVI)

R'$_1$ is hydrogen, acetyl or propionyl,
R'$_{15}$ is a group of formula $-NH$, $-NH-CO-$ or $-NH-SO_2-$ (the amino group being attached to the piperidyl radical)
and m is 0 or 1.

**6.** The pigment dyes according to one of claims 1 to 2, of formula XXVIII

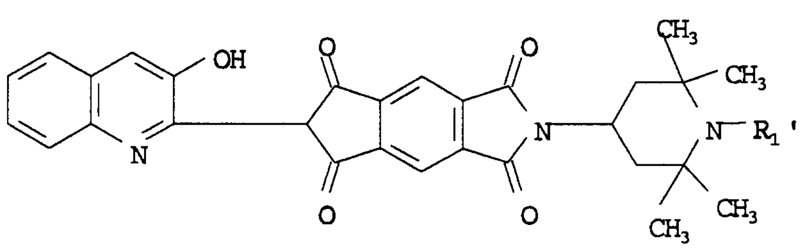

(XXVIII)

wherein R$_1$ is hydrogen, acetyl or propionyl, preferably hydrogen.

**7.** The disazo pigments according to one of claims 1 to 2, of formula XII or XIII

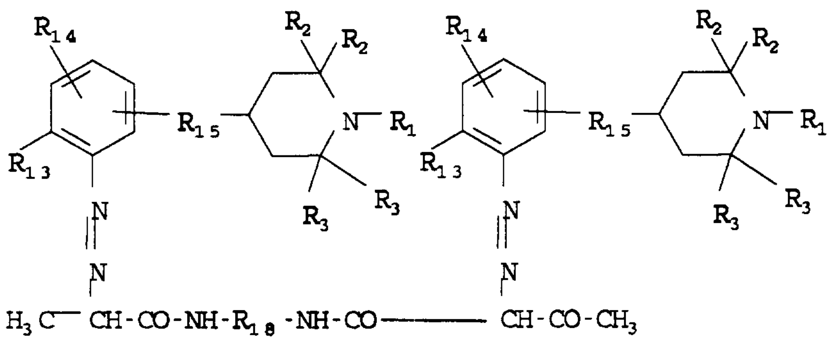

(XII)

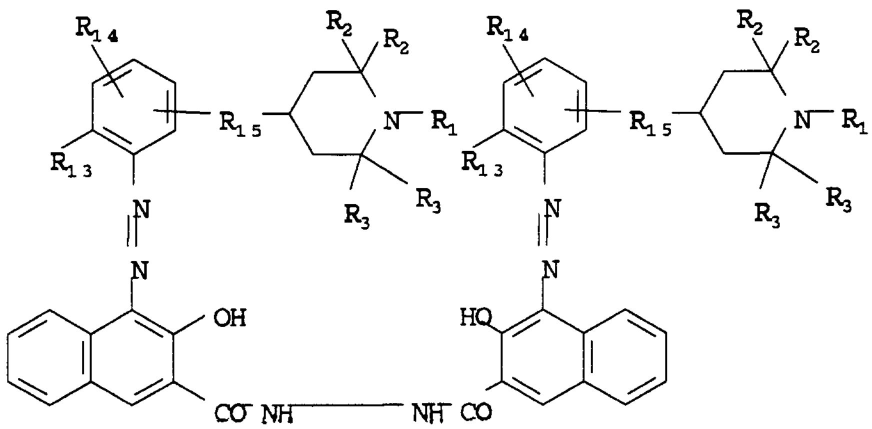

(XIII)

wherein (in both formulae)

| | |
|---|---|
| all $R_1$s | are hydrogen or acyl, |
| all $R_2$s and all $R_3$s, | independently of one another, are $C_{1-5}$-alkyl, or in pairs the $R_2$ and $R_3$ together are a group of formula $-(CH_2)_5-$, |
| all $R_{13}$s | independently of one another, are hydrogen, chlorine, bromine, methyl, $C_{1-2}$-alkoxy or $C_{1-4}$-alkoxycarbonyl, |
| all $R_{14}$s | independently of one another, are hydrogen, chlorine, bromine or methyl, |
| $R_{15}$ | is a group of formula $-CO-NH$, $-CO-O-$ or $-SO_2-NH-$ (the amino group, resp. the oxygen atom being attached to the piperidyl radical) |
| and $R_{18}$ | is a benzenic, naphthalenic or heterocyclic-aromatic bridging member. |

**8.** The monoazo pigments according to one of claims 1 to 2, of formula XX

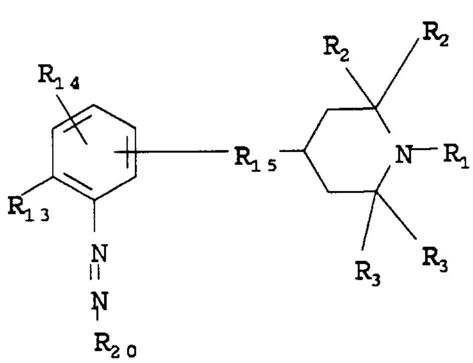

(XX)

wherein $R_1$ is hydrogen or acyl,

all $R_2$s and all $R_3$s, independently of one another, are $C_{1-5}$-alkyl, or in pairs the $R_2$ and $R_3$ together are a group of formula $-(CH_2)_5-$,

all $R_{13}$s independently of one another, are hydrogen, chlorine, bromine, methyl, $C_{1-2}$-alkoxy or $C_{1-4}$-alkoxycarbonyl,

all $R_{14}$s independently of one another, are hydrogen, chlorine, bromine or methyl,

$R_{15}$ is a group of formula $-CO-NH-$, $-CO-O-$or $-SO_2-NH-$ (the amino group, resp. the oxygen atom being attached to the piperidyl radical)

and $R_{20}$ is a group of formula

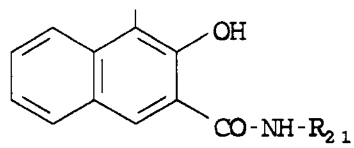

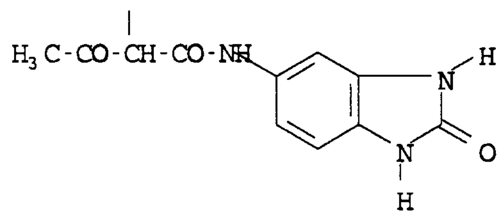

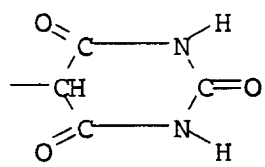

and $R_{21}$ is benzimidazolonyl-5, or phenyl which optionally bears up to three substituents from the group chlorine, bromine, methyl, methoxy or ethoxy, or phenyl bearing a benzoylamino group.

**9.** The disazo pigments of formula XXIII

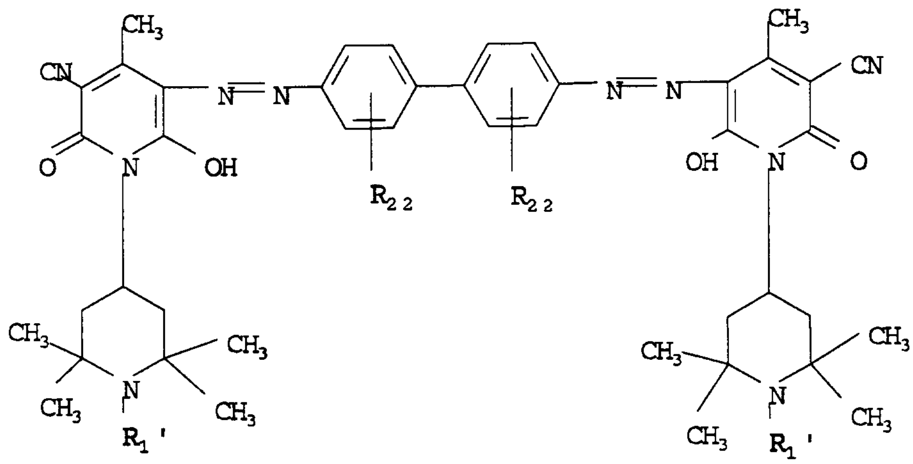

(XXIII)

wherein the two $R'_1$ are hydrogen or $C_{1-2}$-alkylcarbonyl, especially hydrogen, and the two $R_{22}$ are

chlorine, bromine, methyl, methoxy or ethoxy, especially chlorine.

**10.** The use of the pigment dyes according to one of the preceding claims for dyeing plastic masses and lacquer finishes.

**11.** The compounds of formula p

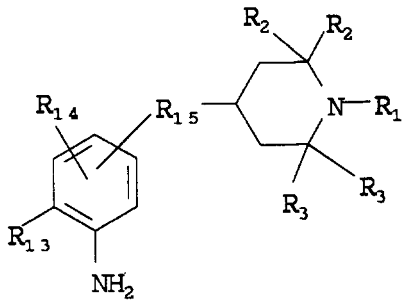

(p),

| | |
|---|---|
| wherein $R_1$ | is hydrogen, $C_{1-8}$-alkyl, $C_{3-10}$-alkenyl, phenyl, phenyl-$C_{1-4}$-alkyl or acyl, |
| the two $R_2$ and the two $R_3$, | independently of one another, are $C_{1-5}$-alkyl or the two $R_2$ and/or the two $R_3$ together are a group of formula $-(CH_2)_5-$, |
| $R_{13}$ | hydrogen, chlorine, bromine, methyl, $C_{1-2}$-alkoxy or $C_{1-4}$-alkoxycarbonyl, |
| $R_{14}$ | is hydrogen, chlorine, bromine or methyl, preferably hydrogen or chlorine, |
| and $R_{15}$ | is a group of formula $-CO-NH-$, $-CO-O-$ or $-SO_2-NH-$ (the amino group, resp. the oxygen atom being attached to the piperidyl radical). |

**12.** Process for the production of the pigment dyes of formula IV

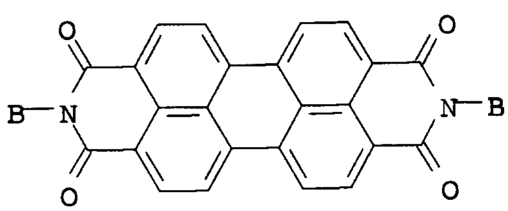

(IV),

wherein B is respectively a group of formula XXVI

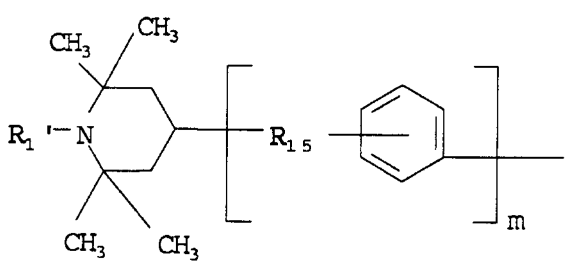

(XXVI),

| | |
|---|---|
| R'$_1$ | is hydrogen, acetyl or propionyl, |
| R'$_{15}$ | is a group of formula NH-, $-NH-CO-$ or $-NH-SO_2$ (the amino group being attached |

to the piperidyl radical)

and m is 0 or 1,

characterized in that 1 mol of 3,4,9,10-perylenetetracarboxylic acid, or 1 mol of one of its functional acid derivatives, is condensed with 2 mols of a compound of formula XXVII

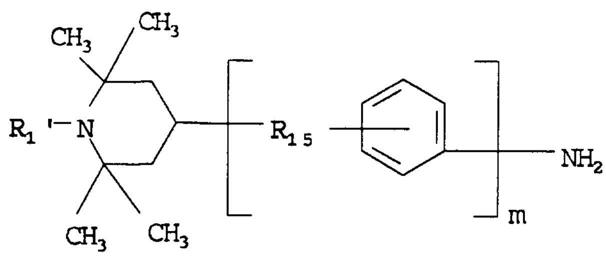

(XXVII).

**13.** Process for the production of the pigment dyes of formula XXVIII

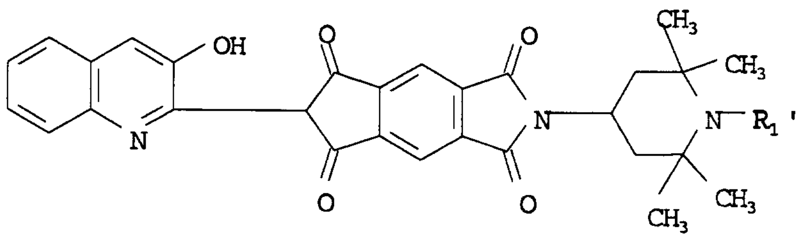

(XXVIII),

wherein $R'_1$ is hydrogen, acetyl or propionyl,
characterized in that one mol of a compound of formula XXIX

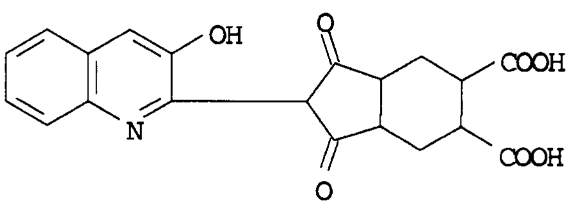

(XXIX)

or one mol of one of its functional acid derivatives, preferably the anhydride of this dicarboxylic acid, is condensed with one mol of a compound of formula XXX

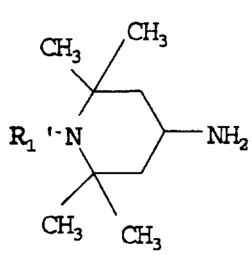

(XXX).

**14.** Process for the production of the disazo pigments of formula XII

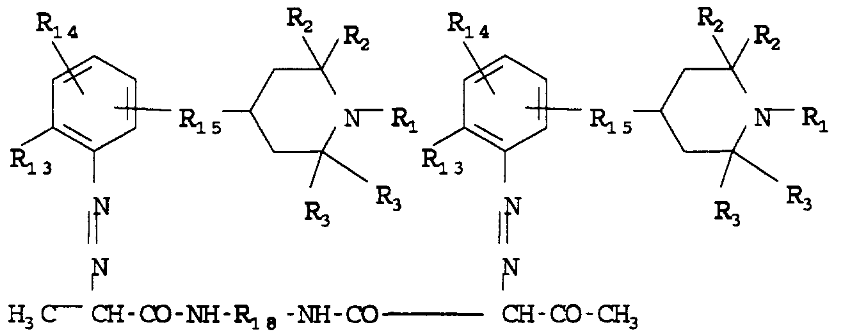

(XII),

wherein

| | |
|---|---|
| all $R_1$s | are hydrogen or acyl, |
| all $R_2$s and all $R_3$s, | independently of one another, are $C_{1-5}$-alkyl, or in pairs the $R_2$ and $R_3$ together are a group of formula $-(CH_2)_5-$, |
| all $R_{13}$s | independently of one another, are hydrogen, chlorine, bromine, methyl, $C_{1-2}$-alkoxy or $C_{1-4}$-alkoxycarbonyl, |
| all $R_{14}$s | independently of one another, are hydrogen, chlorine, bromine or methyl, |
| $R_{15}$ | is a group of formula $-CO-NH$, $-CO-O-$ or $-SO_2-NH-$ (the amino group, resp. the oxygen atom being attached to the piperidyl radical) |
| and $R_{18}$ | is a benzenic, naphthalenic or heterocyclic-aromatic bridging member |

characterized in that 2 mols of a diazotised amine or 2 mols of a mixture of such amines, of formula p

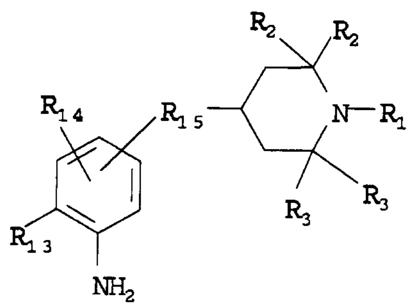

(p)

are coupled with one mol of a compound of formula XIV

$$H_3C-CO-CH_2-CO-NH-R_{18}-NH-CO-CH_2-CO-CH_3 \quad (XIV).$$

**15.** Process for the production of the disazo pigments of formula XII according to claim 14, characterized in that one mol of a disazodicarboxylic or disazodisulphonic acid compound of formula XVI

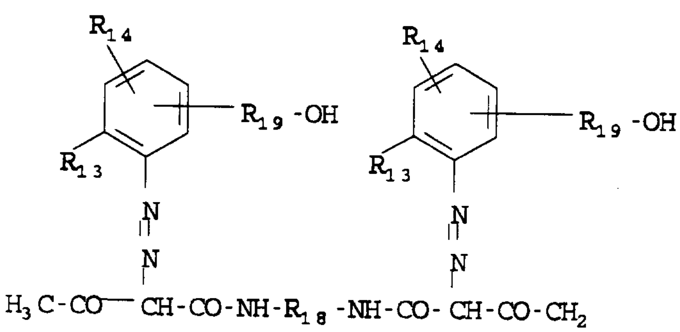

(XVI),

wherein $R_{19}$ is a carbonyl or sulphonyl group, is condensed with 2 mols of a 4-amino or 4-hydroxy compound of formula III'a

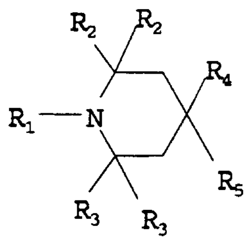

(III'a),

wherein $R_4$ is a -NH- or -O-bridge and
$R_5$ is hydrogen.

**16.** Process for the production of the disazo pigments of formula XIII

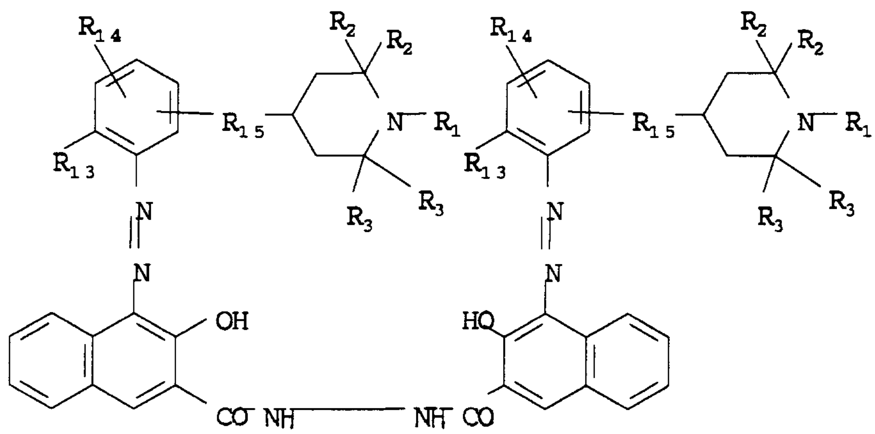

(XIII),

wherein

| | |
|---|---|
| all $R_1$s | are hydrogen or acyl, |
| all $R_2$s and $R_3$s, | independently of one another, are $C_{1-5}$-alkyl, or in pairs the $R_2$ and $R_3$ together are a group of formula $-(CH_2)_5-$, |
| all $R_{13}$s | independently of one another, are hydrogen, chlorine, bromine, methyl, $C_{1-2}$-alkoxy or $C_{1-4}$-alkoxycarbonyl, |
| all $R_{14}$s | independently of one another, are hydrogen, chlorine, bromine or methyl, |
| $R_{15}$ | is a group of formula -CO-NH', -CO-O- or - $SO_2$-NH- (the amino group, resp. the oxygen atom being attached to the piperidyl radical) |
| and $R_{18}$ | is a benzenic, naphthalenic or heterocyclic-aromatic bridging member characterized in that 2 mols of a diazotised amine of formula p |

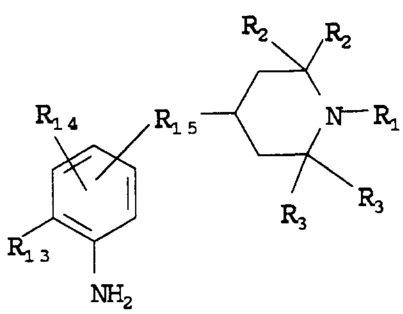

(p)

are coupled with 1 mol of a compound of formula XV

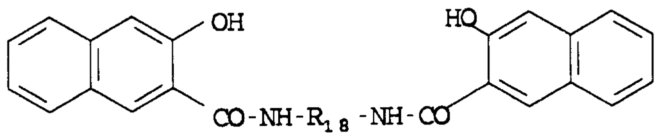

(XV).

**17.** Process for the production of the disazo pigments of formula XIII according to claim 16, characterized in that one mol of a disazodicarboxylic or disazodisulphonic acid of formula XVII

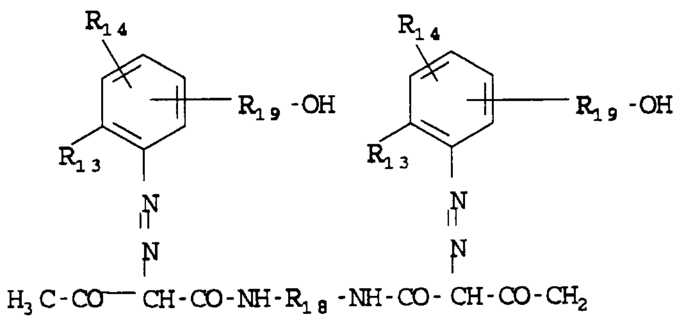

(XVII),

wherein $R_{19}$ is a carbonyl or sulphonyl group, is condensed with 2 mols of a 4-amino-or 4-hydroxypiperidine compound of formula III'a

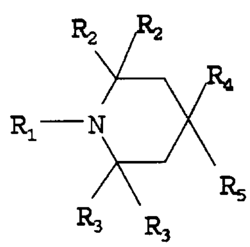

(III'a)

wherein $R_4$ is a -NH- or -O-bridge and $R_5$ is hydrogen.

**18.** Process for the production of the disazo pigments of formula XIII according to claim 16, characterized in that 2 mols of an azocarboxylic acid compound of formula XVIII

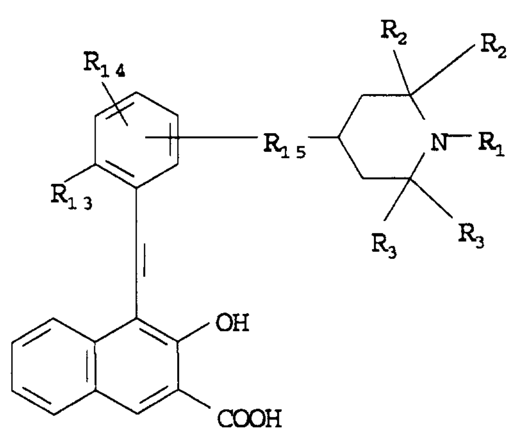

(XVIII)

or 2 mols of a functional acid derivative, preferably the acid chloride of this compound, are condensed with one mol of a diamine of formula XIX

$H_2N - R_{18} - NH_2$ (XIX).

**19.** Process for the production of the monoazo pigments of formula XX

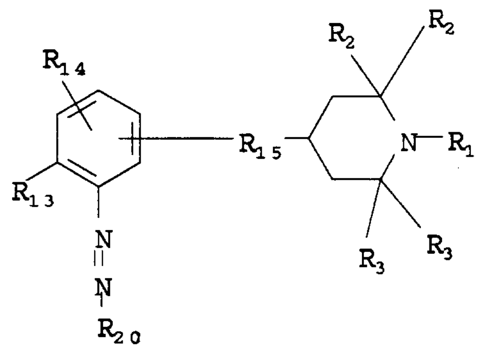

(XX),

| | |
|---|---|
| wherein $R_1$ | is hydrogen or acyl, |
| all $R_2$s and all $R_3$s, | independently of one another, are $C_{1-5}$-alkyl, or in pairs the $R_2$ and $R_3$ together are a group of formula $-(CH_2)_5-$, |
| all $R_{13}$s | independently of one another, are hydrogen, chlorine, bromine, methyl, $C_{1-2}$-alkoxy or $C_{1-4}$-alkoxycarbonyl, |
| all $R_{14}$s | independently of one another, are hydrogen, chlorine, bromine or methyl, |
| $R_{15}$ | is a group of formula $-CO-NH-$, $-CO-O-$or $-SO_2-NH-$ (the amino group, resp. the oxygen atom being attached to the piperidyl radical) |
| and $R_{20}$ | is a group of formula |

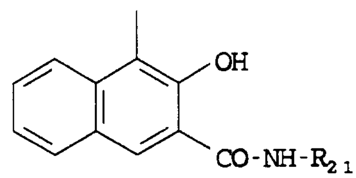

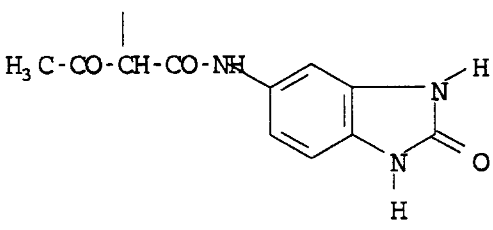

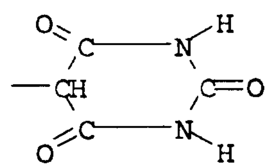

and $R_{21}$ is benzimidazolonyl-5, or phenyl which optionally bears up to three substituents from the group chlorine, bromine, methyl, methoxy or ethoxy, or phenyl which bears a benzoylamino group

characterized in that one mol of a diazotised amine of formula p

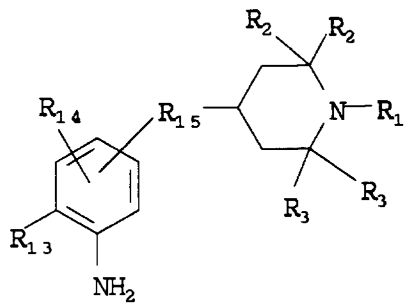

(p)

is coupled with one mol of a compound of formula XXI

$R_{20}$ – H (XXI).

**20.** Process for the production of the monoazo pigments of formula XX according to claim 19, characterized in that 1 mol of a compound of formula III'a

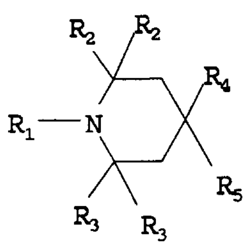

(III'a),

wherein $R_4$ is a –NH– or –O– bridge, and
$R_5$ is hydrogen,
is condensed with 1 mol of a compound of formula XXII

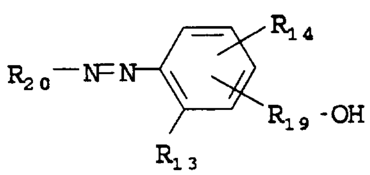

(XXII)

**21.** Process for the production of the disazo pigments of formula XXIII

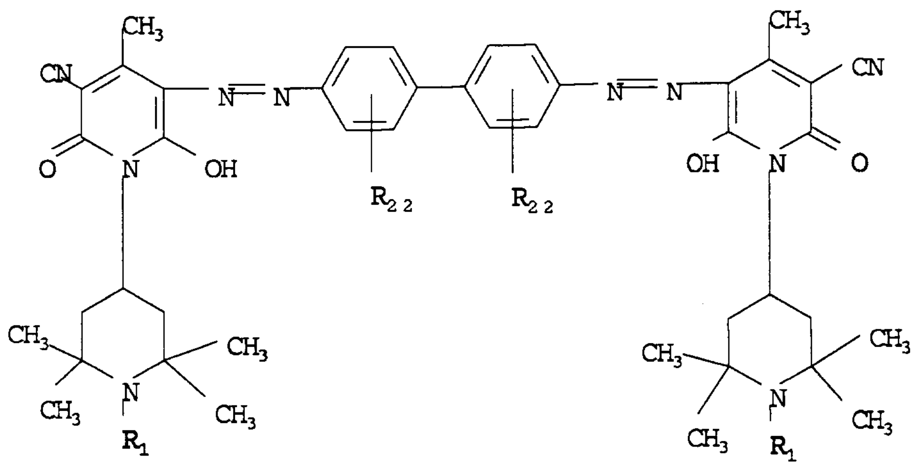

(XXIII),

wherein the two $R'_1$ are hydrogen or $C_{1-2}$-alkylcarbonyl, especially hydrogen, and the two $R_{22}$ are chlorine, bromine, methyl, methoxy or ethoxy, characterized in that 1 mol of a tetrazotised diamine of formula XXIV

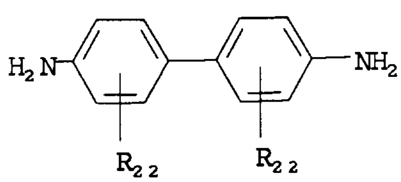

(XXIV)

is coupled with two mols of a compound of formula XXV

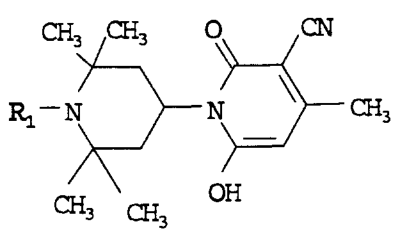

(XXV).

**22.** Process for dyeing plastic masses and lacquer finishes, characterized in that one or several pigment dyes are employed, and these contain per molecule one or several piperidyl groups each bearing two substituents in 2- and 6- position.

**Claims for the following Contracting States : AT, ES**

**1.** Process for the production of the pigment dyes of formula IV

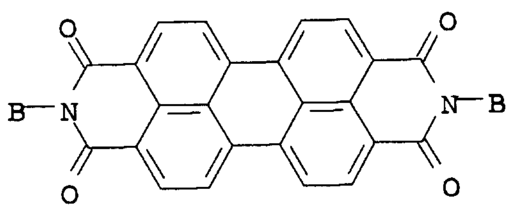

(IV),

wherein B is respectively a group of formula XXVI

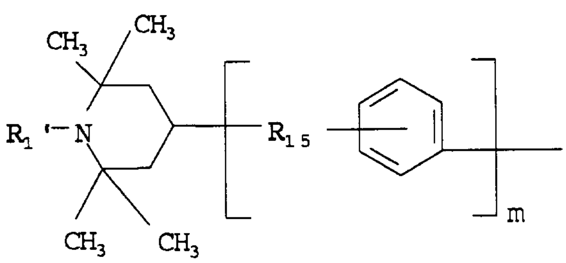

(XXVI)

R'$_1$ is hydrogen, acetyl or propionyl,
R'$_{15}$ is a group of formula NH−, −NH−CO− or −NH−SO$_2$ (the amino group being attached to the piperidyl radical)

and m is 0 or 1,
characterized in that 1 mol of 3,4,9,10−perylenetetracarboxylic acid, or 1 mol of one of its functional acid derivatives, is condensed with 2 mols of a compound of formula XXVII

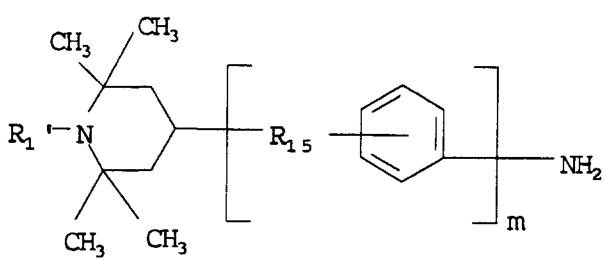

(XXVII).

**2.** Process for the production of the pigment dyes of formula XXVIII

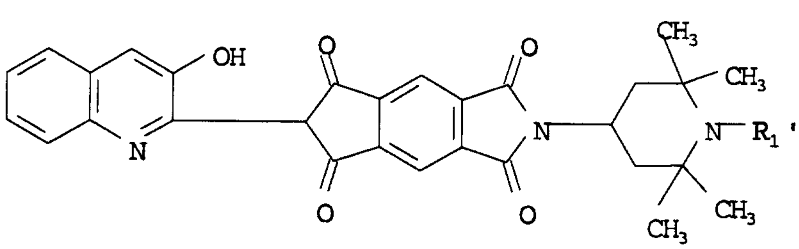

(XXVIII),

wherein R'$_1$ is hydrogen, acetyl or propionyl,
characterized in that one mol of a compound of formula XXIX

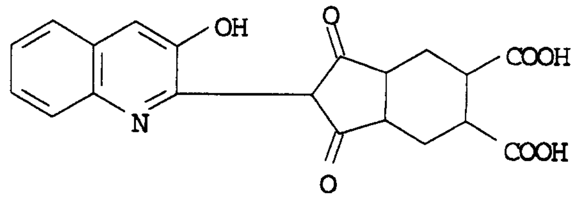

(XXIX)

or one mol of one of its functional acid derivatives, preferably the anhydride of this dicarboxylic acid, is condensed with one mol of a compound of formula XXX

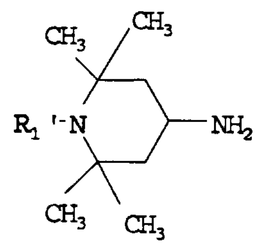

(XXX).

3. Process for the production of the disazo pigments of formula XII

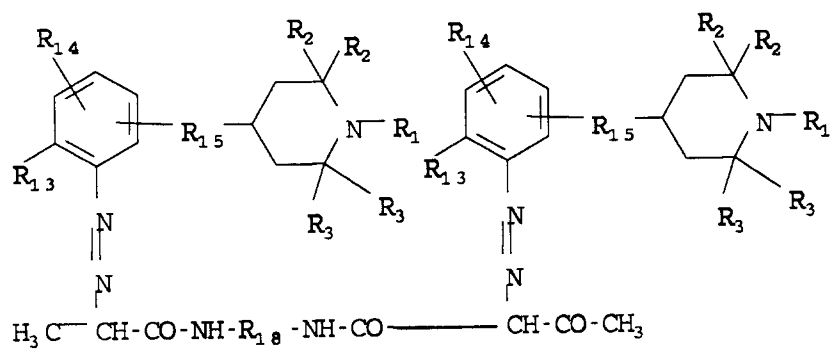

(XII),

wherein

| | |
|---|---|
| all $R_1$s | are hydrogen or acyl, |
| all $R_2$s and all $R_3$s, | independently of one another, are $C_{1-5}$-alkyl, or in pairs the $R_2$ and $R_3$ together are a group of formula $-(CH_2)_5-$, |
| all $R_{13}$s | independently of one another, are hydrogen, chlorine, bromine, methyl, $C_{1-2}$-alkoxy or $C_{1-4}$-alkoxycarbonyl, |
| all $R_{14}$s | independently of one another, are hydrogen, chlorine, bromine or methyl, |
| $R_{15}$ | is a group of formula $-CO-NH$, $-CO-O-$ or $-SO_2-NH-$ (the amino group, resp. the oxygen atom being attached to the piperidyl radical) |
| and $R_{18}$ | is a benzenic, naphthalenic or heterocyclic-aromatic bridging member |

characterized in that 2 mols of a diazotised amine or 2 mols of a mixture of such amines, of formula p

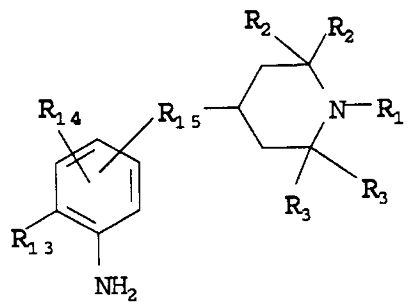

(p)

are coupled with one mol of a compound of formula XIV

$H_3C-CO-CH_2-CO-NH-R_{18}-NH-CO-CH_2-CO-CH_3$ (XIV).

**4.** Process for the production of the disazo pigments of formula XII according to claim 14, characterized in that one mol of a disazodicarboxylic or disazodisulphonic acid compound of formula XVI

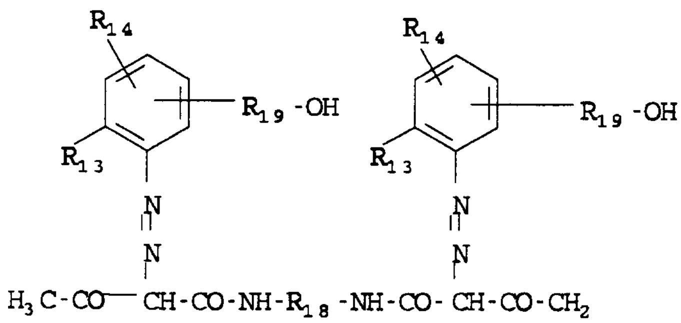

(XVI),

wherein $R_{19}$ is a carbonyl or sulphonyl group, is condensed with 2 mols of a 4-amino or 4-hydroxy compound of formula III'a

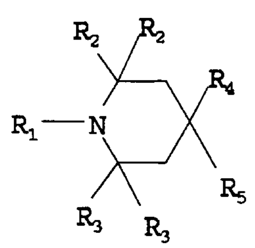

(III'a),

wherein $R_4$ is a -NH- or -O- bridge and
$R_5$ is hydrogen.

**5.** Process for the production of the disazo pigments of formula XIII

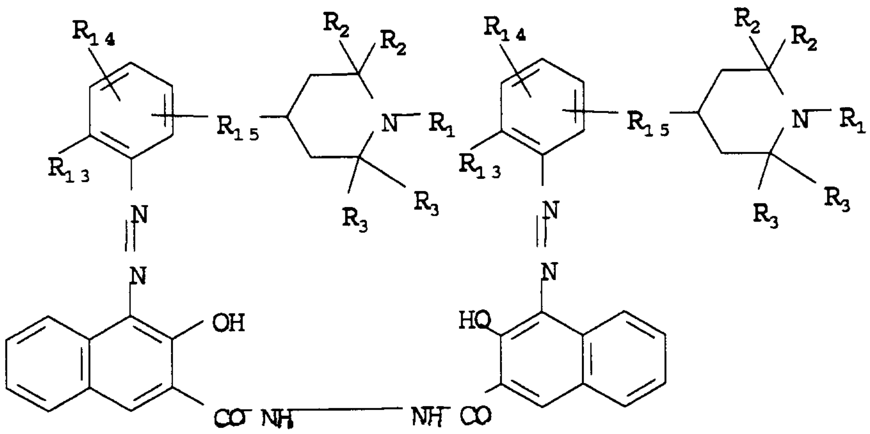

(XIII),

wherein

| | |
|---|---|
| all $R_1$s | are hydrogen or acyl, |
| all $R_2$s and $R_3$s, | independently of one another, are $C_{1-5}$-alkyl, or in pairs the $R_2$ and $R_3$ together are a group of formula $-(CH_2)_5-$, |
| all $R_{13}$s | independently of one another, are hydrogen, chlorine, bromine, methyl, $C_{1-2}$-alkoxy or $C_{1-4}$-alkoxycarbonyl, |
| all $R_{14}$s | independently of one another, are hydrogen, chlorine, bromine or methyl, |
| $R_{15}$ | is a group of formula $-CO-NH'$, $-CO-O-$ or $-SO_2-NH-$ (the amino group, resp. the oxygen atom being attached to the piperidyl radical) |
| and$R_{18}$ | is a benzenic, naphthalenic or heterocyclic-aromatic bridging member characterized in that 2 mols of a diazotised amine of formula p |

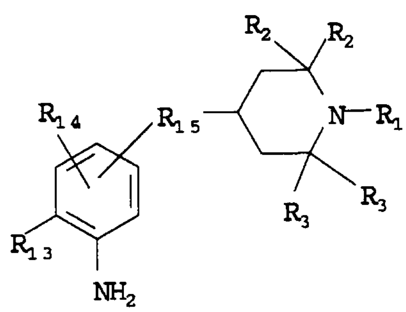

(p)

are coupled with 1 mol of a compound of formula XV

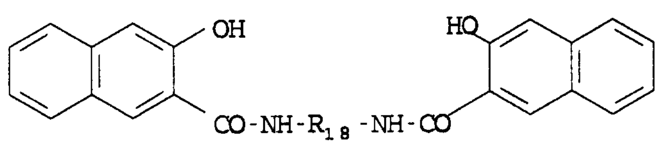

(XV).

**6.** Process for the production of the disazo pigments of formula XIII according to claim 16, characterized in that one mol of a disazodicarboxylic or disazodisulphonic acid of formula XVII

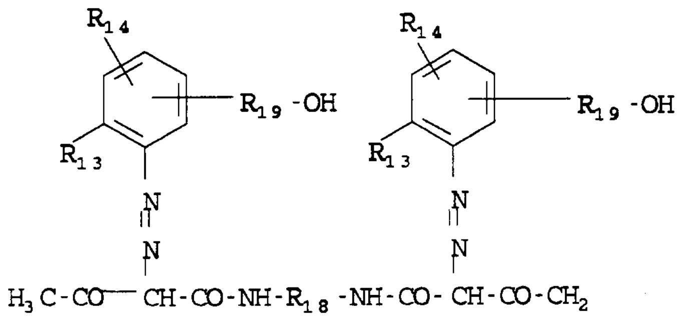

(XVII)

wherein $R_{19}$ is a carbonyl or sulphonyl group, is condensed with 2 mols of a 4-amino-or 4-hydroxypiperidine compound of formula III'a

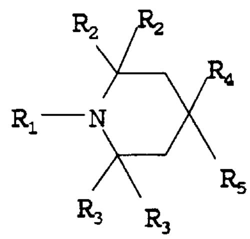

(III'a)

wherein $R_4$ is a -NH- or -O-bridge and $R_5$ is hydrogen.

**7.** Process for the production of the disazo pigments of formula XIII according to claim 16, characterized in that 2 mols of an azocarboxylic acid compound of formula XVIII

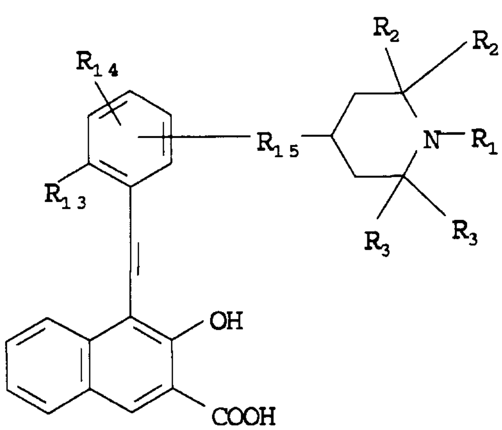

(XVIII)

or 2 mols of a functional acid derivative, preferably the acid chloride of this compound, are condensed with one mol of a diamine of formula XIX

$H_2N - R_{18} - NH_2$ (XIX).

**8.** Process for the production of the monoazo pigments of formula XX

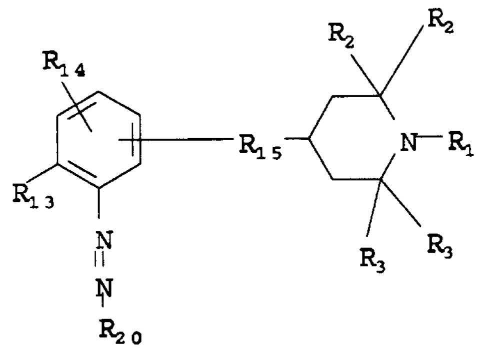

(XX),

wherein $R_1$ is hydrogen or acyl,

all $R_2$s and all $R_3$s, independently of one another, are $C_{1-5}$-alkyl, or in pairs the $R_2$ and $R_3$ together are a group of formula $-(CH_2)_5-$,

all $R_{13}$s independently of one another, are hydrogen, chlorine, bromine, methyl, $C_{1-2}$-alkoxy or $C_{1-4}$-alkoxycarbonyl,

all $R_{14}$s independently of one another, are hydrogen, chlorine, bromine or methyl,

$R_{15}$ is a group of formula $-CO-NH-$, $-CO-O-$ or $-SO_2-NH-$ (the amino group, resp. the oxygen atom being attached to the piperidyl radical)

and $R_{20}$ is a group of formula

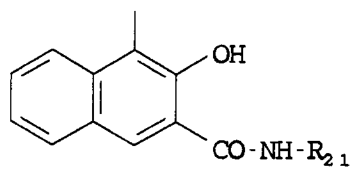

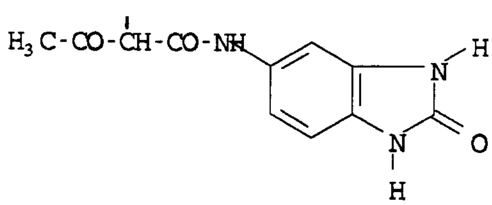

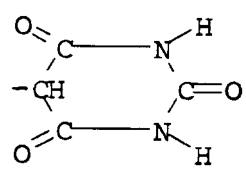

and $R_{21}$ is benzimidazolonyl-5, or phenyl which optionally bears up to three substituents from the group chlorine, bromine, methyl, methoxy or ethoxy, or phenyl which bears a benzoylamino group characterized in that one mol of a diazotised amine of formula p

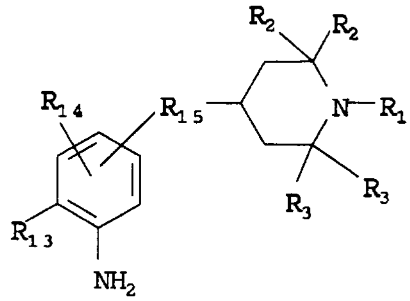

(p)

is coupled with one mol of a compound of formula XXI

$R_{20} - H$ (XXI).

**9.** Process for the production of the monoazo pigments of formula XX according to claim 19, characterized in that 1 mol of a compound of formula III'a

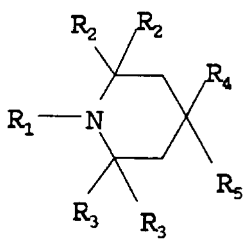

(III'a),

wherein $R_4$ is a -NH- or -O-bridge, and
$R_5$ is hydrogen,
is condensed with 1 mol of a compound of formula XXII

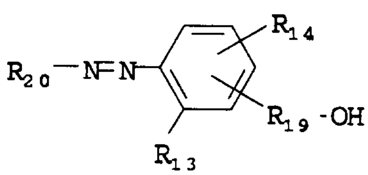

(XXII).

**10.** Process for the production of the disazo pigments of formula XXIII

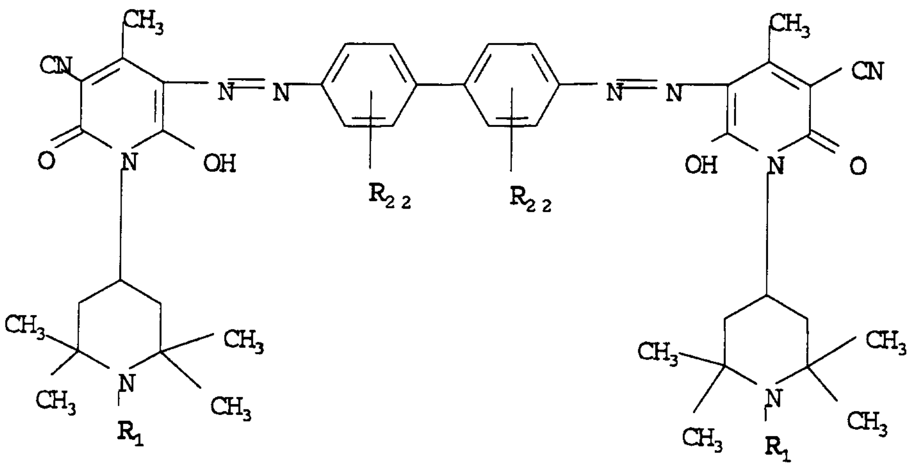

(XXIII),

wherein the two R'1 are hydrogen or $C_{1-2}$ - alkylcarbonyl, especially hydrogen, and the two $R_{22}$ are chlorine, bromine, methyl, methoxy or ethoxy, characterized in that 1 mol of a tetrazotised diamine of formula XXIV

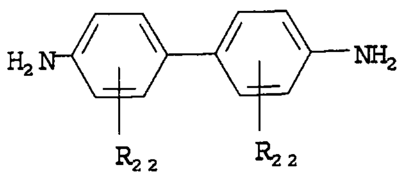

(XXIV)

is coupled with two mols of a compound of formula XXV

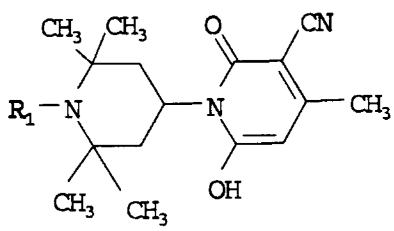

(XXV)

**11.** Process for dyeing plastic masses and lacquer finishes, characterized in that one or several pigment dyes are employed, and these contain per molecule one or several piperidyl groups each bearing two substituents in 2 - and 6 - position.

**Revendications**

**Revendications pour les Etats contractants suivants : BE, CH, DE, FR, GB, IT, LI, NL, SE**

**1.** Les pigments qui contiennent dans leur molécule un ou plusieurs groupes 2,2,6,6 - tétra - alkylpipéri - dyle.

**2.** Les pigments selon la revendication 1, qui répondent à la formule I

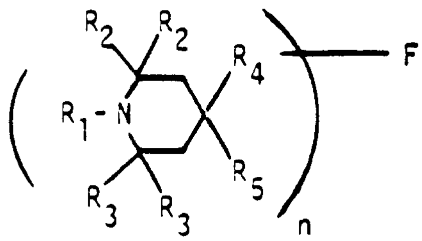

(I),

dans laquelle

| | |
|---|---|
| $R_1$ | signifie l'hydrogène ou un groupe alkyle en $C_1-C_8$, alcényle en $C_3-C_{10}$, phényle, (phényl)-alkyle en $C_1-C_4$ ou acyle, |
| les deux substituants $R_2$ et les deux substituants $R_3$, | indépendamment les uns des autres, signifient un groupe alkyle en $C_1-C_5$, ou bien les deux substituants $R_2$ et/ou les deux substituants $R_3$ signifient ensemble un groupe de formule $-(CH_2)_5-$, |
| $R_4$ | signifie une liaison directe ou un groupe formant pont qui forme éventuellement, ensemble avec $R_5$, un noyau iso- ou hétérocyclique, |
| $R_5$ | signifie l'hydrogène, un groupe alkyle en $C_1-C_2$ ou, ensemble avec $R_4$, le groupe d'atomes nécessaire pour la formation d'un système de noyau iso-ou hétérocyclique, |
| F | signifie le reste d'un pigment et |
| n | signifie 1, 2, 3 ou 4. |

**3.** Les pigments selon la revendication 1, qui répondent à la formule II

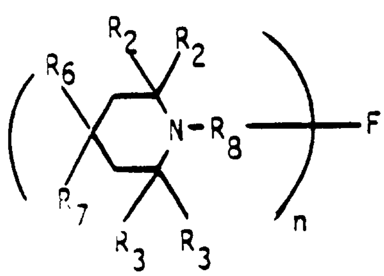

(II),

dans laquelle

| | |
|---|---|
| les deux substituants $R_2$ et les deux substituants $R_3$, | indépendamment les uns des autres, signifient un groupe alkyle en $C_1-C_5$, ou bien les deux substituants $R_2$ et/ou les deux substituants $R_3$ signifient ensemble un groupe de formule $-(CH_2)_5-$, |
| $R_6$ | signifie l'hydrogène ou un groupe hydroxy ou amino éventuellement substitué, ou signifie avec $R_7$ un système de noyau iso- ou hétérocyclique, |
| $R_7$ | signifie l'hydrogène, un groupe alkyle en $C_1-C_2$ ou, ensemble avec $R_6$, le groupe |

d'atomes nécessaire pour la formation d'un système de noyau iso – ou hétérocyclique,

$R_8$ signifie une liaison directe ou un groupe formant pont,

F signifie le reste d'un pigment et

n signifie 1, 2 ou 3.

**4.** Les pigments selon la revendication 2 ou 3, dans lesquels F signifie le reste d'un colorant azoïque ou disazoïque.

**5.** Les pigments selon la revendication 1 ou 2, qui répondent à la formule IV

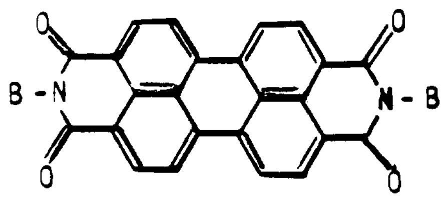

(IV),

dans laquelle
chaque B signifie un groupe de formule XXVI

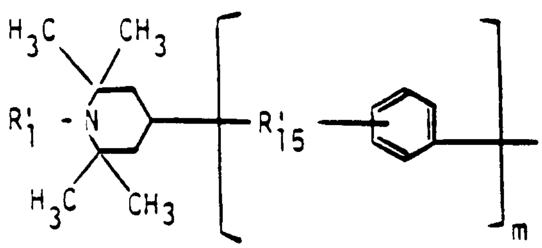

(XXVI),

dans laquelle

$R'_1$ signifie l'hydrogène ou un groupe acétyle ou propionyle,

$R'_{15}$ signifie un groupe de formule $-NH-$, $-NH-CO-$ ou $-NH-SO_2-$ (le groupe amino étant lié au reste pipéridyle) et

m signifie O ou 1.

**6.** Les pigments selon la revendication 1 ou 2, qui répondent à la formule XXVIII

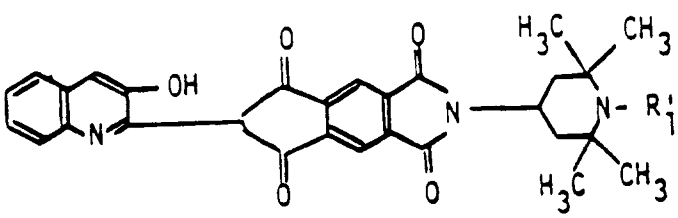

(XXVIII),

dans laquelle

$R_1$ signifie l'hydrogène ou un groupe acétyle ou propionyle, de préférence l'hydrogène.

**7.** Les pigments disazoïques selon la revendication 1 ou 2, qui répondent à la formule XII ou XIII

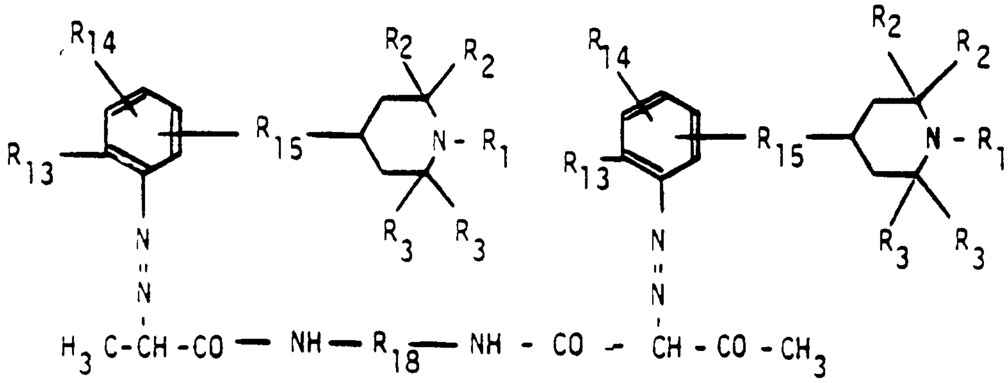

(XII)

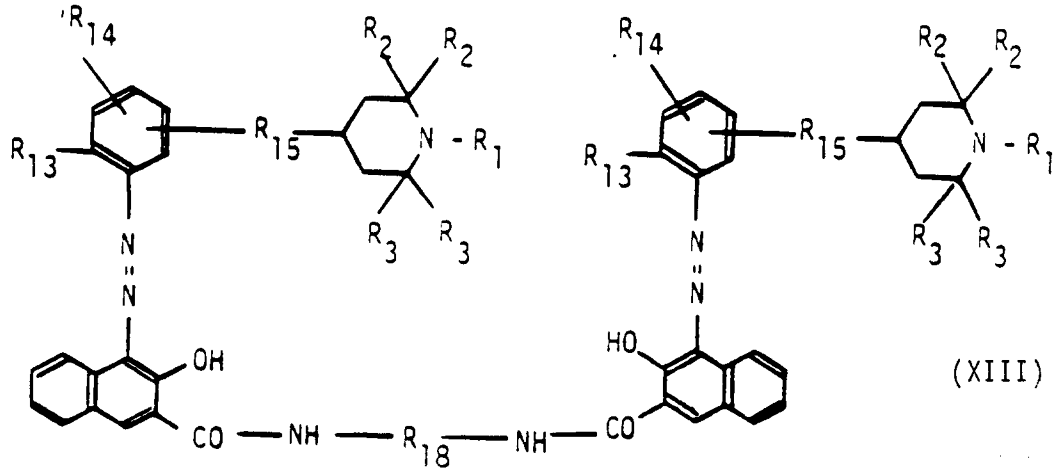

(XIII)

où (dans chacune des deux formules)
les substituants $R_1$ signifient l'hydrogène ou un groupe acyle,
les substituants $R_2$ et les substituants $R_3$, indépendamment les uns des autres, signifient un groupe alkyle en $C_1-C_5$,ou bien les substituants $R_2$ et les substituants $R_3$, deux à deux, signifient ensemble un groupe de formule $-(CH_2)_5-$,les substituants $R_{13}$, indépendamment l'un de l'autre, signifient l'hydrogène, le chlore, le brome ou un groupe méthyle, alcoxy en $C_1-C_2$ ou (alcoxy en $C_1-C_4$ )-carbonyle, les substituants $R_{14}$, indépendamment l'un de l'autre, signifient l'hydrogène, le chlore, le brome ou un groupe méthyle,
les substituants $R_{15}$ signifient un groupe de formule $-CO-NH-$, $-CO-O-$ ou $-SO_2-NH-$ (le groupe amino ou l'atome d'oxygène étant lié au reste pipéridyle) et
$R_{18}$ signifie un groupe benzénique, naphtalénique ou hétérocyclique-aromatique formant pont.

**8.** Les pigments monoazoïques selon la revendication 1 ou 2, qui répondent à la formule XX

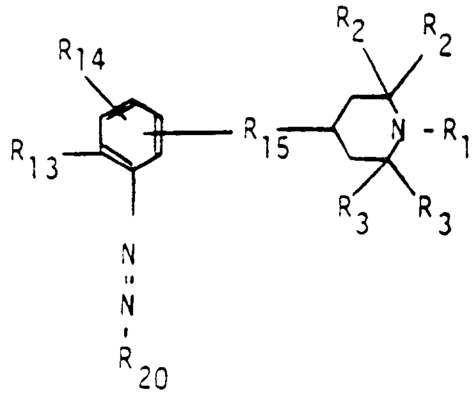

(XX),

dans laquelle

$R_1$ signifie l'hydrogène ou un groupe acyle,

les substituants $R_2$ et les substituants $R_3$, indépendamment les uns des autres, signifient un groupe alkyle en $C_1-C_5$, ou bien les substituants $R_2$ et les substituants $R_3$, deux à deux, signifient ensemble un groupe de formule $-(CH_2)_5-$,

$R_{13}$ signifie l'hydrogène, le chlore, le brome ou un groupe méthyle, alcoxy en $C_1-C_2$ ou (alcoxy en $C_1-C_4$)-carbonyle,

$R_{14}$ signifie l'hydrogène, le chlore, le brome ou un groupe méthyle,

$R_{15}$ signifie un groupe de formule $-CO-NH-$, $-CO-O-$ ou $-SO_2-NH-$ (le groupe amino ou l'atome d'oxygène étant lié au reste pipéridyle) et

$R_{20}$ signifie un groupe de formule

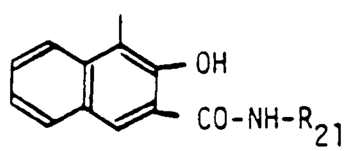

,

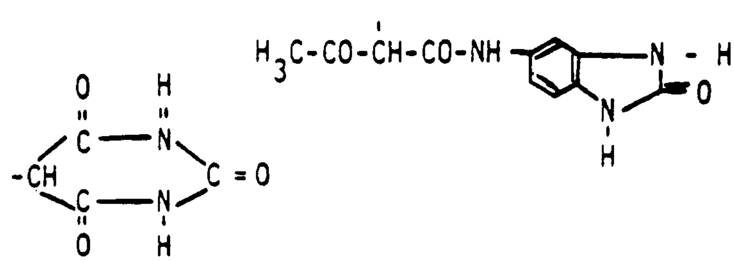

et

$R_{21}$ signifie un groupe benzimidazolonyl-5 ou un groupe phényle portant éventuellement jusqu'à 3 substituants choisis parmi le chlore, le brome et les groupes méthyle, méthoxy et éthoxy, ou portant éventuellement un groupe benzoylamino.

**9.** Les pigments disazoïques de formule XXIII

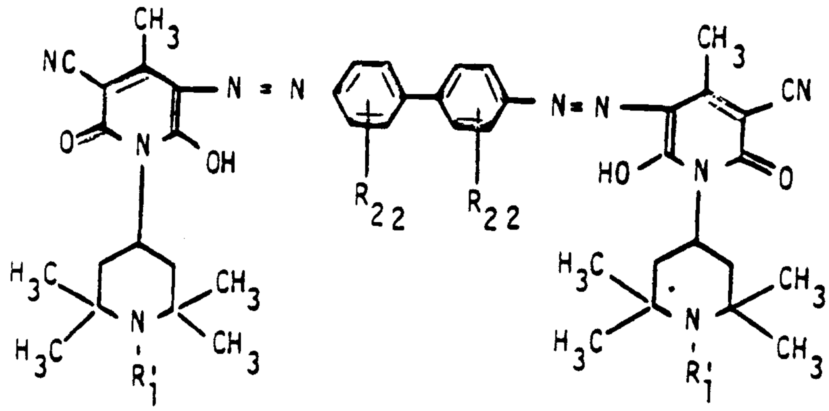

(XXIII),

dans laquelle
les deux substituants $R'_1$ signifient l'hydrogène ou un groupe (alkyle en $C_1-C_2$)-carbonyle, en particulier l'hydrogène, et
les deux substituants $R_{22}$ signifient le chlore, le brome ou un groupe méthyle, méthoxy ou éthoxy, en particulier le chlore.

**10.** L'utilisation des pigments selon l'une des revendications précédentes, pour la coloration des matières plastiques dans la masse et des vernis.

**11.** Les composés de formule p

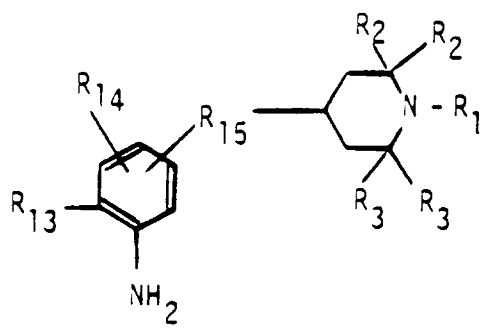

(p),

dans laquelle

| | |
|---|---|
| $R_1$ | signifie l'hydrogène ou un groupe alkyle en $C_1-C_8$, alcényle en $C_3-C_{10}$ phényle, (phényl)-alkyle en $C_1-C_4$ ou acyle, |
| les deux substituants $R_2$ et les deux substituants $R_3$, | indépendamment les uns des autres, signifient un groupe alkyle en $C_1-C_5$, ou bien les deux substituants $R_2$ et/ou les deux substituants $R_3$ signifient ensemble un groupe de formule $-(CH_2)_5-$, |
| $R_{13}$ | signifie l'hydrogène, le chlore, le brome ou un groupe méthyle, alcoxy en $C_1-C_2$ ou (alcoxy en $C_1-C_4$)-carbonyle, |
| $R_{14}$ | signifie l'hydrogène, le chlore, le brome ou un groupe méthyle, de préférence l'hydrogène ou le chlore, |
| $R_{15}$ | signifie un groupe de formule $-CO-NH-$, $-CO-O-$ou $-SO_2-NH-$ (le groupe amino ou l'atome d'oxygène étant lié au |

reste pipéridyle).

**12.** Procédé de préparation des pigments de formule IV

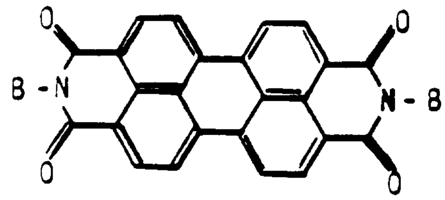

(IV),

dans laquelle
chaque B signifie un groupe de formule XXVI

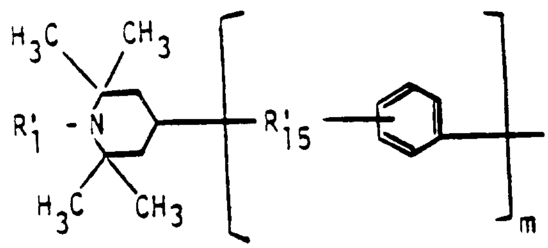

(XXVI),

dans laquelle

- $R'_1$ signifie l'hydrogène ou un groupe acétyle ou propionyle,
- $R'_{15}$ signifie un groupe de formule $-NH-$, $-NH-CO-$ ou $-NH-SO_2-$ (le groupe amino étant lié au reste pipéridyle) et
- m signifie 0 ou 1,

caractérisé en ce que l'on condense 1 mole d'acide 3,4,9,10-périlènetétracarboxylique, ou d'un dérivé fonctionnel de cet acide, avec 2 moles d'un composé de formule

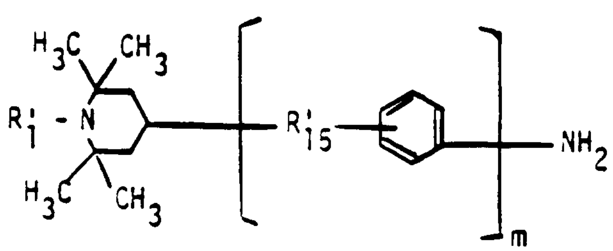

(XXVII)

**13.** Procédé de préparation des pigments de formule XXVIII

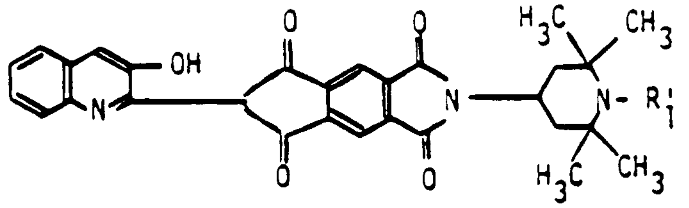

(XXVIII),

dans laquelle $R'_1$ signifie l'hydrogène ou un groupe acétyle ou propionyle, caractérisé en ce que l'on

condense une mole d'un composé de formule XXIX

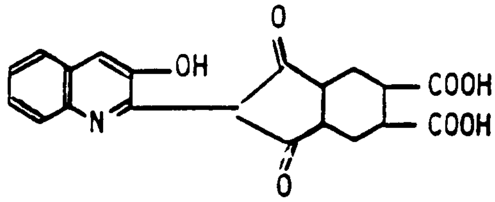

(XXIX),

ou d'un dérivé fonctionnel de cet acide, de préférence l'anhydride de cet acide dicarboxylique, avec une mole d'un composé de formule XXX

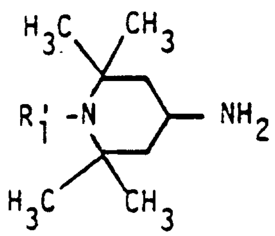

(XXX)

**14.** Procédé de préparation des pigments disazoïques de formule XII

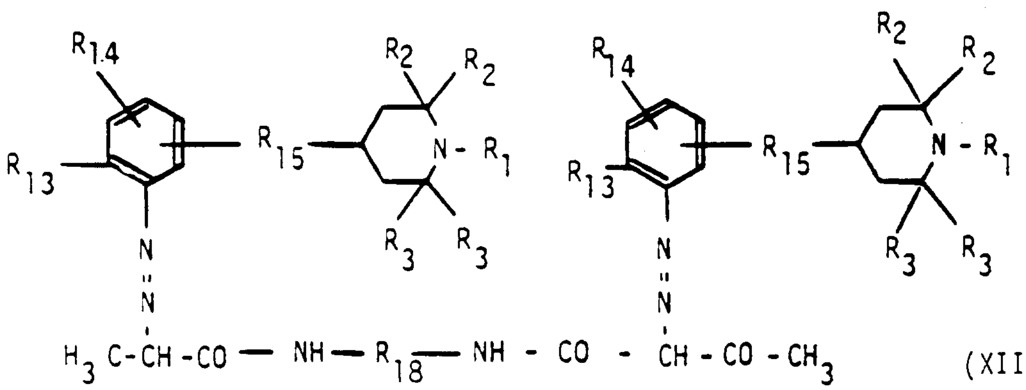

(XII)

dans laquelle

| | |
|---|---|
| les substituants $R_1$ | signifient l'hydrogène ou un groupe acyle, |
| les substituants $R_2$ et les subsituants $R_3$, | indépendamment les uns des autres, signifient un groupe alkyle en $C_1-C_5$ ou bien les substituants $R_2$ et les substituants $R_3$, deux à deux, signifient ensemble un groupe de formule $-(CH_2)_5-$, |
| les substituants $R_{13}$, | indépendamment l'un de l'autre, signifient l'hydrogène, le chlore, le brome ou un groupe méthyle, alcoxy en $C_1-C_2$ ou (alcoxy en $C_1-C_4$)$-$carbonyle, |
| les substituants $R_{14}$, | indépendamment l'un de l'autre, signifient l'hydrogène, le chlore, le brome ou un groupe méthyle, |
| les substituants $R_{15}$ | signifient un groupe de formule $-CO-NH-$, $-CO-O-$ ou $-SO_2-NH-$ (le groupe amino ou l'atome d'oxygène étant lié au reste pipéridyle) et |
| $R_{18}$ | signifie un groupe benzénique, naphtalénique ou hétérocyclique$-$aromatique formant pont, |

caractérisé en ce qu'on copule 2 moles d'une amine diazotée de formule p

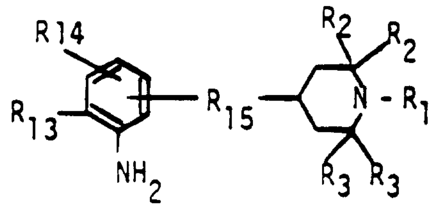

(p)

ou d'un mélange de telles amines,
avec une mole d'un composé de formule XIV

$H_3C-CO-CH_2-CO-NH-R_{18}-NH-CO-CH_2-CO-CH_3$ (XIV)

**15.** Procédé de préparation des pigments disazoïques de formule XII selon la revendication 14, caractérisé en ce que l'on condense une mole d'un acide disazo-dicarboxylique ou disazo-disulfonique de formule XVI

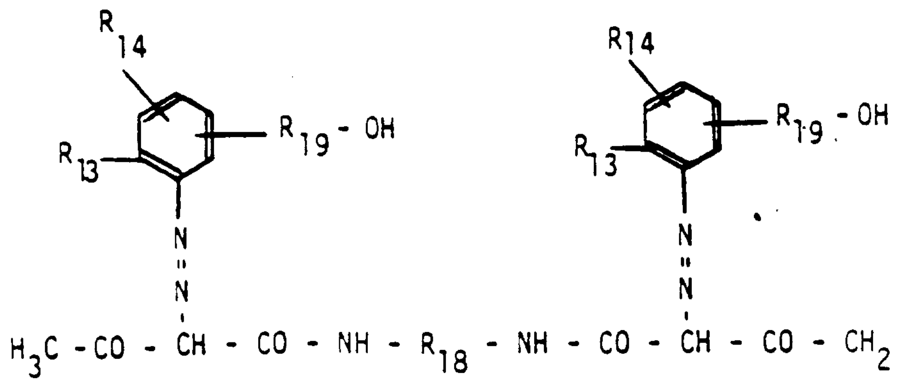

(XVI),

dans laquelle $R_{19}$ signifie un groupe carbonyle ou sulfonyle, avec deux moles d'un composé 4-aminé ou 4-hydroxylé de formule III'a

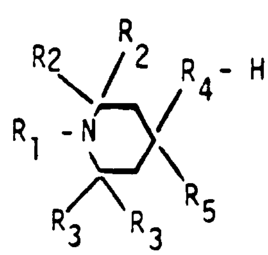

(III'a),

dans laquelle
$R_4$ signifie un pont -NH- ou -O- et
$R_5$ signifie l'hydrogène.

**16.** Procédé de préparation des pigments disazoïques de formule XIII

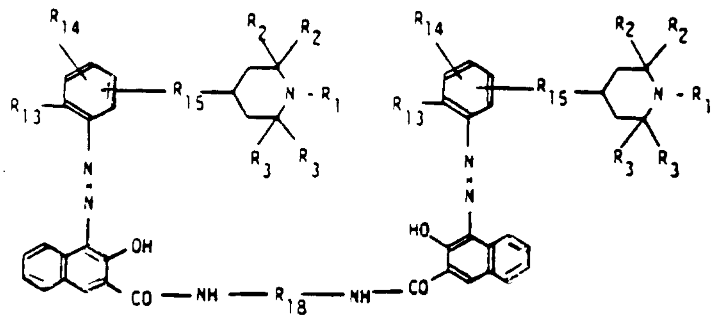

(XIII),

dans laquelle

| | |
|---|---|
| les substituants $R_1$ | signifient l'hydrogène ou un groupe acyle, |
| les substituants $R_2$ et les substituants $R_3$, | indépendamment les uns des autres, signifient un groupe alkyle en $C_1-C_5$, ou bien les substituants $R_2$ et les substituants $R_3$ deux à deux, signifient ensemble un groupe de formule $-(CH_2)_5-$, |
| les substituants $R_{13}$, | indépendamment l'un de l'autre, signifient l'hydrogène, le chlore, le brome ou un groupe méthyle, alcoxy en $C_1-C_2$ ou (alcoxy en $C_1-C_4$)-carbonyle, |
| les substituants $R_{14}$ , | indépendamment l'un de l'autre, signifient l'hydrogène, le chlore, le brome ou un groupe méthyle, |
| les substituants $R_{15}$ | signifient un groupe de formule $-CO-NH-$, $-CO-O-$ou $-SO_2-NH-$ ( le groupe amino ou l'atome d'oxygène étant lié au reste pipéridyle) et |
| $R_{18}$ | signifie un groupe benzénique, naphtalénique ou hétérocyclique-aromatique formant pont, |

caractérisé en ce qu'on copule 2 moles d'une amine diazotée de formule p

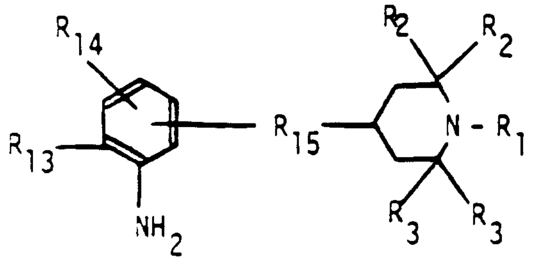

(p)

avec 1 mole d'un composé de formule XV

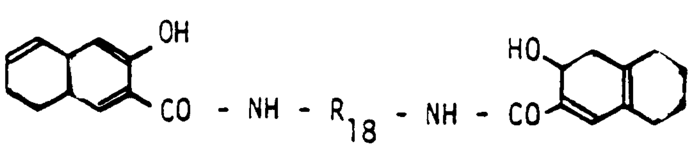

(XV)

**17.** Procédé de préparation des pigments disazoïques de formule XIII selon la revendication 16, caractérisé en ce que l'on condense une mole d'un acide disazo-dicarboxylique ou disazo-disulfonique de formule XVII

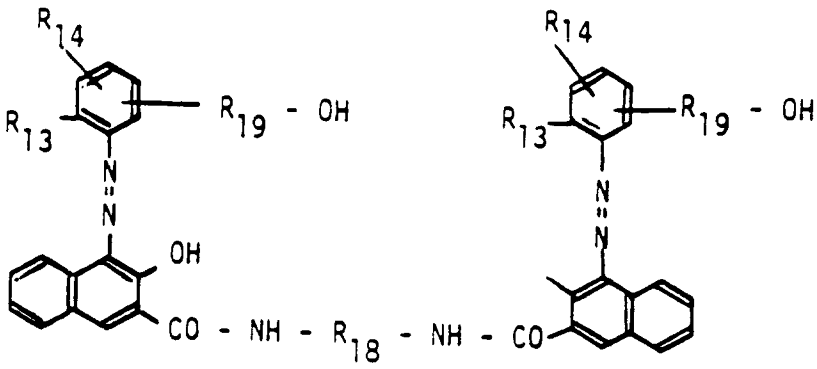

(XVII),

dans laquelle

$R_{19}$ signifie un groupe carbonyle ou sulfonyle,

avec 2 moles d'une 4-amino- ou 4-hydroxy-pipéridine de formule III'a

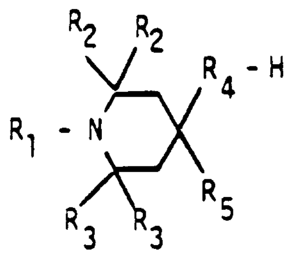

(III'a),

dans laquelle

$R_4$ signifie un pont -NH- ou -O- et

$R_5$ signifie l'hydrogène.

**18.** Procédé de préparation des pigments disazoïques de formule XIII selon la revendication 16, caractérisé en ce que l'on condense 2 moles d'un acide azo-carboxylique de formule XVIII

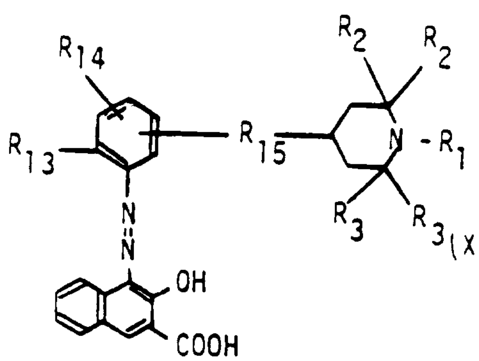

(XVIII)

ou d'un dérivé fonctionnel de cet acide, de préférence le chlorure d'acide de ce composé, avec une mole d'une diamine de formule XIX

$H_2N - R_{18} - NH_2$ (XIX)

**19.** Procédé de préparation des pigments monoazoïques de formule XX

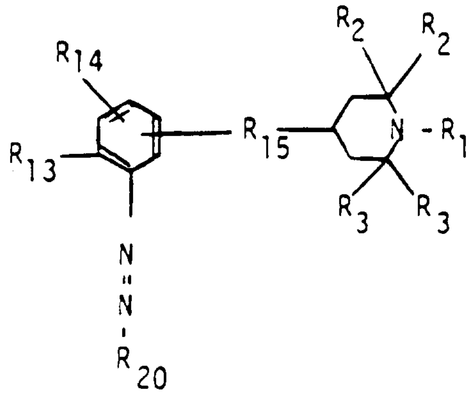

(XX),

dans laquelle

- $R_1$ signifie l'hydrogène ou un groupe acyle,
- les substituants $R_2$ et les substituants $R_3$ indépendamment les uns des autres, signifient un groupe alkyle en $C_1-C_5$, ou bien les substituants $R_2$ et les substituants $R_3$, deux à deux, signifient ensemble un groupe de formule $-(CH_2)_5-$,
- $R_{13}$ signifie l'hydrogène, le chlore, le brome ou un groupe méthyle, alcoxy en $C_1-C_2$ ou (alcoxy en $C_1-C_4$)-carbonyle,
- $R_{14}$ signifie l'hydrogène, le chlore, le brome ou un groupe méthyle,
- $R_{15}$ signifie un groupe de formule $-CO-NH-$, $-CO-O-$ ou $-SO_2-NH-$ (le groupe amino ou l'atome d'oxygène étant lié au reste pipéridyle) et
- $R_{20}$ signifie un groupe de formule

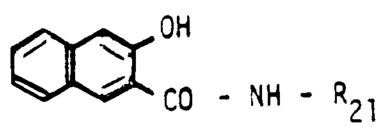

,

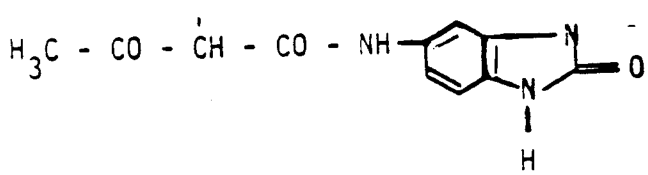

ou

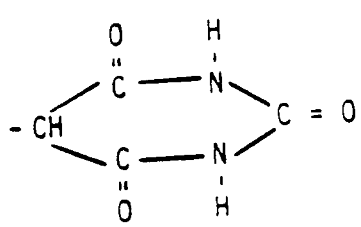

,

et $R_{21}$ signifie un groupe benzimidazolonyl-5 ou un groupe phényle portant éventuellement jusqu'à 3 substituants

choisis parmi le chlore, le brome et les groupes méthyle, méthoxy et éthoxy, ou portant éventuellement un groupe benzoylamino,

caractérisé en ce qu'on copule 1 mole d'une amine diazotée de formule p

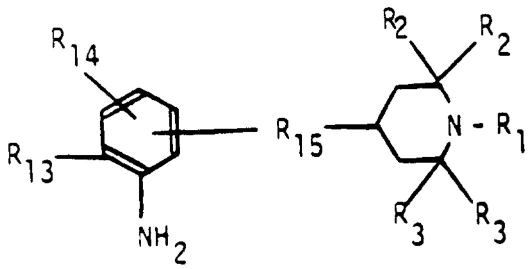

(p)

avec une mole d'un composé de formule XXI

$R_{20} - H$ (XXI)

**20.** Procédé de préparation des pigments monoazoïques de formule XX selon la revendication 19, caractérisé en ce que l'on condense 1 mole d'un composé de formule III'a

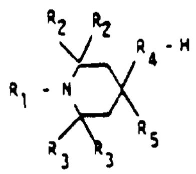

(III'a),

dans laquelle

$R_4$ signifie un pont $-NH-$ ou $-O-$ , et

$R_5$ signifie l'hydrogène,

avec 1 mole d'un composé de formule XXII

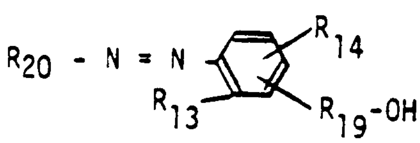

(XXII)

**21.** Procédé de préparation des pigments disazoïques de formule XXIII

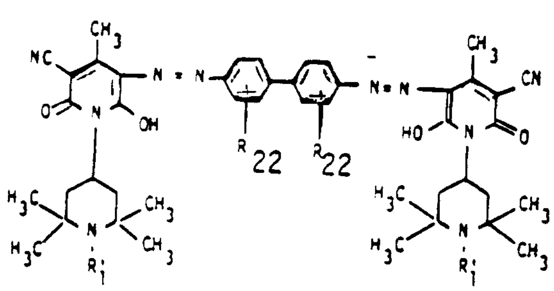

(XXIII)

dans laquelle

| | |
|---|---|
| les deux substituants $R'_1$ | signifient l'hydrogène ou un groupe (alkyl en $C_1-C_2$)-carbonyle, en particulier l'hydrogène, et |
| les deux substituants $R_{22}$ | signifient le chlore, le brome ou un groupe méthyle, méthoxy ou éthoxy, |

caractérisé en ce qu'on copule 1 mole d'une diamine tétrazotée de formule XXIV

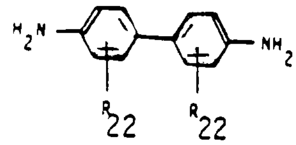

(XXIV)

avec deux moles d'un composé de formule XXV

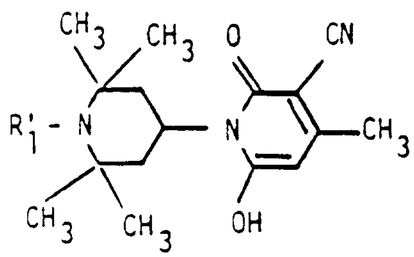

(XXV),

**22.** Procédé de coloration des matières plastiques dans la masse et des vernis, caractérisé en ce qu'on utilise un ou plusieurs pigments qui contiennent dans leur molécule un ou plusieurs groupes pipéridyle portant deux substituants à chacune des positions 2 et 6.

**Revendications pour les Etats contractants suivants : AT, ES**

**1.** Procédé de préparation des pigments de formule IV

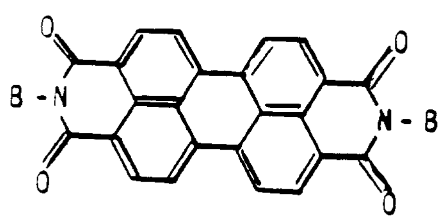

(IV),

dans laquelle
chaque B signifie un groupe de formule XXVI

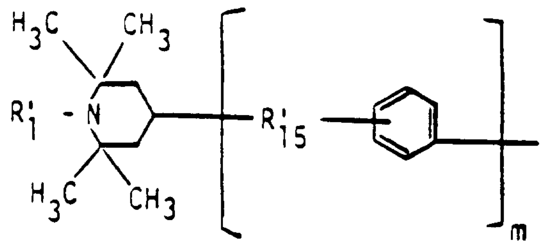

(XXVI),

dans laquelle

R'$_1$ signifie l'hydrogène ou un groupe acétyle ou propionyle,

R'$_{15}$ signifie un groupe de formule $-NH-$, $-NH-CO-$ ou $-NH-SO_2-$ (le groupe amino étant lié au reste pipéridyle) et

m signifie 0 ou 1,

caractérisé en ce que l'on condense 1 mole d'acide 3,4,9,10-périlènetétracarboxylique, ou d'un dérivé fonctionnel de cet acide, avec 2 moles d'un composé de formule XXVII

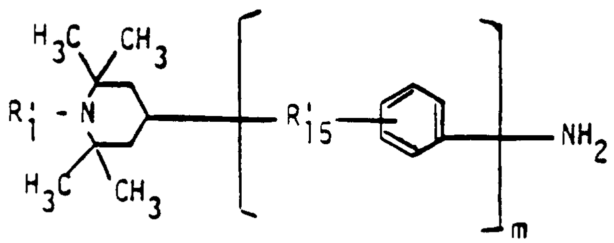

(XXVII)

**2.** Procédé de préparation des pigments de formule XXVIII

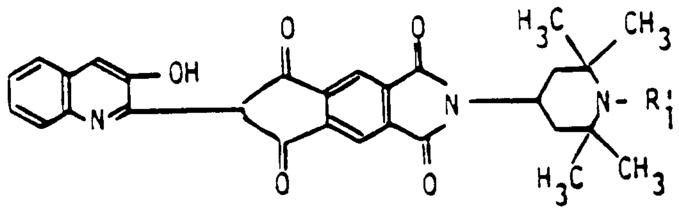

(XXVIII),

dans laquelle R'$_1$ signifie l'hydrogène ou un groupe acétyle ou propionyle, caractérisé en ce que l'on condense une mole d'un composé de formule XXIX

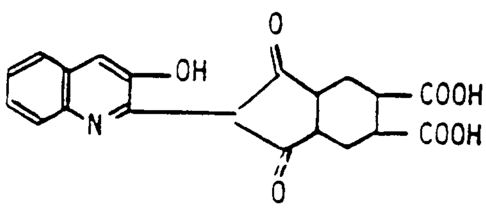

(XXIX),

ou d'un dérivé fonctionnel de cet acide, de préférence l'anhydride de cet acide dicarboxylique, avec une mole d'un composé de formule XXX

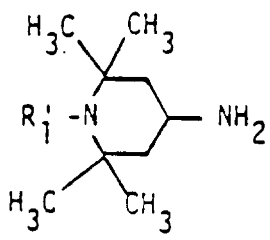

(XXX)

**3.** Procédé de préparation des pigments disazoïques de formule XII

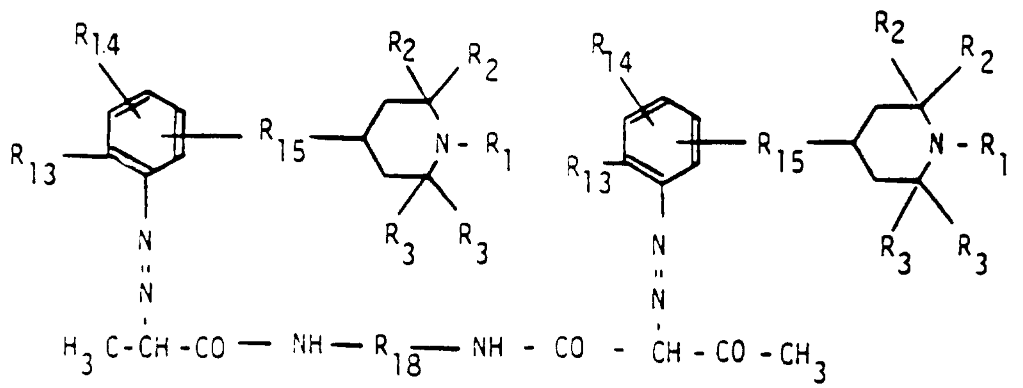

(XII)

dans laquelle

| | |
|---|---|
| les substituants $R_1$ | signifient l'hydrogène ou un groupe acyle, |
| les substituants $R_2$ et les substituants $R_3$, | indépendamment les uns des autres, signifient un groupe alkyle en $C_1-C_5$, ou bien les substituants $R_2$ et les substituants $R_3$, deux à deux, signifient ensemble un groupe de formule $-(CH_2)_5-$, |
| les substituants $R_{13}$, | indépendamment l'un de l'autre, signifient l'hydrogène, le chlore, le brome ou un groupe méthyle, alcoxy en $C_1-C_2$ ou (alcoxy en $C_1-C_4$)-carbonyle, |
| les substituants $R_{14}$, | indépendamment l'un de l'autre, signifient l'hydrogène, le chlore, le brome ou un groupe méthyle, |
| les substituants $R_{15}$ | signifient un groupe de formule $-CO-NH-$, $-CO-O-$ou $-SO_2-NH-$ (le groupe amino ou l'atome d'oxygène étant lié au reste pipéridyle) et |
| $R_{18}$ | signifie un groupe benzénique, naphtalénique ou hétérocyclique-aromatique formant pont, |

caractérisé en ce qu'on copule 2 moles d'une amine diazotée de formule p

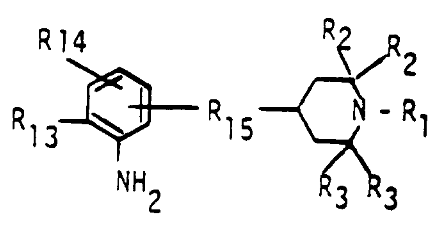

(p)

ou d'un mélange de telles amines, avec une mole d'un composé de formule XIV

$H_3C-CO-CH_2-CO-NH-R_{18}-NH-CO-CH_2-CO-CH_3$ (XIV)

**4.** Procédé de préparation des pigments disazoïques de formule XII selon la revendication 3, caractérisé en ce que l'on condense une mole d'un acide disazo-dicarboxylique ou disazo-disulfonique de formule XVI

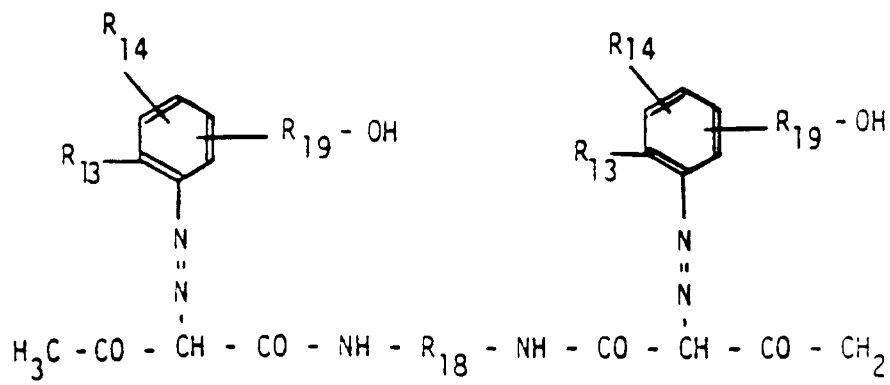
(XVI),

dans laquelle

$R_{19}$ signifie un groupe carbonyle ou sulfonyle, avec 2 moles d'un composé 4-aminé ou 4-hydroxylé de formule III'a

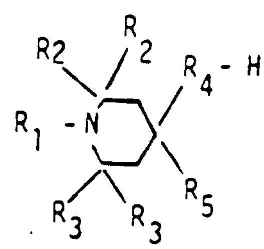
(III'a),

dans laquelle

$R_4$ signifie un pont -NH- ou -O- et

$R_5$ signifie l'hydrogène.

**5.** Procédé de préparation des pigments disazoïques de formule XIII

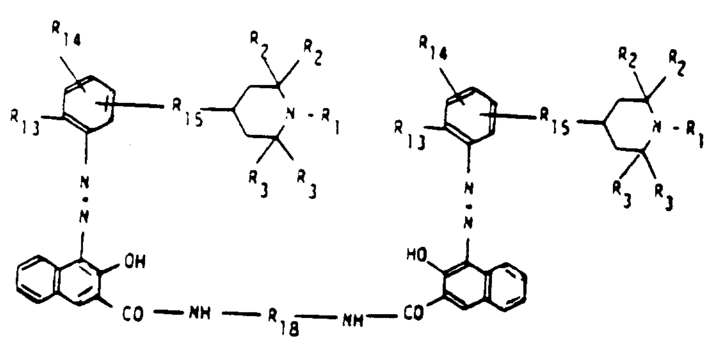
(XIII),

dans laquelle

les substituants $R_1$ signifient l'hydrogène ou un groupe acyle,

les substituants $R_2$ et les substituants $R_3$, indépendamment les uns des autres, signifient un

groupe alkyle en $C_1-C_5$, ou bien les substituants $R_2$ et les substituants $R_3$ deux à deux, signifient ensemble un groupe de formule $-(CH_2)_5-$,

les substituants $R_{13}$, indépendamment l'un de l'autre, signifient l'hydrogène, le chlore, le brome ou un groupe méthyle, alcoxy en $C_1-C_2$ ou (alcoxy en $C_1-C_4$)-carbonyle,

les substituants $R_{14}$ indépendamment l'un de l'autre, signifient l'hydrogène, le chlore, le brome ou un groupe méthyle,

les substituants $R_{15}$ signifient un groupe de formule $-CO-NH-$, $-CO-O-$ ou $-SO_2-NH-$ (le groupe amino ou l'atome d'oxygène étant lié au reste pipéridyle) et

$R_{18}$ signifie un groupe benzénique, naphtalénique ou hétérocyclique-aromatique formant pont,

caractérisé en ce qu'on copule 2 moles d'une amine diazotée de formule p

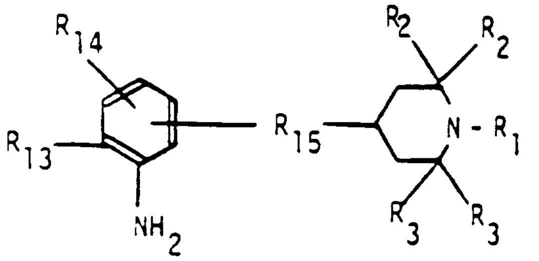

(p)

avec 1 mole d'un composé de formule XV

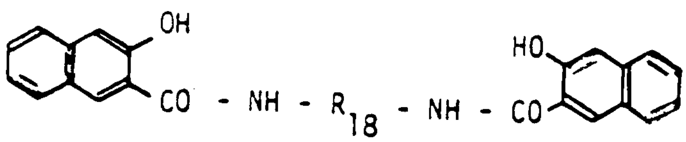

(XV)

6. Procédé de préparation des pigments disazoïques de formule XIII selon la revendication 5, caractérisé en ce que l'on condense une mole d'un acide disazo-dicarboxylique ou disazo-disulfonique de formule XVII

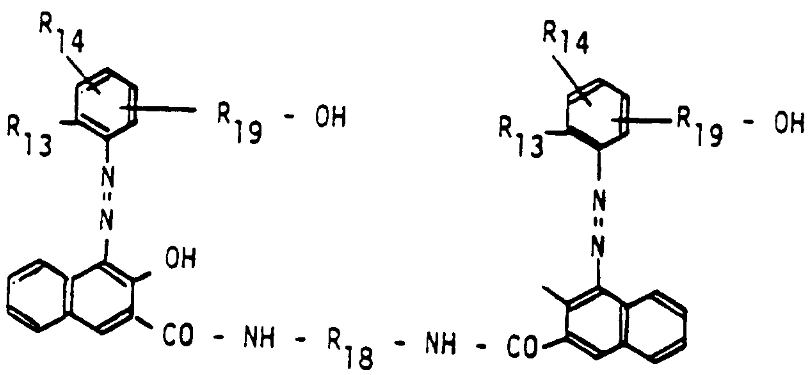

(XVII),

dans laquelle

$R_{19}$ signifie un groupe carbonyle ou sulfonyle,

avec 2 moles d'une 4-amino- ou 4-hydroxy-pipéridine de formule III'a

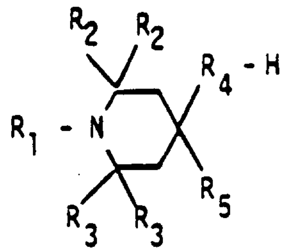

(III'a),

dans laquelle

$R_4$ signifie un pont $-NH-$ ou $-O-$ et

$R_5$ signifie l'hydrogène.

**7.** Procédé de préparation des pigments disazoïques de formule XIII selon la revendication 5, caractérisé en ce que l'on condense 2 moles d'un acide azo-carboxylique de formule XVIII

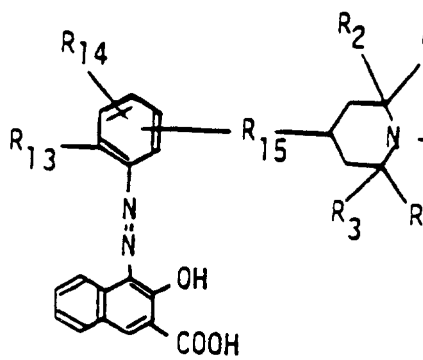

(XVIII)

ou d'un dérivé fonctionnel de cet acide, de préférence le chlorure d'acide de ce composé avec une mole d'une diamine de formule XIX

$H_2N - R_{18} - NH_2$ (XIX)

**8.** Procédé de préparation des pigments monoazoïques de formule XX

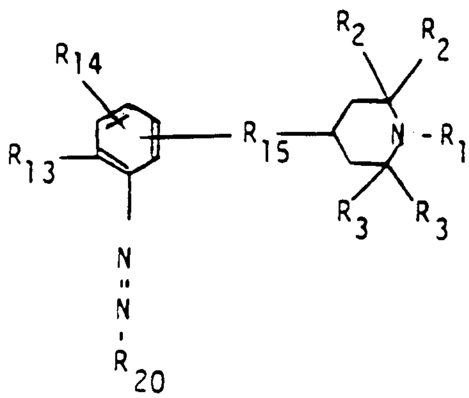

(XX),

dans laquelle

| | |
|---|---|
| $R_1$ | signifie l'hydrogène ou un groupe acyle, |
| les substituants $R_2$ et les substituants $R_3$ | indépendamment les uns des autres, signifient un groupe alkyle en $C_1-C_5$, ou bien les substituants $R_2$ et les substituants $R_3$, deux à deux, signifient ensemble un groupe de formule $-(CH_2)_5-$, |

$R_{13}$ signifie l'hydrogène, le chlore, le brome ou un groupe méthyle, alcoxy en $C_1-C_2$ ou (alcoxy en $C_1-C_4$)-carbonyle,

$R_{14}$ signifie l'hydrogène, le chlore, le brome ou un groupe méthyle,

$R_{15}$ signifie un groupe de formule $-CO-NH-$, $-CO-O-$ ou $-SO_2-NH-$ (le groupe amino ou l'atome d'oxygène étant lié au reste pipéridyle) et

$R_{20}$ signifie un groupe de formule

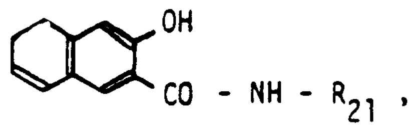

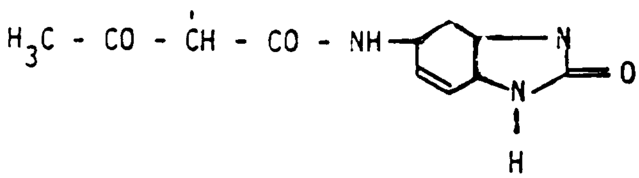

ou

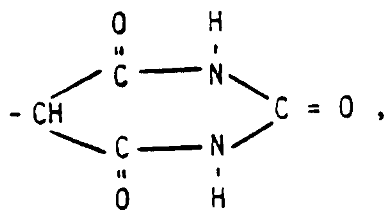

et

$R_{21}$ signifie un groupe benzimidazolonyl-5 ou un groupe phényle portant éventuellement jusqu'à trois substituants choisis parmi le chlore, le brome, et les groupes méthyle, méthoxy et éthoxy, ou portant éventuellement un groupe benzoylamino,

caractérisé en ce qu'on copule une mole d'une amine diazotée de formule p

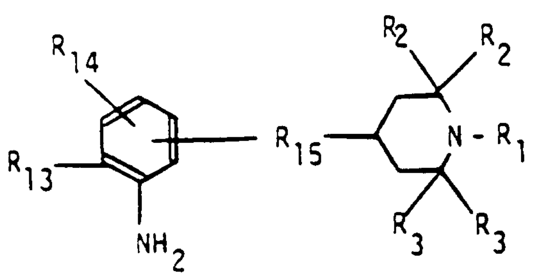

(p)

avec une mole d'un composé de formule XXI

$R_{20}-H$ (XXI)

**9.** Procédé de préparation des pigments monoazoïques de formule XX selon la revendication 8, caractérisé en ce que l'on condense 1 mole d'un composé de formule III'a

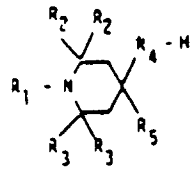

(III'a)

dans laquelle

$R_4$ signifie un pont $-NH-$ ou $-O-$ et

$R_5$ signifie l'hydrogène,

avec 1 mole d'un composé de formule XXII

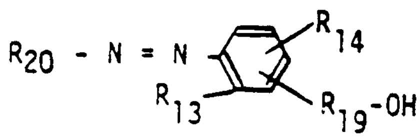

(XXII)

**10.** Procédé de préparation des pigments disazoïques de formule XXIII

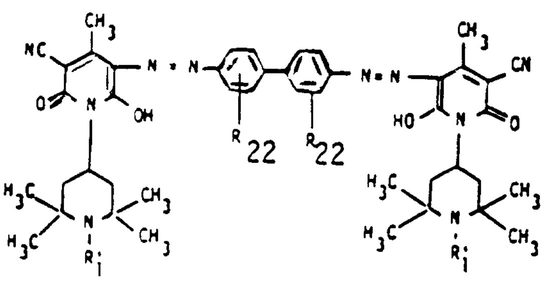

(XXIII)

dans laquelle

les deux substituants $R'_1$ signifient l'hydrogène ou un groupe (alkyle en $C_1-C_2$)-carbonyle, en particulier l'hydrogène, et

les deux substituants $R_{22}$ signifient le chlore, le brome ou un groupe méthyle, méthoxy ou éthoxy, caractérisé en ce qu'on copule 1 mole d'une diamine tétrazotée de formule XXIV

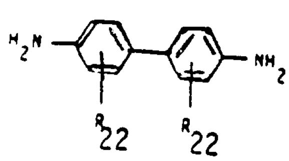

(XXIV)

avec deux moles d'un composé de formule XXV

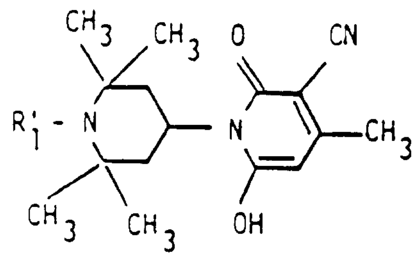

(XXV),

**11.** Procédé de coloration des matières plastiques dans la masse et des vernis, caractérisé en ce qu'on utilise un ou plusieurs pigments qui contiennent dans leur molécule un ou plusieurs groupes pipéridyle portant deux substituants à chacune des positions 2 et 6.